(19) Europäisches Patentamt
European Patent Office
Office européen des brevets

(11) **EP 4 394 445 A1**

(12) **EUROPEAN PATENT APPLICATION**
published in accordance with Art. 153(4) EPC

(43) Date of publication:
**03.07.2024 Bulletin 2024/27**

(21) Application number: **22861208.1**

(22) Date of filing: **17.08.2022**

(51) International Patent Classification (IPC):
***G01S 17/34*** (2020.01)    ***G01S 17/931*** (2020.01)

(52) Cooperative Patent Classification (CPC):
**G01S 17/34; G01S 17/931**

(86) International application number:
**PCT/JP2022/031064**

(87) International publication number:
**WO 2023/026920 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2021 JP 2021137762**

(71) Applicant: **Panasonic Intellectual Property
Management Co., Ltd.
Osaka-shi, Osaka 540-6207 (JP)**

(72) Inventors:
• **KATO Yumiko**
  **Kadoma-shi Osaka 571-0057 (JP)**
• **IGUCHI Noritaka**
  **Kadoma-shi Osaka 571-0057 (JP)**
• **SUGIO Toshiyasu**
  **Kadoma-shi Osaka 571-0057 (JP)**
• **TAKAGI Hiroyuki**
  **Kadoma-shi Osaka 571-0057 (JP)**

(74) Representative: **Grünecker Patent- und
Rechtsanwälte
PartG mbB
Leopoldstraße 4
80802 München (DE)**

(54) **SENSING DEVICE, PROCESSING DEVICE AND DATA PROCESSING METHOD**

(57)     A sensing device includes a light source that emits light with modulated frequencies; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that processes the detection signal. The processing circuit selects a specific data format from a plurality of data formats that can be outputted by the processing circuit, generates measurement data having the selected specific data format based on the detection signal, and outputs output data including the measurement data.

FIG. 7

## Description

Technical Field

The present disclosure relates to a sensing device, a processing device, and a method of processing data.

Background Art

In general, conventionally, there have been proposed a variety of devices that scan (scan) a space with light, detect light reflected from a physical object, and measure a distance to the physical object. Distance information on a target scene may be converted into, for example, three-dimensional point cloud (point cloud) data and utilized. Typically, point cloud data is data in which a distribution of points in a scene where physical objects are present is expressed in three-dimensional coordinates.

Patent Literature 1 and Patent Literature 2 disclose examples of ranging devices based on FMCW (Frequency Modulated Continuous Wave) method. Ranging devices based on the FMCW method send out electromagnetic waves with frequencies that are modulated at a fixed cycle and measure a distance based on a difference between frequencies of transmitting waves and reflected waves. When electromagnetic waves are light such as visible light or infrared light, the ranging devices of the FMCW method are called FMCW LiDAR (Light Detection and Ranging). The FMCW LiDAR divides the light with frequencies that are modulated at a fixed cycle into output light and reference light and detects interference light between the reference light and reflected light that is generated by the output light being reflected by a physical object. It is possible to calculate a distance to the physical object and a velocity of the physical object, based on the frequencies of the interference light. Patent Literature 1 and Patent Literature 2 disclose performing ranging and velocity measurement, using the ranging devices based on the FMCW method.

Citation List

Patent Literature

PTL 1: Japanese Unexamined Patent Application Publication No. 2019-135446
PTL 2: Japanese Unexamined Patent Application Publication No. 2011-027457

Summary of Invention

Technical Problem

The present disclosure provides techniques of facilitating integration or utilization of data acquired by one or more sensing devices.

Solution to Problem

A sensing device according to one aspect of the present disclosure includes a light source that emits light with modulated frequencies; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that processes the detection signal. The processing circuit selects a specific data format from a plurality of data formats that can be outputted by the processing circuit, generates measurement data having the selected specific data format based on the detection signal, and outputs output data including the measurement data.

A method according to another aspect of the present disclosure includes obtaining output data including measurement data, from one or more sensing devices including a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal; discriminating a data format of the measurement data; and generating positional information of the physical object by applying arithmetic processing according to the discriminated data format to the measurement data.

A processing device according to other aspect of the present disclosure includes a processor and a memory storing a computer program that is executed by the processor. The processor performs obtaining output data including measurement data, from one or more sensing devices including a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal; discriminating a data format of the measurement data; and generating positional information of the physical object by applying arithmetic processing according to the discriminated data format to the measurement data.

An inclusive or specific aspect of the present disclosure may be implemented by a system, a device, a method, an integrated circuit, a computer program, or a recording medium such as a computer readable recording disk, and may be implemented by any combination of the system, the device, the method, the integrated circuit, the computer program, and the recording medium. The computer readable recording medium may include a volatile recording medium, or may include a non-volatile recording medium such as a CD-ROM (Compact Disc-Read Only Memory). The device may include one or more devices. If the device includes two or more devices, the two or more devices may be located in one apparatus or may be separately located in two or more separate apparatuses. In this specification and Claims, a "device" may mean one device as well as a system including a plurality of devices.

Advantageous Effects of Invention

According to one aspect of the present disclosure, it is possible to facilitate integration or utilization of data acquired by one or more sensing devices.

Brief Description of Drawings

[Fig. 1] Fig. 1 is a conceptual diagram illustrating an example of a system for monitoring road traffic environment.

[Fig. 2] Fig. 2 is a conceptual diagram illustrating another example of the system for monitoring the road traffic environment.

[Fig. 3] Fig. 3 is a block diagram illustrating a more detailed configuration example of the system illustrated in Fig. 1.

[Fig. 4] Fig. 4 is a block diagram illustrating a more detailed configuration example of the system illustrated in Fig. 2.

[Fig. 5] Fig. 5 is a diagram illustrating a simplified example of flow of operations and data of a server and a sensing device in the example illustrated in Figs. 1 and 3.

[Fig. 6] Fig. 6 is a diagram illustrating a simplified example of flow of operations and data of a server, a mobile object, and a sensing device in the example illustrated in Figs. 2 and 4.

[Fig. 7] Fig. 7 is a block diagram illustrating a configuration of a sensing device according to Embodiment 1.

[Fig. 8] Fig. 8 is a block diagram illustrating a configuration example of a sensor according to Embodiment 1.

[Fig. 9] Fig. 9 is a block diagram illustrating an example of a sensor in which an interference optical system is a fiber optical system.

[Fig. 10] Fig. 10 is a block diagram illustrating an example of a sensor including an optical deflector.

[Fig. 11A] Fig. 11A is a diagram illustrating an example of changes over time in frequencies of reference light, reflected light, and interference light, in a case where a distance between a sensor and an object is fixed.

[Fig. 11B] Fig. 11B is a diagram illustrating an example of changes over time in the frequencies of the reference light, the reflected light, and the interference light, in a case where the sensor or the object is moving.

[Fig. 12] Fig. 12 is a diagram for describing a relative velocity of an object with respect to a sensor.

[Fig. 13] Fig. 13 is a diagram for describing an example of velocity measurement when an automobile crosses in front of a stationary sensor.

[Fig. 14] Fig. 14 is a diagram illustrating an example of a format of data to be transmitted by a sensing device.

[Fig. 15] Fig. 15 is a diagram illustrating another example of a format of the data to be transmitted by the sensing device.

[Fig. 16] Fig. 16 is a diagram illustrating other example of a format of the data to be transmitted by the sensing device.

[Fig. 17] Fig. 17 is a diagram illustrating other example of a format of the data to be transmitted by the sensing device.

[Fig. 18] Fig. 18 is a flowchart illustrating an example of operations of a sensing device.

[Fig. 19] Fig. 19 is a diagram illustrating an example of information recorded in a storage device.

[Fig. 20] Fig. 20 is a diagram illustrating an example of information related to clusters stored by a storage device.

[Fig. 21] Fig. 21 is a flowchart illustrating an example of estimation processing of a velocity vector of a cluster.

[Fig. 22A] Fig. 22A illustrates an example of criteria for selecting three points.

[Fig. 22B] Fig. 22B illustrates another example of the criteria for selecting three points.

[Fig. 23] Fig. 23 is a diagram for describing processing of determining a common velocity vector from velocity component vectors of the three points.

[Fig. 24] Fig. 24 is a flowchart illustrating another example of the estimation processing of the velocity vector of the cluster.

[Fig. 25] Fig. 25 is a diagram for describing processing of dividing a cluster into a plurality of regions.

[Fig. 26] Fig. 26 is a flowchart illustrating an example of operations of a sensing device that transmits information on a velocity component along a straight line connecting a sensor and a data point.

[Fig. 27] Fig. 27 is a diagram illustrating an example of information recorded in a storage device.

[Fig. 28] Fig. 28 is a diagram illustrating a configuration example of a server.

[Fig. 29] Fig. 29 is a diagram illustrating an example of information recorded in a storage device of the server.

[Fig. 30] Fig. 30 is a flowchart illustrating an example of operations of the server.

[Fig. 31] Fig. 31 is a flowchart illustrating another example of the operations of the server.

[Fig. 32] Fig. 32 is a diagram illustrating other example of the information recorded in the storage device of the server.

[Fig. 33] Fig. 33 is a flowchart illustrating other example of the operations of the server.

[Fig. 34] Fig. 34 is a flowchart illustrating other example of the operations of the server.

[Fig. 35] Fig. 35 is a flowchart illustrating an example of an operation for a server to output information on road conditions.

[Fig. 36] Fig. 36 is a flowchart illustrating an example of an operation for the server to generate and transmit road information.

[Fig. 37] Fig. 37 is a flowchart illustrating another example of the operation for the server to generate and transmit the road information.

[Fig. 38] Fig. 38 is a diagram illustrating an example of information recorded in a storage device of a sensing device in Embodiment 2.

[Fig. 39] Fig. 39 is a diagram illustrating an example of a data format outputted from the sensing device in Embodiment 2.

[Fig. 40] Fig. 40 is a diagram illustrating another example of the data format outputted from the sensing device in Embodiment 2.

[Fig. 41] Fig. 41 is a diagram illustrating other example of the data format outputted from the sensing device in Embodiment 2.

[Fig. 42] Fig. 42 is a diagram illustrating other example of the data format outputted from the sensing device in Embodiment 2.

[Fig. 43] Fig. 43 is a flowchart illustrating an example of the operations of the server in an embodiment.

[Fig. 44] Fig. 44 is a block diagram illustrating a configuration example of a system including a server and a mobile object including a sensing device in Embodiment 3.

[Fig. 45] Fig. 45 is a diagram illustrating communication between the server and the mobile object in Embodiment 3, and an example of processing flow therebetween in chronological order.

[Fig. 46] Fig. 46 is a flowchart illustrating an example of operations of the server in Embodiment 3.

[Fig. 47] Fig. 47 is a flowchart illustrating an example of processing performed by the server when input of a signal indicating that a person has intruded a range of movement of the mobile object, as an example of special processing.

[Fig. 48A] Fig. 48A is a diagram illustrating an example of a data format of data for normal processing.

[Fig. 48B] Fig. 48B is a diagram illustrating an example of a data format of data for detailed analysis.

[Fig. 49] Fig. 49 is a flowchart illustrating an example of processing to detect a person based on point cloud data.

[Fig. 50] Fig. 50 is a flowchart illustrating an example of an operation to generate and transmit data by the sensing device in the mobile object.

[Fig. 51] Fig. 51 is a block diagram illustrating a schematic configuration of a mobile object in Embodiment 4.

[Fig. 52] Fig. 52 is a flowchart illustrating an example of operations of the mobile object.

[Fig. 53] Fig. 53 is a flowchart illustrating a specific example of operations in special processing.

[Fig. 54] Fig. 54 is a flowchart illustrating another example of the operations in the special processing.

[Fig. 55] Fig. 55 is a diagram illustrating an example of a data format of point cloud data to which hazard classification information is added for each data point.

[Fig. 56] Fig. 56 is a diagram illustrating another example of a data format of the point cloud data to which the hazard classification information is added for each data point.

[Fig. 57] Fig. 57 is a diagram illustrating other example of a data format of the point cloud data to which the hazard classification information is added for each data point.

[Fig. 58] Fig. 58 is a diagram illustrating other example of a data format of the point cloud data to which the hazard classification information is added for each data point.

[Fig. 59] Fig. 59 is a conceptual diagram schematically illustrating an example of a system for performing calibration of a sensing device in Embodiment 5.

[Fig. 60] Fig. 60 is a block diagram illustrating a more detailed configuration example of a system illustrated in Fig. 59.

[Fig. 61] Fig. 61 is a flowchart illustrating an example of operations of the system in Embodiment 5.

[Fig. 62] Fig. 62 is a diagram illustrating an example of a data format outputted from the sensing device in Embodiment 5.

[Fig. 63] Fig. 63 is a flowchart illustrating an example of operations of a system in Modification Example 1 of Embodiment 5.

[Fig. 64] Fig. 64 is a flowchart illustrating an example of operations of a system in Modification Example 2 of Embodiment 5.

[Fig. 65] Fig. 65 is a diagram illustrating an example of a data format outputted from a sensing device in Modification Example 2 of Embodiment 5.

Description of Embodiments

In the present disclosure, all or some of a circuit, a unit, a device, a member, or a section, or all or some of functional blocks in a block diagram may be executed by one or more electronic circuits including, for example, a semiconductor device, a semiconductor integrated circuit (IC), or an LSI (large scale integration). An LSI or an IC may be integrated in a chip or may include a combination of a plurality of chips. For example, a functional block other than a storage element may be integrated in a chip. Here, it is called an LSI or an IC, but a name varies depending on a degree of integration, and may be called a system LSI, a VLSI (very large scale integration), or a ULSI (ultra large scale integration). An FPGA (Field Programmable Gate Array) that is programmed after an LSI is manufactured or an RLD (reconfigurable logic device) capable of reconfiguration of bonding relations within the LSI or setup of circuit sections within the LSI can also be used for the same purpose.

Furthermore, functions or operations of all or some of the circuit, the unit, the device, the member, or the section can be performed through software processing. In this case, software is recorded in a non-transitory recording medium such as one or more ROMs, optical disks, hard disk drives. When the software is executed by a processing device (processor), a function specified by the software is performed by the processing device or peripheral devices. A system or a device may include one or more non-transitory recording media having software recorded therein, a processing device, and necessary hardware devices such as an interface.

<Example of System Monitoring Road Traffic Environment>

Before describing embodiments of the present disclosure, a description is given of an example of a system to which a sensing device and a processing device according to an embodiment of the present disclosure are applicable.

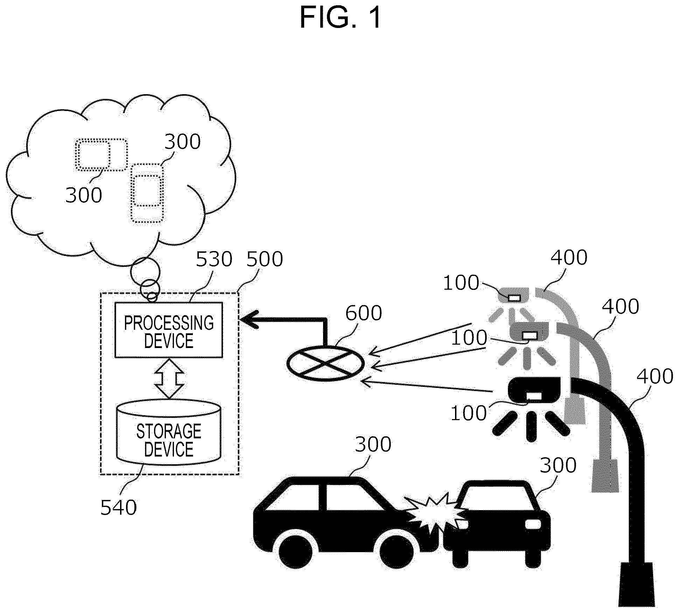

Fig. 1 is a conceptual diagram schematically illustrating an example of a system for monitoring road traffic environment. The system includes a server 500 and one or more fixed bodies 400. Fig. 1 also illustrates two mobile objects 300 that are external elements of the system. Fig. 1 exemplifies three fixed bodies 400 by way of example, but the number of fixed bodies 400 is arbitrary. Each of the fixed bodies 400 may be a public property such as a traffic light, lighting equipment, an electric pole, or a guardrail, or other infrastructure. Each fixed body 400 includes a sensing device 100 such as a ranging device. The sensing device 100 in each fixed body 400 detects the mobile objects 300 that are present in a surrounding area. Each mobile object 300 is, for example, a vehicle such as an automobile or a two-wheel vehicle. The sensing device 100 is connected to the server 500 via a network 600 and transmits acquired data to the server 500.

The sensing device 100 mounted on the fixed body 400 includes one or more sensors. Each sensor may be, for example, a sensor that acquires data for ranging, such as an FMCW LiDAR including a light source and a light sensor. The sensing device 100 may include a plurality of sensors that are located at different positions and in different orientations. The sensing device 100 can sequentially generate and output measurement data including positional information and velocity information of a physical object present in the surrounding area. The measurement data may include, for example, data indicating a position of each point in a three-dimensional point cloud and data indicating a velocity at each point. In the following description, unless otherwise stated, the three-dimensional point cloud is simply referred to as a "point cloud" or a "point cloud". Data including positional information of each point in the three-dimensional point cloud is referred to as "point cloud data".

The sensing device 100 is not limited to the ranging device including the light source and the light sensor but may be a ranging device that performs ranging and velocity measurement with another method. For example, a ranging device that performs ranging using radio waves such as millimetric-waves may also be used. Alternatively, instead of performing ranging, a device that outputs measurement data including spectrum information of interference light between reflected light that is reflected by a physical object and light that is emitted from a light source may be used as the sensing device 100. In that case, the server 500 that has acquired measurement data from the sensing device 100 can calculate a distance from the sensing device 100 to the physical object and a velocity of the physical object based on the spectrum information of the interference light.

The server 500 includes a processing device 530 and a storage device 540. The server 500 acquires, for example, data indicating a position and attitude of the sensing device 100 and the measurement data, from the sensing device 100 in each of the fixed bodies 400. The processing device 530 can integrate the measurement data acquired from each sensing device 100 to sequentially generate data indicating the road environment and record the data in the storage device 540. The processing device 530 can generate point cloud data that is represented by a predetermined three-dimensional coordinate system, for example and to which the velocity information for each point has been added. When an accident occurs, for example, such data may be utilized for the purpose of examining a cause of the accident. A coordinate system of the point cloud data generated by the server 500 may be a coordinate system specific to the server 500 or may match a coordinate system of three-dimensional map data utilized by the server 500. Alternatively, an administrator of the server 500, or the like, may operate the server 500 to specify the coordinate system of the point cloud data.

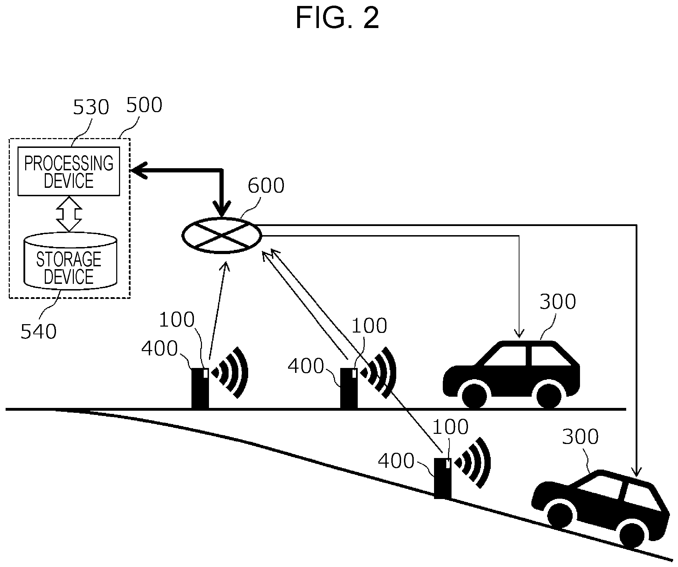

Fig. 2 is a conceptual diagram schematically illustrating another example of the system that monitors the road traffic environment. In the example illustrated in Fig. 2, the plurality of fixed bodies 400 each including the sensing device 100 is placed near a junction point of expressways or the like. In this example, the server 500 distributes information to one or more of the mobile objects 300 via the network 600. The processing device 530 of the server 500 integrates the measurement data acquired from each sensing device 100 to sequentially generate data indicating the road environment, and records the data in the storage device 540. The processing device 530 can further distribute, to each of the mobile objects 300, information such as a position of another mobile object in the surroundings or the like, via the network 600. The distributed information may be used for the purpose of avoiding any danger at a point such as a junction point of expressways where there is a blind spot from a driver or a sensor such as a camera in a drive support system due to a road structure.

Note that although the sensing device 100 is provided in the fixed body 400 in each example described above, the sensing device 100 may be provided in the mobile object 300. The server 500 may similarly acquire measurement data from the sensing device provided in the mobile object 300 as well as from the sensing device 100 provided in the fixed body 400. Data to be transmitted from the sensing device provided in the mobile object 300 to the server 500 may include, for example, data indicating the velocity of the mobile object 300 itself, in addition to data indicating the position and the attitude of the sensing device and measurement data for calculating positions and velocities of surrounding physical objects. In that case, the processing device 530 of the server 500 can generate data indicating more details of the road environment based on the data acquired from the sensing device in each of the fixed body 400 and the mobile object 300.

The server 500 may store, in the storage device 540, the information indicating the position and the attitude of the sensing device 100 in each of the fixed bodies 400 in advance. In that case, the data acquired from each sensing device 100 by the server 500 does not have to include the information indicating the position and the attitude of the sensing device 100. Alternatively, the server 500 may estimate the position, the attitude, and velocity of each of the sensing devices 100 based on the measurement data acquired from the sensing device 100 in each of the fixed bodies 400 and the mobile objects 300.

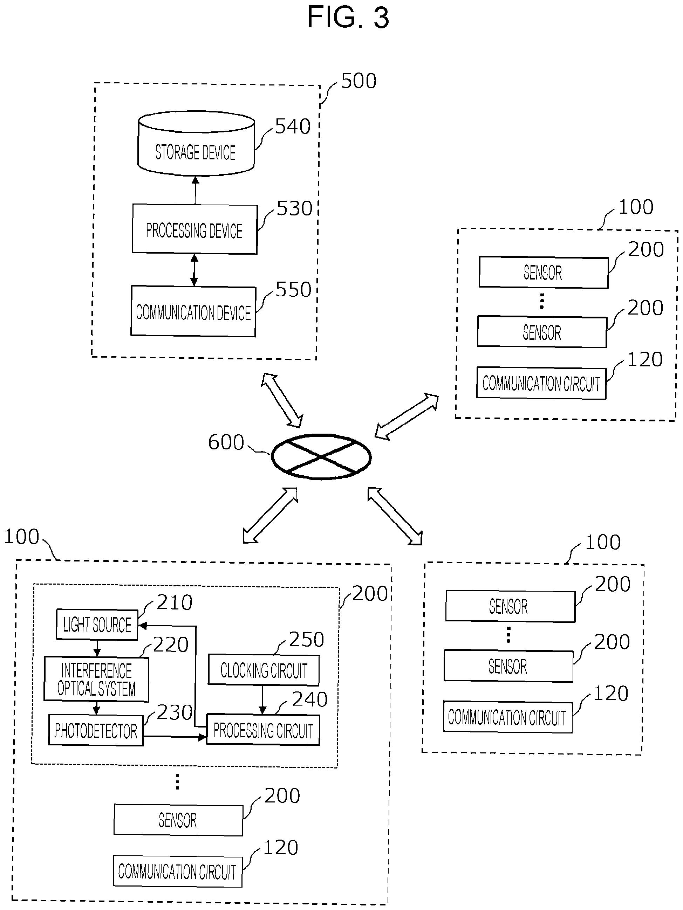

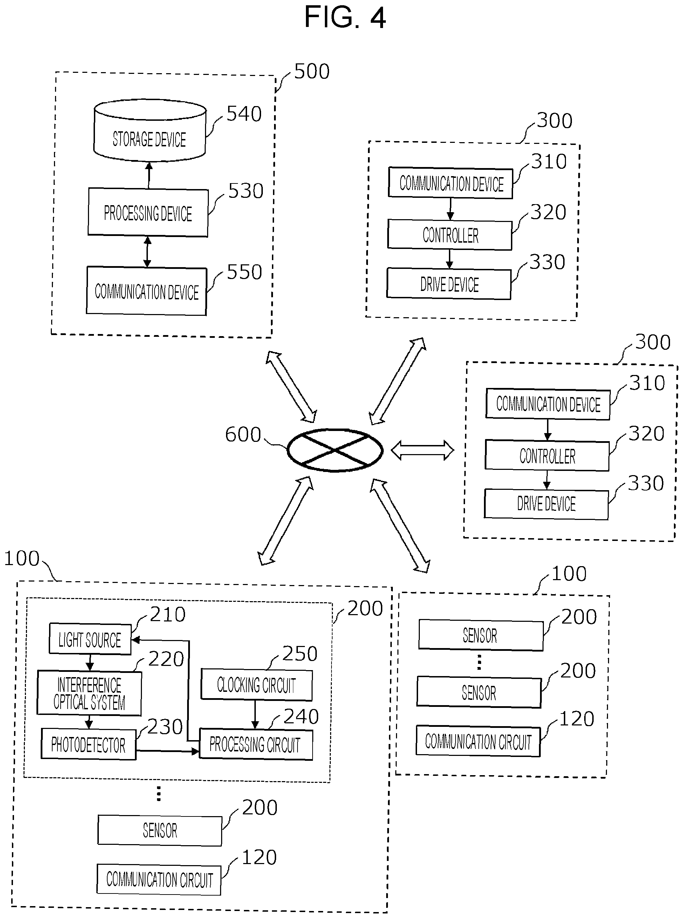

Next, an example a configuration of the system illustrated in Figs. 1 and 2 will be described in more detail with reference to Figs. 3 and 4.

Fig. 3 is a block diagram illustrating a more detailed configuration example of the system illustrated in Fig. 1. By way of example, Fig. 3 exemplifies the three sensing devices 100 respectively provided in three fixed bodies 400. The number of the sensing devices 100 is arbitrary and may be singular.

Each of the sensing devices 100 illustrated in Fig. 3 includes the plurality of sensors 200 and a communication circuit 120. The positions and the attitudes of the plurality of sensors 200 differ from each other. Each of the sensors 200 performs ranging and velocity measurement and generates and outputs sensor data including positional data of each point in the three-dimensional point cloud and velocity data at each point. The sensor data outputted from each of the sensors 200 is transmitted to the server 500 by the communication circuit 120. Note that the number of the sensors 200 provided in the sensing device 100 is arbitrary and may be singular. In addition, instead of providing the communication circuit 120 for each of the sensing devices 100, each of the sensors 200 may include a communication circuit.

Fig. 3 exemplifies more details of a configuration of only one of the sensors 200. The sensor 200 in this example includes a light source 210, an interference optical system 220, a photodetector 230, a processing circuit 240, and a clocking circuit 250. The light source 210 may include a laser light emitting element that emits laser light. The light source 210 is controlled by the processing circuit 240 and may be configured to emit light whose frequency is modulated periodically in time. The light source 210 may also include a beam scanning feature that scans a scene by changing a direction of emitted light. The beam scanning feature makes it possible to irradiate a plurality of physical objects with beams of the emitted light over a wide range of the surrounding environment. The interference optical system 220 generates interference light between reflected light, emitted from the light source 210 and reflected at a reflecting point of the physical object, and emitted light from the light source 210, and causes the interference light to enter the photodetector 230. The photodetector 230 receives the interference light and generates and outputs an electric signal according to intensity of that interference light. This electric signal is referred to as a "detection signal" in the following description. The processing circuit 240 can calculate a distance to the reflecting point and a velocity at the reflecting point by analyzing the frequency of the detection signal. The processing circuit 240 can generate point cloud data by calculating the distance to the reflecting point while scanning the scene with the laser light. The clocking circuit 250 is a circuit that includes a clock function, such as real-time clock (RTC), for example. The processing circuit 240 generates and outputs data including information on the distance to each reflecting point and on velocity as well as time information.

The sensing device 100 generates measurement data by subjecting data outputted from each of the sensors 200 to necessary processing such as coordinate transformation, and transmits the measurement data from the communication circuit 120 to the server 500. The sensing device 100 transmits a batch of data to the server 500, for example, at fixed time intervals.

In the present disclosure, a batch of data transmitted from the sensing device 100 may be referred to as a "frame". This may or may not match a "frame" that is a unit of image data outputted from an image sensor.

The sensing device 100 may repeatedly output, for example, point cloud data including information on the velocity at each point and measurement time, at a fixed frame rate, for example. It is also possible to associate one frame of point cloud data in association with one time and output the point cloud data.

In this manner, each of the sensors 200 utilizes the FMCW technology to acquire data necessary for ranging and velocity measurement of the target scene. Note that it is not necessary that every sensor 200 be the FMCW LiDARs. Some of the sensors 200 may be radars using radio waves such as the millimetric-waves.

Note that the processing circuit 240 may output, as the sensor data, spectrum information of the detection signal, which is information in the previous stage, without calculating distance and velocity of each reflecting point. The spectrum information may include, for example, information indicating power spectrum of the detection signal or a peak frequency in the power spectrum of the detection signal. If the processing circuit 240 outputs the spectrum information of the detection signal, calculation of the distance and the velocity is performed by, for example, the processing device 530 of the server 500, and not by the sensor 200.

The server 500 includes a communication device 550, in addition to the processing device 530 and the storage device 540. The processing device 530 sequentially acquires measurement data from each of the sensing devices 100 via the communication device 550 and records the measurement data in the storage device 540. The processing device 530 performs necessary processing such as time checking and coordinate transformation of the acquired measurement data. This allows the processing device 530 to generate point cloud data integrated at a specific time and at a specific location and velocity data of each point.

Fig. 4 is a block diagram illustrating a more detailed configuration example of the system illustrated in Fig. 2. By way of example, Fig. 4 exemplifies the two sensing devices 100 and the two mobile objects 300 provided in each of the two fixed bodies 400. The number of each of the sensing devices 100 and the mobile objects 300 is arbitrary and may be singular. A configuration of each of the sensing devices 100 is similar to the example as illustrated in Fig. 3.

Each of the mobile objects 300 in the example of Fig. 4 includes a communication device 310, a controller 320, and a drive device 330. The drive device 330 includes various types of devices necessary for running and steering of the mobile object 300. The controller 320 controls the running and the steering of the mobile object 300 by controlling the drive device 330. The communication device 310 receives traffic information of the surroundings via the network 600 from the server 500. The processing device 530 of the server 500 sequentially acquires measurement data from each of the sensing devices 100 via the communication device 550 and causes the storage device 540 to store the measurement data.

The processing device 530 performs necessary processing such as the time checking and the coordinate transformation of the acquired measurement data and generates the point cloud data integrated at the specific time and at the specific location and the velocity data of each point. The processing device 530 transmits the generated data to each of the mobile objects 300 via the communication device 550. The controller 320 of each of the mobile objects 300 controls the drive device 330 based on the data transmitted from the server 500, thereby controlling the velocity of the mobile object 300 and the steering operation. This makes it possible to avoid dangers such as collisions with other mobile objects.

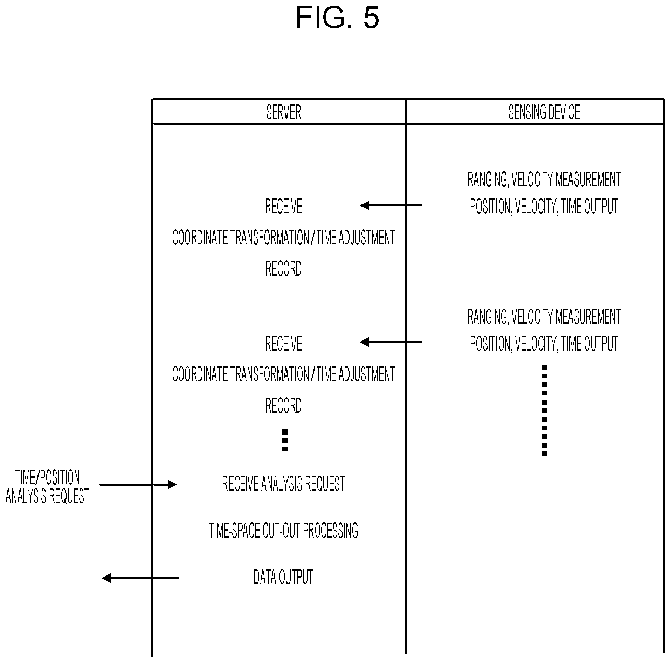

Fig. 5 is a diagram illustrating a simplified example of flow of operations and data of the server 500 and the sensing device 100 in the example illustrated in Figs. 1 and 3. For simplicity, in Fig. 5, a plurality of the sensing devices 100 is represented collectively as one sensing device.

Each of the sensing devices 100 repeatedly performs sensing and sequentially generates measurement data including information on the position to each reflecting point on a physical object surface in the scene, the velocity at each reflecting point, and time. The measurement data is transmitted to the server 500. The processing device 530 of the server 500 performs the necessary processing such as the time checking and the coordinate transformation of the acquired measurement data and records the measurement data in the storage device 540. Such operations may be repeated at a fixed cycle, for example.

The server 500 may receive, from outside, a command requesting analysis of road environment at a specific date and time and at a specific location. In that case, the processing device 530 of the server 500 acquires data on the relevant date and time and the location from the storage device 540 and generates and outputs data corresponding to the request. Such operations allow for acquisition of data, which helps in elucidation of the cause of accident, for example.

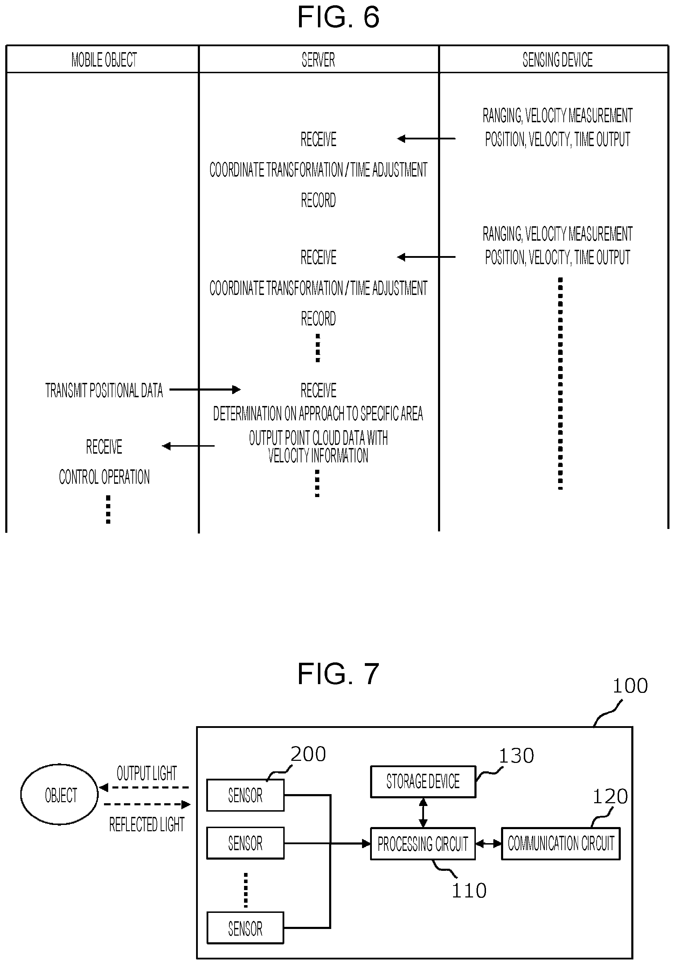

Fig. 6 is a diagram illustrating a simplified example of flow of operations and data of the server 500, the mobile object 300, and the sensing device 100 in the example illustrated in Figs. 2 and 4. For simplicity, in Fig. 6, the plurality of mobile objects 300 is represented collectively as one mobile object, and the plurality of sensing devices 100 is collectively represented as one sensing device.

Similarly to the example of Fig. 5, each of the sensing devices 100 repeatedly performs sensing and sequentially generates measurement data including information on the position to each reflecting point on the physical object surface in the scene, the velocity at each reflecting point, and time. The measurement data is transmitted to the server 500. The processing device 530 of the server 500 performs the necessary processing such as the time checking and the coordinate transformation of the acquired measurement data and records the measurement data in the storage device 540. Such operations may be repeated at a fixed cycle, for example.

Each of the mobile objects 300 transmits its own positional data to the server 500, for example, at a fixed cycle or at necessary timing. When receiving the positional data of the mobile object 300, the server 500 determines whether or not the mobile object 300 is approaching a specific area such as a junction point of expressways. When recognizing that the mobile object 300 is approaching the specific area, the server 500 transmits point cloud data with velocity information in the specific area to the mobile object 300. The controller 320 of the mobile object 300 controls the drive device 330 based on the transmitted point cloud data. As a result, the mobile object 300 performs running control such as deceleration according to the road conditions, avoidance of obstacles, or the like.

According to the system described above, the point cloud data, to which the velocity information is attached, can be generated for each reflecting point, based on the data acquired by each of the sensing devices 100. This makes it possible to generate traffic information including information on a traveling velocity in addition to positions of physical objects such as other mobile objects that are present in an environment through which the mobile object 300 travels. Such traffic information makes it possible to provide detailed confirmation of accident conditions, accurate notification on approaching other mobile objects in dangerous areas and surrounding areas thereof, such as a junction point of expressways that are not easy to visibly recognize.

In addition, although the server 500 and each of the sensing devices 100 communicate via the network 600 in each system described above, the present embodiment is not limited to such a configuration. For example, the server 500 and each of the sensing devices 100 may communicate via a dedicated communication line. The communication line may be wired or wireless. Alternatively, a processing device having functions similar to those of the above-mentioned server 500 and the sensing device 100 may be configured to be directly connected and communicate within one system.

In such a system described above, each of the sensing devices 100 does not necessarily have an identical configuration, and the sensing devices 100 having different specifications and performance may coexist. For example, the plurality of sensing devices 100 manufactured by different manufacturers or the plurality of sensing devices 100 that are manufactured by a same manufacturer but are of different models may coexist in one system. Such a plurality of sensing devices 100 may have mutually different data output formats or may be able to select more than one output format depending on the model. For example, there may be such situations that one sensing device 100 outputs measurement data including information on the position and the velocity of each reflecting point, while other sensing device 100 outputs measurement data including information on the position of each reflecting point and a spectrum of a detection signal. In that case, it is difficult for the processing device such as the server 500 to integrate data outputted from the plurality of sensing devices 100 and generate point cloud data of a specific time/area.

In order to solve the problem described above, each of the sensing devices may include, in measurement data, identification information indicating a format of the measurement data that it outputs and transmits it to the processing device. The processing device may change arithmetic processing based on the measurement data, on the basis of the identification information indication of the format of the measurement data. This can facilitate integration of sensor data having different data formats.

In a certain embodiment, the processing device may transmit a request signal specifying a format of measurement data to each of the sensing devices. The sensing devices that have received the request signal may generate measurement data in the format specified by the request signal and transmit the measurement data to the processing device. For example, the sensing devices can output the measurement data in a plurality of different formats and may be able to select the data format according to the request signal. Such a configuration allows the processing device to acquire necessary data from each of the sensing devices according to the circumstances. This facilitates the integration of the data acquired by the plurality of sensing devices, and makes it possible to realize detailed analysis of an environment surrounding the sensing devices, provision of appropriate information to mobile objects present in the environment, or the like.

Hereinafter, an overview of the embodiments of the present disclosure will be described.

A sensing device according to one embodiment of the present disclosure includes a light source that emits frequency-modulated light; an interference optical system that separates the light emitted from the light source into reference light and output light and generates interference light between the reference light and reflected light generated by the output light being reflected at a reflecting point of a physical object; a photodetector that receives the interference light and outputs a detection signal according to intensity of the interference light; and a processing circuit that processes the detection signal. The processing circuit selects a specific data format from a plurality of data formats that can be outputted by the processing circuit, generates measurement data having the selected specific data format based on the detection signal, and outputs output data including the measurement data.

According to the configuration described above, a specific data format can be selected from a plurality of data formats, and output data including measurement data having the specific data format can be outputted. Therefore, a data format to be outputted can be changed flexibly in accordance with, for example, the data format requested by another device or an output data format of other sensing data. This can facilitate the integration or utilization of data outputted from the sensing device and other sensing devices.

The processing circuit may be a collection of a plurality of processing circuits. Functions of the above processing circuit can be implemented in collaboration with, for example, the processing circuit 240 in each sensor 200 illustrated in Figs. 3 and 4 and a processing circuit (or a processing device) that generates output data to be transmitted to the server 500 based on the measurement data outputted from each of the sensors 200.

In the present disclosure, "measurement data" may be data that is generated based on a detection signal and that includes information on the positions or the velocity of one or more reflecting points or physical objects. "Output data" may be, for example, data to be transmitted to another device such as a storage device or a server. In addition to the measurement data, the output data may include various types of data used in processing performed by other devices. For example, the output data may include an identification number of the sensing device, information indicating the position and the orientation of the sensing device, and identification information indicating the data format of the measurement data, or the like.

The processing circuit may generate positional information of the reflecting point based on the detection signal, and generate the measurement data including the positional information. The processing circuit may generate, for example, point cloud data including the positional information of a plurality of the reflecting points as the measurement data.

The processing circuit may generate velocity information of the reflecting point based on the detection signal, and generate the measurement data including the velocity information. The velocity information may be information indicating, for example, a relative velocity vector of the reflecting point with respect to the sensing device or a component of the relative velocity vector in a direction along a straight line connecting the sensing device and the reflecting point.

The processing circuit may generate spectrum information of the interference light based on the detection signal and generate the measurement data including the spectrum information. This makes it possible to output output data including the spectrum information of interference light. The spectrum information may include, for example, information on a power spectrum of the detection signal or a peak frequency of the power spectrum. Another device that has acquired the information can generate velocity information of the reflecting point based on the information.

The processing circuit may generate the positional information and the velocity information of the reflecting point based on the detection signal; generate information indicating a degree of danger of the physical object based on the velocity information; and generate the measurement data including the positional information and the information indicating the degree of danger. This allows output data including the positional information and the information indicating the degree of danger of the reflecting point to be outputted.

The processing circuit may generate positional information and velocity information of each of the plurality of reflecting points irradiated with the output light; divide a plurality of reflecting points to one or more clusters based on the positional information and determine one velocity vector for each cluster based on the velocity information of three or more reflecting points included in each cluster; and generate the measurement data including information indicating the velocity vector of each cluster. This allows output data including the information on the velocity vector of each cluster to be outputted.

The processing circuit may include the identification information indicating the specific data format in the output data and output the output data. This makes it possible for another device that has acquired the output data to recognize the data format of the output data based on the identification information and perform arithmetic processing according to the data format.

The processing circuit may select the specific data format from the plurality of data formats according to a request signal inputted from another device. This makes it possible to generate measurement data having the specific data format requested by the other device.

The sensing device may further include a communication circuit that transmits the output data to the other device. This makes it possible to transmit the output data to the other device such as a processing device (server, for example) connected to the sensing device via, for example, a network or a line within the system.

A method according to another embodiment of the present disclosure is a method of processing output data outputted from one or more sensing devices. The one or more sensing devices each include a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal. The method includes obtaining output data including the measurement data, discriminating a data format of the measurement data; and generating positional information of the physical object by applying arithmetic processing according to the discriminated data format to the measurement data.

According to the method described above, the positional information of the physical object can be generated through the arithmetic processing according to the data format of the measurement data in the output data acquired from the sensing device. Consequently, even if measurement data in a different data format is acquired from a plurality of sensing devices, for example, integration of the measurement data can be facilitated by the arithmetic processing according to the data format.

The method may further include generating velocity information of the physical object by applying the arithmetic processing according to the discriminated data format to the measurement data.

When the data format of the measurement data is a data format that includes velocity component information indicating the component of the relative velocity vector in the direction along the straight line connecting the sensing device and the reflecting point, the method may further include generating velocity vector information of the physical object based on the velocity component information.

The measurement data may include positional information and velocity information of each of the plurality of reflecting points irradiated with the output light. The method may include dividing the plurality of reflecting points to one or more clusters based on the positional information, determining one velocity vector for each cluster based on the velocity information of three or more reflecting points included in each cluster, and outputting information on the velocity vector of each cluster as velocity vector information of the physical object.

The one or more sensing devices may be a plurality of sensing devices. The output data acquired from each of the plurality of sensing devices may include information indicating positions and orientations of the sensing devices. The positional information of the physical object may be generated based on the information indicating the positions and the orientations of the plurality of sensing devices.

When the data format of the measurement data is a data format including spectrum information of the detection signal, the method may include generating positional information of the physical object and velocity vector information of the physical object based on the spectrum information.

The spectrum information may include, for example, information on a power spectrum of the detection signal or the peak frequency of the power spectrum.

When the data format of the measurement data is a data format that includes power spectrum information indicating the power spectrum of the detection signal or a data format that includes peak frequency information indicating the peak frequency of the power spectrum of the detection signal, the method may include generating positional information of the physical object and velocity vector information of the physical object, based on the power spectrum information or the peak frequency information.

The method may further include transmitting a request signal specifying the data format of the measurement data to the one or more sensing devices.

The one or more sensing devices may be mounted on a mobile object. The request signal may be transmitted to the one or more sensing devices when abnormality is detected in the mobile object itself or in an environment in which the mobile object runs.

The output data may include identification information indicating the data format of the measurement data. The discrimination of the data format may be performed based on the identification information.

The method may further include outputting a signal for controlling operations of a mobile object based on the positional information of the physical object.

A processing device according to yet another embodiment of the present disclosure includes a processor and a memory in which a computer program executed by the processor is stored. The processor performs obtaining output data including measurement data, from one or more sensing devices including a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal; discriminating a data format of the measurement data; and generating positional information of the physical object by applying arithmetic processing according to the discriminated data format to the measurement data.

Hereinafter, the exemplary embodiments of the present disclosure will be described specifically. Note that all of the embodiments to be described below represents an inclusive or specific example. Numeric values, shapes, components, arrangement positions and connection forms of components, steps, and order of steps, or the like, illustrated in the embodiments below are merely examples, and are not intended to be limiting to the present disclosure. In addition, among components in the following embodiments, a component not described in independent claims that represent the primary component, will be described as an arbitrary component. In addition, each figure is a schematic diagram and not necessarily illustrated strictly. Furthermore, in each diagram, same or similar components are denoted by same reference numerals. An overlapping description may be omitted or simplified.

(Embodiment 1)

First, a first embodiment of the present disclosure will be described.

The sensing device according to the present embodiment is a ranging device that includes one or more sensors and a communication circuit. Each sensor has FMCW LiDAR functionality. Each sensor generates and outputs sensor data including information related to positions and velocities of the plurality of reflecting points in a scene to be observed. The communication circuit transmits the sensor data outputted from each sensor to the server 500 illustrated in Fig. 3 or 4, according to a predetermined output format.

[1-1. Configuration of Sensing Device]

Fig. 7 is a block diagram illustrating a configuration of the sensing device 100 according to Embodiment 1. The sensing device 100 includes the one or more sensors 200, the processing circuit 110, the communication circuit 120 and a storage device 130. Fig. 7 illustrates the plurality of sensors 200, but the number of the sensors 200 is arbitrary and may be singular.

The processing circuit 110 is, for example, a circuit including a processor such as a CPU (Central Processing Unit) or a GPU (Graphics Processing Unit). The processing circuit 110 operates by executing a computer program stored in the storage device 130, for example. The processing circuit 110 acquires sensor data outputted from the one or more sensors 200 included in the sensing device 100, and converts positional information and velocity information of a plurality of points into output data in a predefined data format for communication, the positional information and the velocity information being measured during a predefined time section.

The communication circuit 120 is a communication module that performs data transmission and reception. The communication circuit 120 transmits output data generated by the processing circuit 110 to the server 500. The communication circuit 120 may be configured to receive a data request signal specifying a specific data format from an external device such as the server 500. In that case, the processing circuit 110 generates output data in the specified data format.

The storage device 130 includes any one or more storage media, such as a semiconductor memory, a magnetic storage medium, an optical storage medium. The storage device 130 stores data generated by the processing circuit 110 and a computer program executed by the processing circuit 240. The storage device 130 stores information related to a position and attitude of the sensing device 100 such as fixed information indicating a position and attitude of each of the sensors 200 included in the sensing device 100. The storage device 130 further stores the sensor data acquired by the processing circuit 110 from each of the sensors 200 according to a processing process of the processing circuit 110.

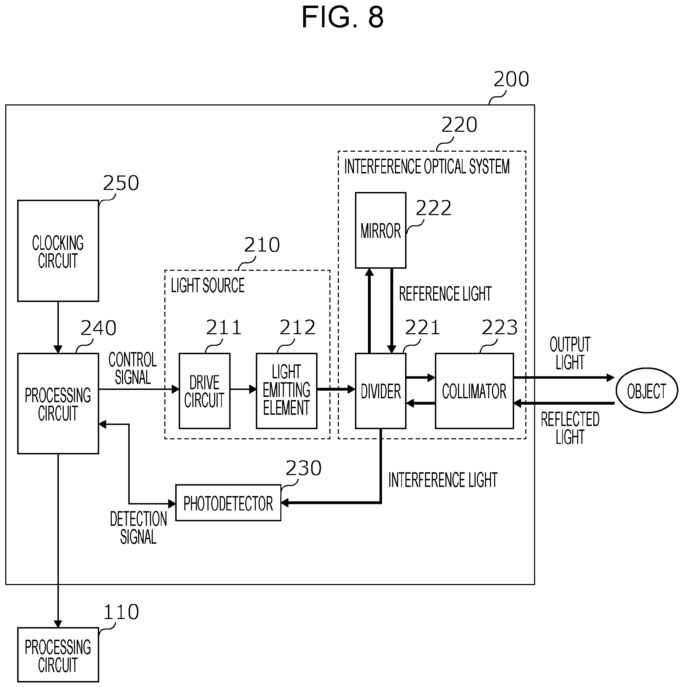

Fig. 8 is a block diagram illustrating a configuration example of the sensor 200 according to the present embodiment. In Fig. 8, thick arrows represent flow of light and thin arrows represent flow of a signal or data. Fig. 8 also illustrates an object whose distance and velocity are a measurement object, and the processing circuit 110 connected to the sensor 200. The object may be, for example, a mobile object such as an automobile or two-wheel vehicle.

The sensor 200 illustrated in Fig. 8 includes the light source 210, the interference optical system 220, the photodetector 230, the processing circuit 240, and the clocking circuit 250. The light source 210 can change a frequency or a wavelength of light to be emitted, in response to a control signal outputted from the processing circuit 240. The interference optical system 220 separates the emitted light from the light source 210 into reference light and output light and generates interference light by causing reflected light to interfere with the reference light, the reflected light being generated by the output light being reflected by the object. The interference light enters the photodetector 230.

The photodetector 230 receives the interference light and generates and outputs an electric signal according to intensity of the interference light. The electric signal is referred to as a "detection signal". The photodetector 230 includes one or more light receiving elements. A light receiving element includes, for example, a photoelectric converter such as a photodiode. The photodetector 230 may be a sensor such as an image sensor in which a plurality of light receiving elements is two-dimensionally arranged.

The processing circuit 240 is an electronic circuit that controls the light source 210 and performs processing based on the detection signal outputted from the photodetector 230. The processing circuit 240 may include a control circuit that controls the light source 210 and a signal processing circuit that performs signal processing based on the detection signal. The processing circuit 240 may be configured as a circuit or may be a collection of a plurality of separate circuits. The processing circuit 240 transmits a control signal to the light source 210. The control signal causes the light source 210 to periodically change the frequency of the emitted light within a predetermined range. In other words, the control signal is a signal to sweep the frequency of the light emitted from the light source 210.

The light source 210 in this example includes a drive circuit 211 and a light emitting element 212. The drive circuit 211 receives the control signal outputted from the processing circuit 240, generates a drive current signal according to the control signal, and inputs the drive current signal to the light emitting element 212. The light emitting element 212 may be, for example, an element, such as a semiconductor laser element, that emits highly coherent laser light. The light emitting element 212 emits frequency-modulated laser light in response to the drive current signal.

The frequency of laser light emitted from the light emitting element 212 is modulated at a fixed cycle. A frequency modulation cycle may be greater than or equal to 1 microsecond ($\mu$s) and less than or equal to 10 millisecond (ms), for example. A frequency modulation amplitude may be greater than or equal to 100 MHz and less than or equal to 1THz, for example. A wavelength of laser light may be included in a near-infrared wavelength band of greater than or equal to 700 nm and less than or equal to 2000 nm, for example. In sunlight, an amount of light of the near-infrared light is less than that of visible light. Therefore, use of the near-infrared light as the laser light can reduce influence of sunlight. Depending on an application, the wavelength of laser light may be included in the wavelength band of the visible light of greater than or equal to 400 nm and less than or equal to 700 nm or in a wavelength band of ultraviolet light.

The control signal inputted from the processing circuit 240 to the drive circuit 211 is a signal a voltage of which fluctuates at a predetermined cycle and with a predetermined amplitude. The voltage of the control signal may be modulated like a triangular wave or a saw wave, for example. A control signal like the triangular wave or the saw wave, a voltage of which repeatedly changes linearly, makes it possible to sweep the frequency of the light emitted from the light emitting element 212 in a nearly linear form.

The interference optical system 220 in the example illustrated in Fig. 8 includes a divider 221, a mirror 222, and a collimator 223. The divider 221 divides the laser light emitted from the light emitting element 212 of the light source 210 into the reference light and the output light, and combines the reflected light from the object and the reference light, thereby generating the interference light. The mirror 222 reflects the reference light and returns the reference light to the divider 221. The collimator 223 includes a collimator lens, and irradiates the object with the output light with a near parallel spread angle.

The interference optical system 220 is not limited to the configuration illustrated in Fig. 8 and may be a fiber optical system, for example. In that case, a fiber coupler may be used as the divider 221. The reference light does not necessarily have to be reflected by the mirror 222, and the reference light may be returned to the divider 221 by routing of optical fibers, for example.

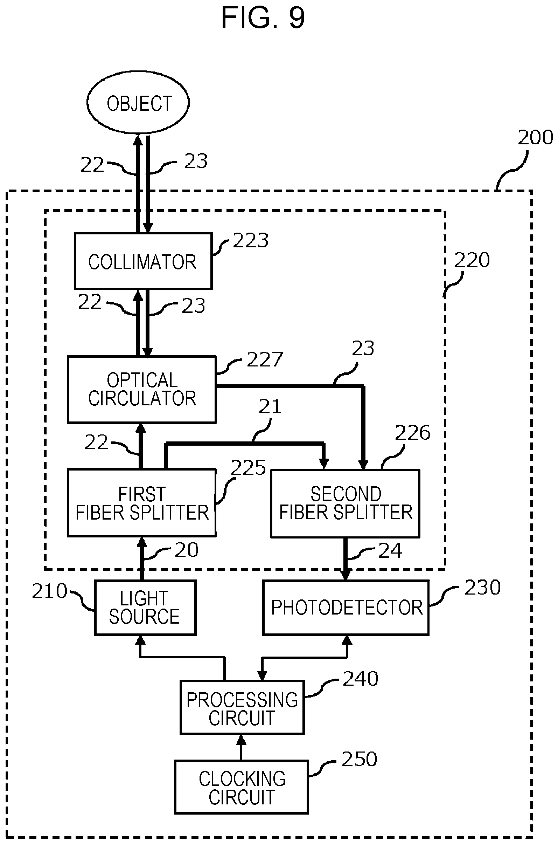

Fig. 9 is a block diagram illustrating an example of the sensor 200 in which the interference optical system 220 is the fiber optical system. In the example illustrated in Fig. 9, the interference optical system 220 includes a first fiber splitter 225, a second fiber splitter 226, and an optical circulator 227. The first fiber splitter 225 separates laser light 20 emitted from the light source 210 into reference light 21 and output light 22. The first fiber splitter 225 causes the reference light 21 to enter the second fiber splitter 226, and causes the output light 22 to enter the optical circulator 227. The optical circulator 227 causes the output light 22 to enter the collimator 223. The optical circulator 227 also causes reflected light 23 to enter the second fiber splitter 226, the reflected light 23 being generated by irradiating the object with the output light 22. The second fiber splitter 226 causes interference light 24 between the reference light 21 and the reflected light 23 to enter the photodetector 230. The collimator 223 shapes a beam shape of the output light 22 and emits the output light 22 toward the object. Similarly to the configuration illustrated in Fig. 8, such a configuration also allows for ranging and velocity measurement of the object.

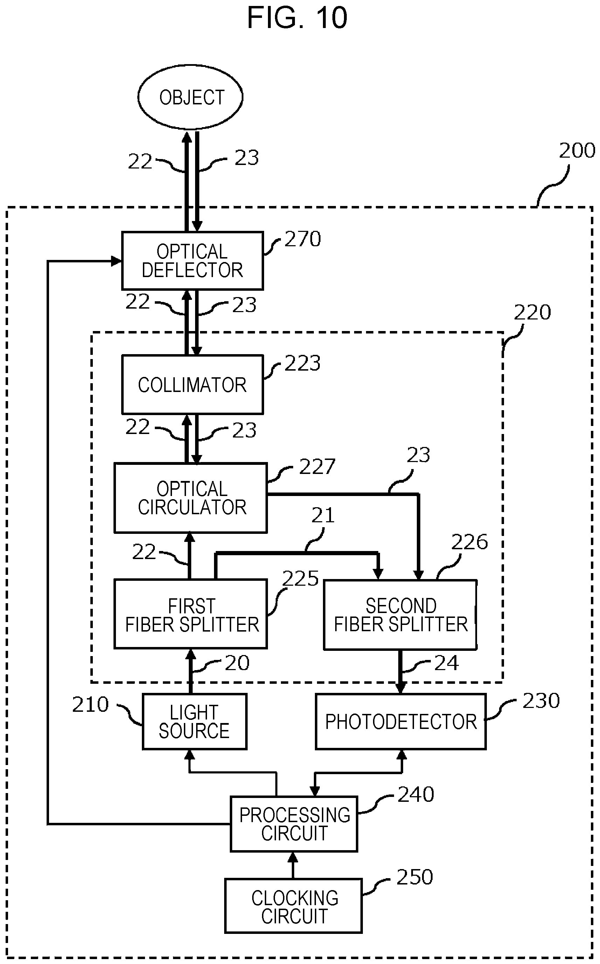

The sensor 200 may further include an optical deflector that changes the direction of emitted light. Fig. 10 is a block diagram illustrating an example of the sensor 200 including an optical deflector 270. The optical deflector 270 may include a MEMS (Micormechanical Electrosystem) mirror or a galvanometer mirror, for example. The optical deflector 270 can change the emission direction of the output light 22 by changing an angle of the mirror in accordance with a command from the processing circuit 240. Consequently, ranging in a wide range can be realized by beam scanning.

In the example of Fig. 10, the optical deflector 270 is added to the configuration illustrated in Fig. 9, but a configuration may be adopted in which the optical deflector 270 is added to the configuration illustrated in Fig. 8. The optical deflector 270 is not limited to the configurations described above, and may be a beam scanning device using an optical phased array or a slow light waveguide, for example, as described in International Publication No. WO 2019/230720.

[1-2. Measurement Data Outputted from Sensing Device]

Next, a description will be given of ranging and velocity measurement by the FMCW-Lidar used in the present embodiment. The ranging and velocity measurement by the FMCW-LiDAR method are carried out by analyzing the frequency of interference light generated by the interference between the frequency-modulated reference light and the reflected light.

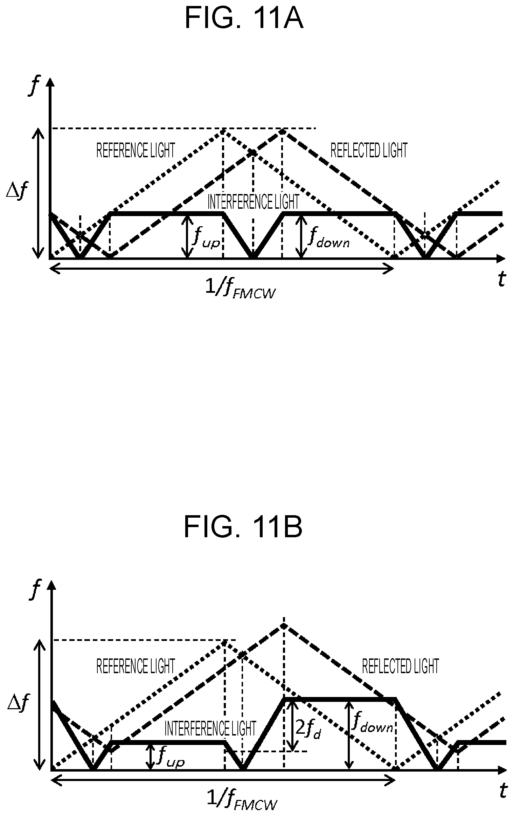

Fig. 11A illustrates an example of changes over time in the frequencies of the reference light, the reflected light, and the interference light, in a case where a distance between the sensor 200 and the object is fixed (when both are stationary, for example). Here, a description is given of a case where frequency f of the emitted light from the light source 210 changes like the triangular wave, and a rate of change in frequency per unit time is same in a period during which the frequency increases, and in a period during which the frequency decreases. In the following description, the period during which the frequency increases is referred to as an "up-chirp period", and the period during which the frequency decreases over time is referred to as a "down-chirp period". In Fig. 11A, dotted lines represent the reference light, broken lines represent the reflected light, and thick solid lines represent the interference light. With respect to the reference light, the reflected light from the object is accompanied by a time delay according to the distance. As a result, there occurs a certain difference depending on the distance between the frequency of the reflected light and the frequency of the reference light, except for the time around a turnaround point in the frequency modulation. The interference light has a frequency corresponding to the frequency difference between the reference light and the reflected light. Thus, except for the time around the turnaround point in the frequency modulation, frequency $f_{up}$ of the interference light in the up-chirp period is equal to frequency $f_{down}$ of the interference light in the down-chirp period. The photodetector 230 outputs a detection signal indicating the intensity of the interference light. The detection signal is referred to as a "beat" signal, and frequency of the beat signal is referred to as beat frequency. The beat frequency is equal to the frequency difference between the reference light and the reflected light. The frequency difference relies on the distance from the sensor 200 to the object. Thus, the distance from the sensor 200 to the object can be calculated, based on the beat frequency.

Here, light velocity is c, modulation frequency of the emitted light is $f_{FMCW}$, a width of the frequency modulation of the emitted light (that is, a difference between the highest frequency and the lowest frequency) is $\Delta f$, the beat frequency is $f_b$ (= $f_{up}$ = $f_{down}$), and the distance from the sensor 200 to the object is d. The modulation frequency $f_{FMCW}$ is an inverse of a cycle of the frequency modulation of the emitted light. The distance d can be calculated based on the following expression (1):

$$d = c \times f_b / (\Delta f \times f_{FMCW}) \times (1/4) \quad (1).$$

Fig. 11B illustrates an example of changes over time in the frequencies of the reference light, the reflected light, and the interference light, in a case where the sensor 200 or the object is moving and the relative velocity between the sensor 200 and the object is fixed. In the example of Fig. 11B, the object is approaching the sensor 200 at a constant velocity. Due to the Doppler effect, a frequency shift occurs between the reference light and the reflected light from the object. When the object approaches, the frequency of the reflected light increases as compared with a case where the object is stationary. An amount by which the frequency of the reflected light is shifted relies on the magnitude of the component of the relative velocity of the object with respect to the sensor 200 in the direction toward the sensor 200. The beat frequency in this case differs between the up-chirp period and the down-chirp period. The velocity of the object can be calculated based on the difference between these beat frequencies. In the example of Fig. 11B, the beat frequency $f_{down}$ in the down-chirp period is higher than the beat frequency $f_{up}$ in the up-chirp period. To the contrary, when the object moves away from the sensor 200, the frequency of the reflected light decreases as compared to a case where the object is stationary. In that case, the beat frequency $f_{down}$ in the down-chirp period is lower than the beat frequency $f_{up}$ in the up-chirp period. Also in that case, the velocity of the object can be calculated based on the difference between these beat frequencies.

Here, the component of the relative velocity of the object with respect to the sensor 200 in the direction toward the sensor 200 is $v_c$, a wavelength of the emitted light is $\lambda$, and the amount of frequency shift due to the Doppler effect is $f_d$. The amount of the frequency shift $f_d$ is expressed as $f_d = (f_{down} - f_{up})/2$. In this case, the velocity component $v_c$ can be calculated based on the following expression:

$$v_c = f_d \lambda/2 = (f_{down} - f_{up})\lambda/4 \quad (2).$$

When $v_c$ is positive, it indicates that the object is moving in a direction approaching to the sensor 200. To the contrary, when $v_c$ is negative, it indicates that the object is moving in a direction moving away from the sensor 200.

In this manner, the Doppler effect occurs with respect to the direction of the reflected light. That is, the Doppler effect is caused by the velocity component in the direction from the object toward the sensor 200. Therefore, the processing circuit 240 can determine the component of the relative velocity of the object with respect to the sensor 200 in the direction toward the sensor 200, by the above calculation based on the detection signal.

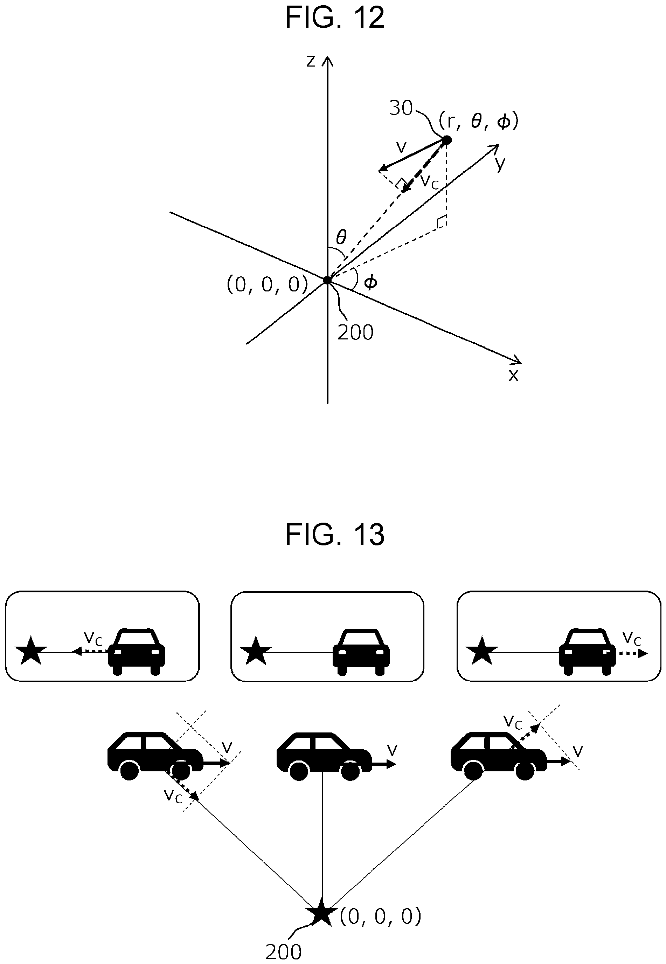

Fig. 12 is a diagram for describing the relative velocity of the object with respect to the sensor 200. In Fig. 12, the position of an object 30 is expressed by coordinates (r, θ, φ), in a polar coordinate system in which the position of the sensor 200 is an origin (0,0,0). An actual relative velocity vector of the object 30 with respect to the sensor 200 is v, and a component of the actual relative velocity vector v in the direction toward the sensor 200 is $v_c$. The velocity measured by the sensor 200, which is the ranging device of the FMCW method, is not the actual relative velocity vector v, but the component $v_c$ to be obtained by projecting the relative velocity vector v on the straight line connecting the sensor 200 and the object 30. When the relative velocity as illustrated in Fig. 12 is maintained, the Doppler effect occurs, and a relation between the frequency of the reference light and that of the reflected light becomes a relation as illustrated in Fig. 11B. With respect to the frequency of the reference light, the frequency of the reflected light shifts according to the velocity component $v_c$. This results in the frequency difference in the up-chirp period and the down-chirp period. The relative velocity component $v_c$ between the sensor 200 and the object 30 as illustrated in Fig. 12 can be obtained based on the frequency difference. As such, the relative velocity measured by the LiDAR of the FMCW method is only the vector component on the straight line connecting the sensor 200 and the object 30, as illustrated in Fig. 12. Therefore, when a direction in which the object 30 moves differs from the direction along the above-mentioned straight line when viewed from the sensor 200, among the velocity vectors of the object 30, only the component along the above-mentioned straight line is measured as the relative velocity.

Fig. 13 is a diagram for describing an example of velocity measurement when an automobile, which is a mobile object, crosses in front of a stationary sensor 200. In this example, the sensor 200 emits light in a horizontal direction. At a position of the automobile in the center of Fig. 13, the relative velocity of the automobile with respect to the sensor 200 is zero (0) because the velocity vector v indicating a moving direction of the automobile is orthogonal to the direction in which light is emitted from the sensor 200. At the position of the automobile on the right and left in Fig. 13, the velocity component $v_c$ can be measured because the relative velocity vector v has the component $v_c$ along the direction in which the light is emitted. For the position of the automobile on the left and right in Fig. 13, the velocity component $v_c$ measured by the sensor 200 varies, even though the automobile is at the constant velocity, that is, even if the velocity vector v is constant. As such, with only data from one reflecting point, it is not possible to determine the true relative velocity vector v of the mobile object with respect to the sensor 200. However, when the automobile is moving at the constant velocity, acquisition of data on the velocity component $v_c$ at the plurality of (for example, three or more) reflecting points allows the true relative velocity vector v to be estimated of the mobile object with respect to the sensor 200.

The sensing device 100 of the present embodiment collectively outputs, as a frame, data including the positional information and the velocity information of the plurality of reflecting points, the data being outputted from the plurality of sensors 200 during a time section of a specific length. A reflecting point is a point at which light from the light source 210 is reflected during the time section and is also herein referred to as a "data point". In the present embodiment, the sensing device 100 generates and outputs output data including the information related to the position and the velocity of each reflecting point expressed in a coordinate system with a reference position of the sensing device 100 as the origin. As the information related to the velocity of each reflecting point, the sensing device 100 generates output data including information indicating the true relative velocity vector v at that point or the velocity component $v_c$ in a direction along a straight line connecting that point and the origin. Whether the sensing device 100 outputs the velocity information in the format of the true relative velocity vector v or the velocity component $v_c$ varies depending on a model or setting. The sensing device 100 may output the velocity information in a format specified by a data request signal from the external device such as the server 500. In this manner, the processing circuit 110 in the sensing device 100 can select a specific data format from a plurality of data formats in which the processing circuit 110 can output, and generate measurement data including the velocity information expressed in the selected specific data format. The processing circuit 110 generates output data including the measurement data and identification information indicating the specific data format selected. The communication circuit 120 transmits the output data to other devices such as the server 500.

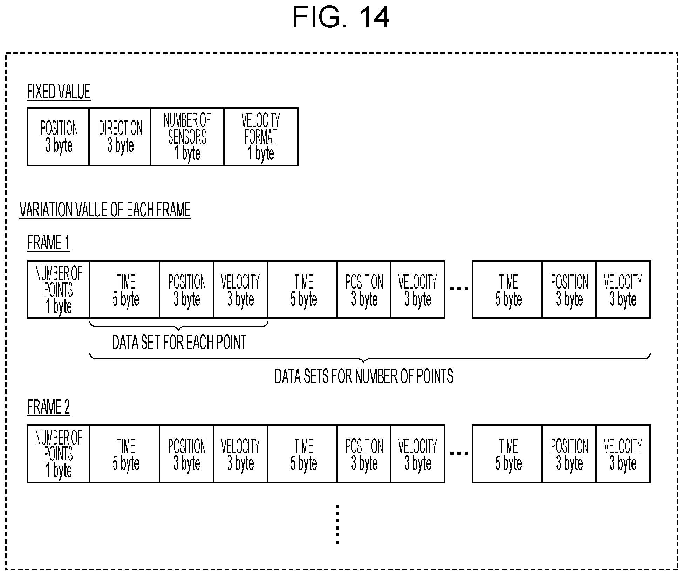

Fig. 14 is a diagram illustrating an example of a format of output data to be transmitted by a sensing device 100. The output data in this example includes a fixed value and sensor data that varies in each frame. The fixed value may be outputted only at the beginning or end of a data string, for example. Alternatively, the fixed value may be outputted once for every predefined fixed time or every fixed number of frames. The fixed value in this example includes the positional information of the sensing device 100. The positional information may be 3-byte information that expresses, for example, latitude, longitude, and altitude in one byte. The fixed value 100 may further include the orientation of the sensing device 100, that is, information indicating a depth direction in which the position of the sensing device 100 is the origin. The direction of the sensing device 100 may be expressed, for example, by three bytes of latitude, longitude, and altitude at the position 1 meter away from the origin in the y-axis direction as illustrated in Fig. 12. The fixed value illustrated in Fig. 14 also includes information indicating the number of the sensors 200 included in the sensing device 100. The number of the sensors 200 may be expressed, for example, in one byte. The fixed value in the present embodiment further includes, as the identification information, velocity format information that indicates a format of the velocity information outputted by the sensing device 100. The velocity format information indicates whether the velocity information represents the true relative velocity vector of a data point or represents a component of the true relative velocity vector of the data point projected onto a straight line connecting the sensing device 100 and the data point. The velocity format information may be expressed by a 1-byte code, for example. At every predefined time, the sensing device 100 collectively outputs sensor data outputted from one or more sensors 200. This group of data is one frame. For example, when data is outputted 30 times in a second, the processing circuit 110 of the sensing device 100 outputs the sensor data acquired in time of 1/30 second, as one frame of data.

In the example illustrated in Fig. 14, the output data of each frame includes data writing the number of points acquired during the period of the frame in one byte and a data set for each point in the frame. The data set for each point includes information on time, position, and velocity. Time may be expressed, for example, by 5-byte data including year, month, day, hour, minute, and second information, or the like. A position of each point may be expressed by a three-dimensional coordinate value (three bytes, for example) expressed in the coordinate system of the sensing device 100. A velocity at each point has a format indicated by the velocity format information included in the fixed value, and may be expressed in three bytes, for example. The velocity at each point may be expressed by a three-dimensional value indicating the relative velocity vector at the point viewed from the sensing device 100 or a one-dimensional or three-dimensional value indicating the component obtained by projecting the relative velocity vector of the point in a direction toward the origin. The data set for each point is repeated for the number of points written at the beginning of the frame. In the example of Fig. 14, when a total number of points is n, a numeric value of n is written in one byte at the beginning of the frame. Similarly, for subsequent frames, the number of points and the data set for each point are written.

As described above, the processing circuit 110 may output a value of the velocity component measured at each point or may output information on the relative velocity vector of each point with respect to the sensing device 100, as the velocity information of each point. When outputting the information on the relative velocity vector of each point, the processing circuit 110 can calculate the relative velocity vector based on values of velocity components measured at a plurality of points. Instead of outputting the information on the relative velocity vector of each point, information on a traveling velocity of the object at the position of each point (that is, the relative velocity of the object with respect to the sensing device 100) may be outputted. In that case, the velocities of points on the same object are all the same. Rather than transmitting velocity information attached to all points in the point cloud data, the points having the same velocity information is grouped as one cluster, and only one piece of velocity information can be written for one cluster. Grouping points as a cluster can reduce volume of data to be transmitted.

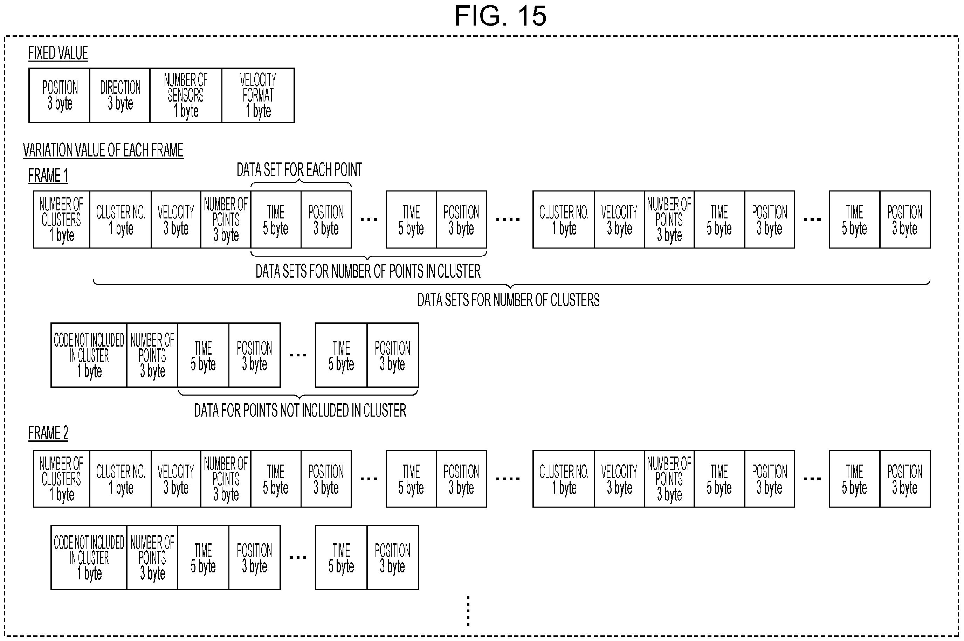

Fig. 15 is a diagram illustrating an example of a format by which points in a frame are grouped for each cluster and velocity information is written for each cluster. The fixed value in this example is similar to the fixed value in the example of Fig. 14. Data in each frame includes information indicating the number of clusters included in the frame (one byte, for example), information on each cluster, and information on points not included in any cluster. The information on each cluster includes information on a cluster identification number (one byte, for example), a velocity vector of the cluster (three bytes, for example), number of points in the cluster (three bytes, for example), and measurement time (five bytes, for example) and a position (three bytes, for example) of each point. After data of all clusters in the frame is written, the information on the points not included in any cluster is written. First, a code (one byte, for example) indicating that subsequent data is data related to the points outside the cluster and the number of the points outside the cluster (one byte, for example). Then, measurement time (five bytes, for example) and the position (three bytes, for example) of the points not included in the cluster are written. For the points not included in the cluster, even if the information on the velocity component is obtained during measurement, it is not possible to determine an actual movement vector of the object at the position of the point. Therefore, in the example of Fig. 15, no velocity information is not outputted for the points not included in the cluster. However, even for the points not included in the cluster, information on the velocity component in the direction along the straight line connecting the origin and the point can be obtained. Thus, output data may include the information on the velocity components of the points not included in the cluster.

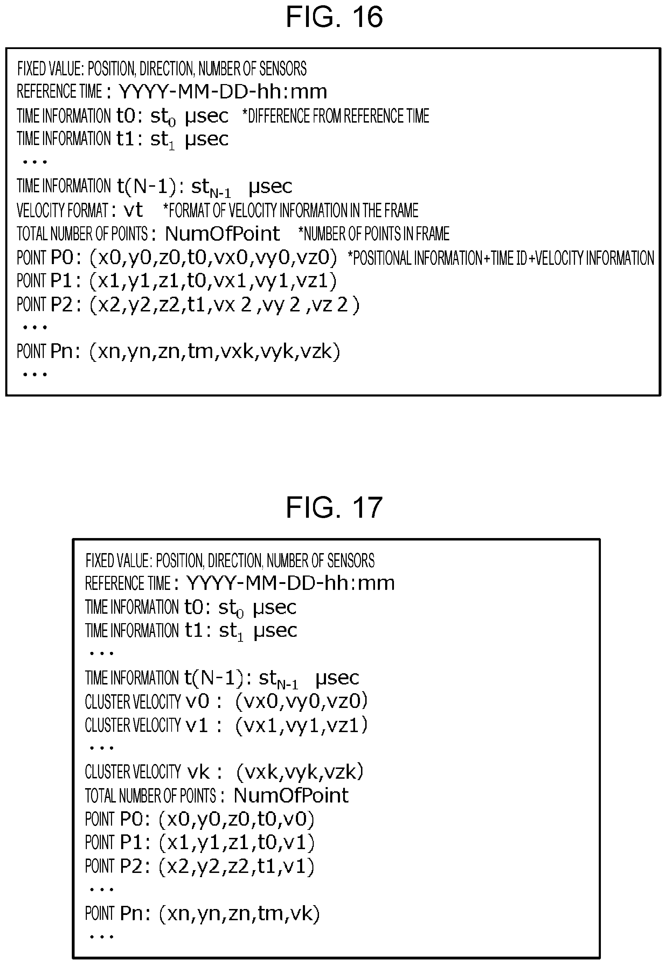

Note that in the example of Fig. 15, the velocity format is written as the identification information as the fixed value for the entire data, but similarly to the example illustrated in Fig. 16 to be described below, the velocity format may be written for each frame. If the velocity format is written for each frame, the processing circuit 110 writes the velocity format in a region from the beginning of the data for each frame before a region where the position or the like of each point in the frame is written. In that case, the server 500 that has acquired the data determines the format of velocity information for each frame.

Figs. 16 and 17 are diagrams for illustrating examples of other representations of data to be transmitted. In the examples illustrated in Figs. 16 and 17, a writing method similar to an XML file, which is one of file formats suitable for communication, is used. In the examples illustrated in Figs. 16 and 17, in the column for writing of the fixed value, the position, the direction, and the number of sensors of the sensing device 100 are written and then, information on each frame is written, similarly to the examples in Figs. 14 and 15. In the examples of Figs. 14 and 15, detailed time information for each point is written as it is. In contrast, in the examples in Figs. 16 and 17, reference time of the frame is written as the information on each frame, and detailed time of each point is written as a time information code indicating a difference from the reference time mentioned above. The codes are written as many times as necessary to write the detailed time of all points. In this manner, an amount of information on the detailed time of each point can be greatly reduced by expressing measurement time of each point as a difference from the reference time and expressing the time difference as a code. In particular, if there are many points simultaneously measured by the plurality of sensors 200, the effect of reducing the amount of information will be large.

Similarly to the example of Fig. 14, Fig. 16 illustrates an example of the data format in which velocity information for each point is written. In the example of Fig. 16, a code indicating a velocity information format is written as identification information, for each frame. That is, in this example, it is possible to select, for each frame, whether to output information on the relative velocity vector v of each point with respect to the sensing device 100 or to output information on the velocity component $v_c$ of each point. The number of points in a frame is outputted as data for each frame. Then, the position, a time code, and the velocity vector are written for each point. The velocity vector may be written in three dimensions as a vector having the position of each point as a starting point. Note that when the velocity format expresses the velocity component $v_c$ of each point, the velocity information of each point is not limited to three dimensions and may be expressed as a one-dimensional value.

Like the example illustrated in Fig. 15, Fig. 17 illustrates an example of a data format in which a velocity for each cluster is written. In the example of Fig. 17, a velocity vector is expressed by a velocity description o for each cluster and a code description for each point. Like the example of Fig. 16, following the fixed value, the reference time, the time information code, and a time difference corresponding to the code are written for each frame. Thereafter, a velocity code and a velocity vector corresponding to the code of each of a plurality of clusters, which are obtained by clustering a point cloud in the frame, are written. In this example, as there is a cluster velocity description in the data on each frame, it can be determined that the velocity data represents the relative velocity vector of the physical object corresponding to the cluster with respect to the sensing device 100. Following information on the cluster velocity, the number of points in the frame is written, and then, the position, the time code, and the cluster velocity code of each point are written. As a result, data including the positional information, the detailed time information, and the velocity information of each point in the point cloud data can be transmitted. The amount of information can be reduced by writing the velocity vector with a velocity code of each cluster.

[1-3. Operations of Sensing Device]

Next, a specific example of operations of the sensing device 100 will be described.

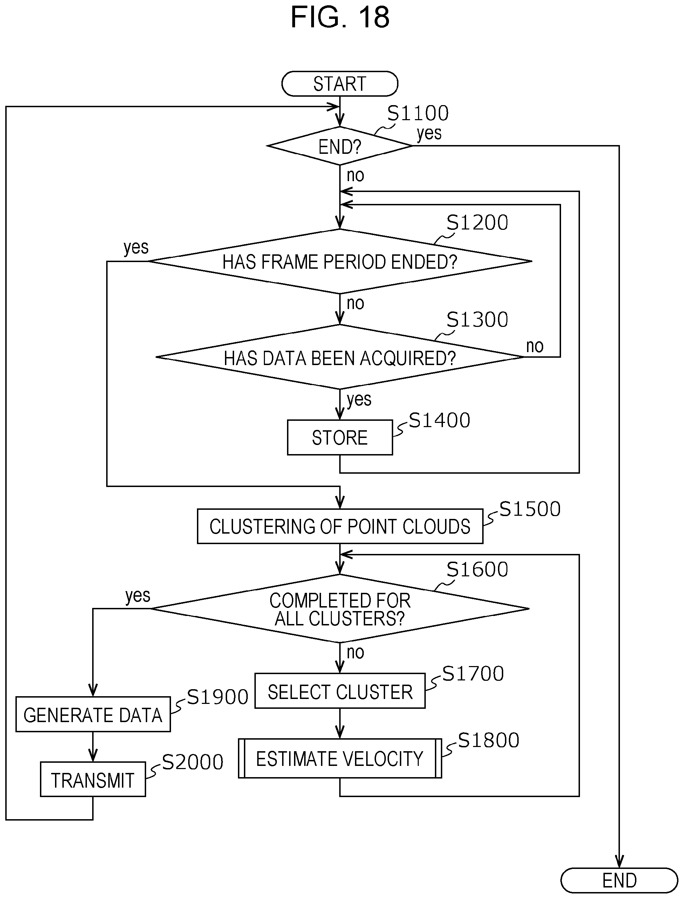

Fig. 18 is a flowchart illustrating an example of the operations of the sensing device 100. By performing the operations from steps 51100 to S2000 illustrated in Fig. 18, the sensing device 100 generates one frame of distance data and point cloud data. When continuously generating a plurality of frames of data, the sensing device 100 repeats the operations in steps S 1100 to S2000 illustrated in Fig. 18. Hereinafter, the operation in each of the steps described.

The sensing device 100 starts the operation when receiving input of a start signal from input means not illustrated.

(Step S 1100)

The processing circuit 110 determines whether or not an end signal has been inputted from the input means. If the end signal has been inputted, the sensing device 100 ends its operation. If no end signal has been inputted, processing advances to step S1200.

(Step S1200)

The processing circuit 110 determines whether or not a frame period that has been predefined as time to acquire one frame of data has ended. If the frame period has ended, processing advances to step S1500. If the frame period has not ended, processing advances to step S1300.

(Step S1300)

The processing circuit 110 determines whether or not it has acquired data from any of the one or more sensors 200. When the processing circuit 110 has acquired data from any of the sensors 200, processing advances to step S1400. When the processing circuit 110 has not acquired data from any of the sensors 200, processing returns to step S1200.

(Step S1400)

The processing circuit 110 causes the storage device 130 to store sensor data acquired from the sensor 200, information on the sensor 200 that has generated the sensor data, and data acquisition time. The sensor data may include, for example, information indicating the position of the reflecting point in the coordinate system of the sensing device 100, and information indicating the component of the relative velocity vector of the reflecting point with respect to the sensor 200 along the straight line connecting the sensor 200 and the reflecting point. After step S1400, processing returns to step S1200.

The sensing device 100 can store information on the position and the relative velocity component of the point cloud measured by the one or more sensors 200 for every fixed frame period (1/30 second, for example), by repeating steps S1200 to S1400.

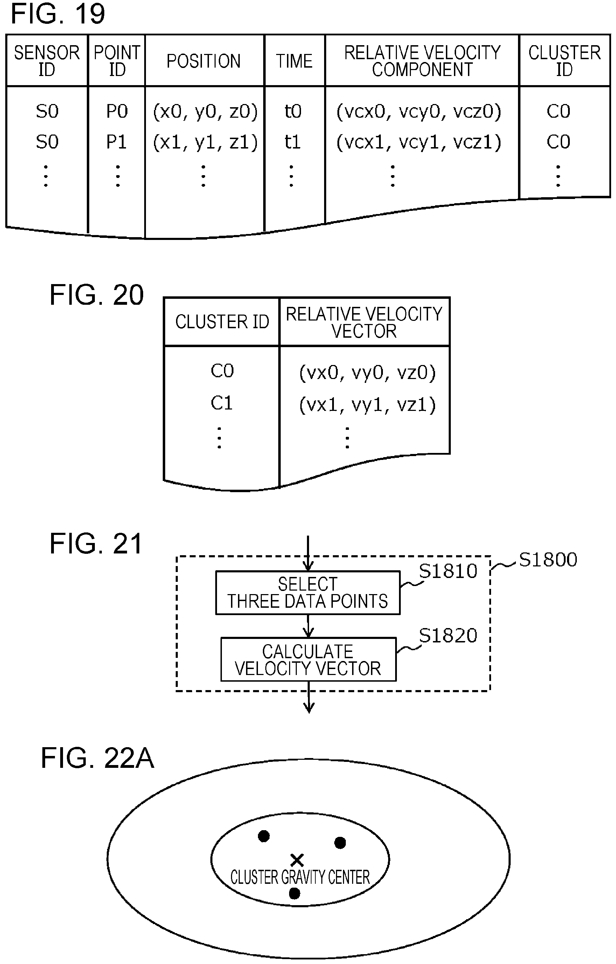

Fig. 19 is a diagram illustrating an example of information recorded in the storage device 130. Information related to the point cloud that is transmitted from the one or more sensors 200 during the frame period is recorded. The storage device 130 in this example stores a sensor ID identifying the sensor 200 that has acquired data, a point ID that is an identifier of the point measured by the sensor 200, a position of the measured position, measured time, a relative velocity component of the point in a direction along a straight line connecting the measured point and the sensor 200. In the example of Fig. 19, the relative velocity component is stored as three-dimensional vector information expressed by the coordinate system of the sensing device 100. Transformation from the coordinate system of each sensor 200 into the coordinate system of the sensing device 100 may be performed by the processing circuit 240 of the sensor 200 or by the processing circuit 110 of the sensing device 100. The storage device 130 also stores the cluster ID for identifying a cluster corresponding to a point, which is determined by clustering processing of the point cloud to be performed in step S1500.

(Step S1500)

When the acquisition of the one frame of the data ends, the processing circuit 110 performs clustering of the point cloud based on the positional information of each point in the point cloud that is measured in the frame recorded in the storage device 130. For example, the processing circuit 110 classifies the point cloud into one or more clusters, with a plurality of points located relatively close to each other as one cluster. The processing circuit 110 sets a cluster ID for each generated cluster. As illustrated in Fig. 19, the processing circuit 110 associates data of each point recorded in the storage device 130 with a cluster ID of the cluster including that point, and stores the data in the storage device 130.

(Step S1600)

The processing circuit 110 determines whether or not processing in steps S1700 and S1800 has been completed for all clusters generated in step S1500. If the processing has been completed for all the clusters, processing advances to step S1900. If there are unprocessed clusters, processing advances to step S1700.

(Step S1700)

The processing circuit 110 selects one cluster from clusters for which calculation of the relative velocity vector has not yet been completed, among the clusters generated in step S1500.

(Step S1800)

The processing circuit 110 calculates a relative velocity vector common to all the points in the cluster, based on information on the relative velocity components of the plurality of points included in the cluster selected in step S1700.
The relative velocity vector common to all the points in the cluster may be calculated based on, for example, the velocity components vector measured at three or more data points in the same cluster. Similarly to the example illustrated in Fig. 12, the velocity component vector measured at the data point in the cluster is $v_c$, and the relative velocity vector common to the data points in the cluster is v. The velocity component vector $v_c$ is a vector obtained by projecting the relative velocity vector v in the direction of the position vector of each data point. Therefore, the following expression (3) is true.
[Math 1]

$$|v_c|^2 = |v \cdot v_c| \qquad (3)$$

The processing circuit 110 can estimate the relative velocity vector v common to the data points in the cluster by applying the expression (3) above to the velocity component vectors $v_c$ at the three or more data points. Details of step S1800 will be described below.
The processing circuit 110 can calculate the relative velocity vector v for all the clusters in the point cloud data measured within the frame period, by repeating steps S1600 to S1800. The relative velocity vector v represents a relative velocity of an object corresponding to the cluster, with respect to the sensing device 100. When calculating the relative velocity vector v of the cluster, the processing circuit 110 causes the storage device 130 to store the information.
Fig. 20 is a diagram illustrating an example of information related to clusters stored by the storage device 130. In the example of Fig. 20, the relative velocity vector which is calculated in step S1800 is recorded for each cluster ID that identifies the clusters generated in step S1500.

(Step S1900)

When the relative velocity vectors have been determined for all the clusters, the processing circuit 110 generates output data for the frame. The processing circuit 110 generates the output data in the format exemplified in Fig. 15 or 17, for example. Alternatively, the processing circuit 110 may generate the output data in the formats exemplified in Figs. 14 and 16. However, the fixed value is outputted when the sensing device 100 starts operating or for every specific number of frames. Normal frame data includes information that varies depending on a frame and does not include the fixed value.
If the format exemplified in Fig. 15 is adopted, and when there is a data point that does not belong to any cluster in step S1500, the processing circuit 110 generates output data including the position and measurement time of the point that does not belong to the cluster. Because actual velocity of the point not belonging to the cluster is unknown, in the example of Fig. 15, the output data does not include information on the velocities of those points. The processing circuit 110 may include, in the output data, the information on the velocity components $v_c$ of the points not belonging to the cluster.
If the format exemplified in Fig. 14 or 16 is adopted, the processing circuit 110 generates output data in which information on the relative velocity vector of the cluster to which that point belongs is the velocity information of each point. Referring to the data illustrated in Figs. 19 and 20, for example, the processing circuit 110 can acquire positional information of each point, the cluster to which that point belongs, and information on the relative velocity vector of that cluster. As a result, output data including the positional information of each point and the information on the relative velocity vector of each point can be generated. In this manner, the processing circuit 110 divides the plurality of reflecting points into one or more clusters based on the positional information of each of the plurality of reflecting points, and determines one velocity vector for each cluster based on the velocity information of the three or more reflecting points included in each cluster. The processing circuit 110 includes information indicating the velocity vector of each cluster in the measurement data and generates the output data including the measurement data.

(Step S2000)

The processing circuit 110 outputs one frame of the output data generated in step S1900 to the communication circuit 120. The communication circuit 120 transmits the output data to the server 500 via the network 600. After the data is transmitted, processing returns to step S1100.

Through the operations from step S1100 to step S2000, the sensing device 100 can generate data for communication and transmit it to the server 500, the data for communication including information on the position, time, and velocity of the point cloud measured within the time of the frame. By repeating the operations described above, the sensing device 100 can transmit the measurement data including the positional information and the velocity information of each point to the server 500, for each frame.

[1-3-1. Operation to Estimate Velocity Vector]

Next, details of an operation of estimating the relative velocity vector common to all the points in the cluster in step S1800 will be described.

Fig. 21 is a flowchart illustrating more details of the operation in step S1800. Step S1800 illustrated in Fig. 21 includes steps S1810 and S1820. A description will be given of operations of each of the steps below.

(Step S1810)

For the clusters selected in step S1700, the processing circuit 110 selects three points whose velocity component magnitude is not 0, among the data points in the cluster. The three points may be selected based on a distance from the gravity center of the cluster, for example.

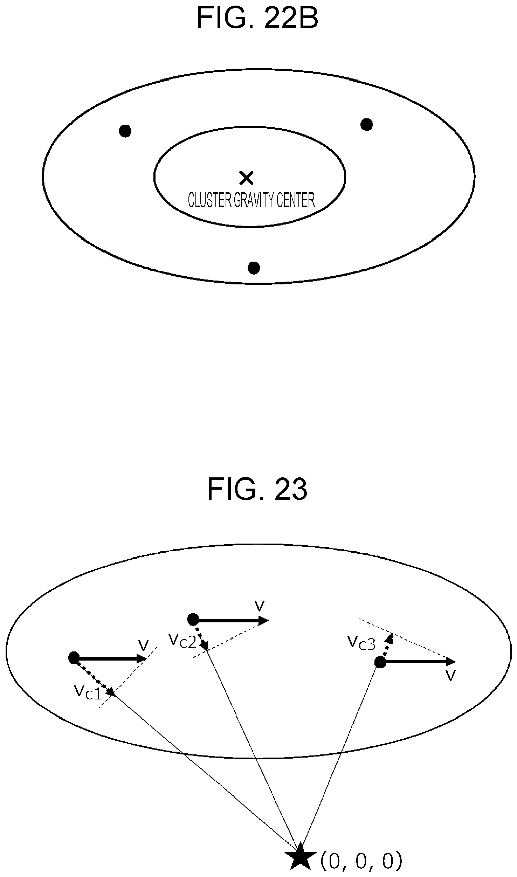

Figs. 22A and 22B illustrate an example of criteria for selecting three points. As illustrated in Fig. 22A, the processing circuit 110 may randomly select three points from data points within a predefined distance range from the cluster gravity center. There are some cases where reliability of data points close to a cluster boundary may be low, such as when a lot of noise is included in the points close to a cluster boundary, or when periphery around the cluster boundary is a boundary region with another cluster, and data of the other cluster is mixed, or the like. In such a case, it is effective to select three points from data points within a fixed distance from the cluster gravity center. Alternatively, as illustrated in Fig. 22B, the predefined distance range may be a range that is a certain distance or more away from the cluster gravity center. A selection method illustrated in Fig. 22B may be adopted when estimation is difficult with only data in the vicinity of the cluster gravity center as a difference in the velocity components is small. In order to select three data points each of which is located apart in the cluster, three points located within a range that is a certain distance away from the gravity center and a distance between the data points is a certain distance or more may be selected. Making such a selection allows estimation of an averaged relative velocity vector when there is a velocity bias within the cluster.

(Step S1820)

The processing circuit 110 calculates the common relative velocity vector v from the velocity component vectors of the three data points selected in step S1810, based on the above expression (3). As illustrated in Fig. 23, when the velocity component vectors at the three data points are $v_{c1}$, $v_{c2}$, and $v_{c3}$, the following simultaneous equation will be true.

[Math 2]

$$|v_{c1}|^2 = |v \cdot v_{c1}|$$
$$|v_{c2}|^2 = |v \cdot v_{c2}|$$
$$|v_{c3}|^2 = |v \cdot v_{c3}|$$

The processing circuit 110 can determine the common relative velocity vector v by solving the above simultaneous equation using the known velocity component vectors $v_{c1}$, $v_{c2}$, and $v_{c3}$.

Note that three points are selected in this example, but points to be selected may be four or more points. When four or more points are selected, a vector that is estimated as a common relative velocity vector in the cluster is not determined uniquely. In that case, an average of vectors estimated by combinations of three points or a representative value derived by a method other than averaging may be adopted as the common relative velocity vector.

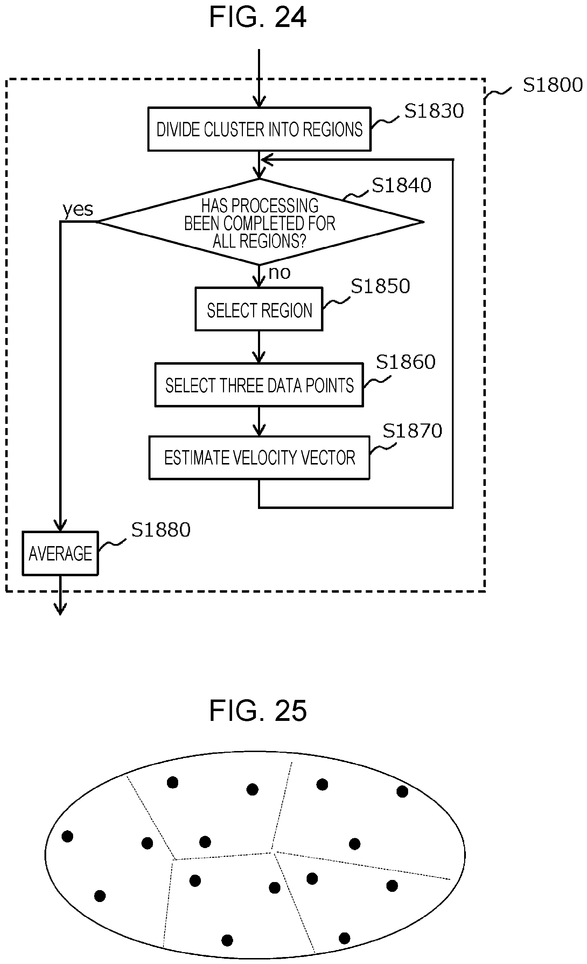

The processing circuit 110 may perform operations illustrated in Fig. 24, instead of the operations illustrated in Fig. 21. Fig. 24 is a flowchart illustrating another example of the estimation processing of the relative velocity of the cluster in step S1800. Step S1800 in the example of Fig. 24 includes steps S1830 to S1880. A description of operations of each of the steps will be described below.

(Step S1830)

The processing circuit 110 divides the cluster selected in step S1700 into a plurality of regions. As illustrated in Fig. 25, for example, the processing circuit 110 can divide the cluster into the plurality of regions by forming a plurality of groups in which three or more points proximate to each other form a same group.

(Step S1840)

The processing circuit 110 determines whether or not processing from steps S1850 to S1870 has been completed for all the regions divided in step S1830. If there remains any cluster that has not been divided, processing advances to step S1850. If the processing has been completed for all the regions, processing advances to step S1880.

(Step S1850)

The processing circuit 110 selects one region that has not been processed yet from among the regions divided in step S1830.

(Step S1860)

The processing circuit 110 selects three data points whose velocity component magnitude s is not 0 among the data points within the range selected in step S1850.

(Step S1870)

The processing circuit 110 calculates a relative velocity vector common to the three points, by solving the above simultaneous equation using the known velocity component vectors $v_{c1}$, $v_{c2}$, and $v_{c3}$ of the three points selected in step S1860.
By repeating steps S1840 to S1870, the relative velocity vector without bias can be estimated with respect to the data points distributed in the entire cluster.

(Step S1880)

When the estimation processing of the relative velocity vector has been completed for all the regions, the processing circuit 110 generates an average vector of the relative velocity vectors in the respective regions estimated in steps S1840 to S1870, as a representative relative velocity vector of the entire cluster.
Note that in the example illustrated in Fig. 24, the relative velocity vector is estimated by dividing the cluster into the plurality of regions and selecting three points in each region, but other methods may be used. For example, a selection method such as selecting one point each from three regions that are proximate to each other or selecting three points from regions that are not proximate to each other may be used. By estimating the relative velocity vectors from three points in different regions, it is possible to avoid difficulties in estimation caused by data points that are too close.

[1-3-2. Other Examples of Operations of Sensing Device]

In the example illustrated in Fig. 18, the processing circuit 110 performs clustering processing based on the distance or position on the point cloud in one frame, thereby dividing the point cloud into clusters of each object and calculating a relative velocity vector for each cluster. In this example, if output data is generated in any of the formats in Figs. 14 to 16, a code indicating a relative velocity vector of a physical object located at the position of the data point with respect to the sensing device 100 will be written as the velocity format information. The formats illustrated in Figs. 15 to 17 is a format in which a cluster of the point cloud is written, so it can be said to be a data format suitable for the sensing device 100 that performs the operations illustrated in Fig. 18.
On the other hand, in the format illustrated in Fig. 14 or 16, the cluster is not written, and the velocity information is written for each data point. Therefore, when the format illustrated in Fig. 14 or 16 is used, it is possible to specify, as the velocity format, the velocity component measured by the sensor 200, that is, the velocity component along the straight line connecting the sensor 200 and the data point. In that case, a vector indicating the component of the relative velocity vector of each point along the above straight line may be written as the velocity information of each point. In the format illustrated in Fig. 16, the information on each data point is written in three dimensions of position, in one dimension of time, and in three dimensions of velocity vector. Of these, for the velocity vector, a velocity vector component, which is directly measured by the sensor 200, along the straight line connecting the sensor 200 and the data point can be written.
Hereinafter, a description will be given of an example of operations of the sensing device 100 when the velocity vector component along the straight line connecting the sensor 200 and the data point is transmitted in the format illustrated in Fig. 14 or 16, as velocity information of each data point.

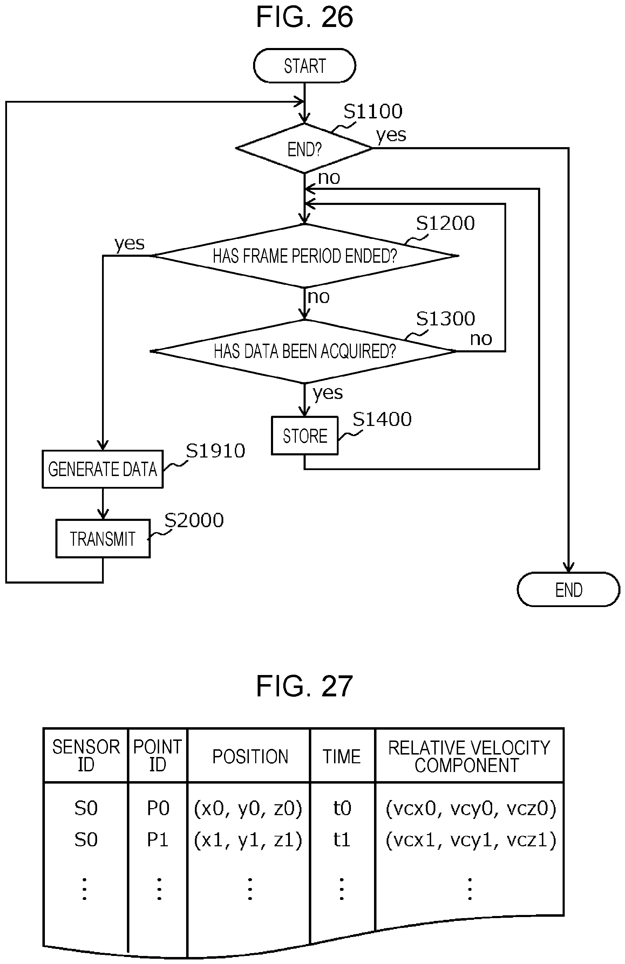

Fig. 26 is a flowchart illustrating an example of the operations of the sensing device 100 that transmits information on the velocity vector component along the straight line connecting the sensor 200 and the data point, as the velocity information of each data point. In this flowchart, as the operations from steps S1100 to S1400 are the same as the operations corresponding to Fig. 18, a description of these steps will be omitted.
Fig. 27 is a diagram illustrating an example of information recorded in the storage device 130 in step S1400. The information recorded in step S1400 is similar to the information illustrated in Fig. 19. In the example of Fig. 26, however, if it is determined in step S1200 that the frame period has ended, processing advances to the data generation the processing in step S1910 without performing the point cloud clustering processing. Therefore, unlike the example of Fig. 19, the information recorded in the storage device 130 does not include the information on the cluster ID.

In step S1910, the processing circuit 110 generates output data for that frame. The processing circuit 110 generates the output data in the format exemplified in Fig. 14 or 16, for example. The processing circuit 110 acquires the positional information and the relative velocity component information of each data point illustrated in Fig. 27 from the storage device 130 and generates output data including these pieces of information. In the following step S2000, the communication circuit 120 transmits the output data to the server 500. This allows the server 500 to acquire data including information on the position and the velocity component of each data point, as illustrated in Fig. 14 or 16.

As described above, the sensing device 100 in the present embodiment can generate data to be transmitted to the server 500, for example, using the following method in (a) or (b).

(a) The processing circuit 110 performs clustering of a point cloud and associates each cluster with one physical object. Assuming that points included in a same cluster have a same velocity, the processing circuit 110 calculates a relative velocity vector of the sensing device 100 with respect to the physical object corresponding to each cluster and generates point cloud data including positional information and relative velocity vector information, as exemplified in any of Figs. 14 to 17.

(b) The processing circuit 110 generates point cloud data including the positional information of each point in the point cloud and information on a relative velocity component of each point in the point cloud, that is, the relative velocity component along a straight line connecting a coordinate origin of the sensor 200 and the point, the positional information and the relative velocity component information being measured by the sensor 200 as exemplified in Fig. 14 or 16.

As such, the velocity information of each point included in output data may be information indicating an actual relative velocity vector of the point, or information indicating a relative velocity component of the point in the direction along the straight line connecting the coordinate origin set in the sensing device 100 and that point. The processing circuit 110 may be configured to select the above two types of velocity data as velocity information and generate the output data. The processing circuit 110 may also be configured to be able to select a format of the output data from the plurality of formats exemplified in Figs. 14 to 17. A format of the output data and a type of the velocity data included in the output data may be selected according to a specification from the server 500 or other input devices. Alternatively, the sensing device 100 may select the type of the velocity data included in the output data, based on information acquired from other types of sensors or input devices such as a camera, or predefined time, or the like. When the type of the velocity data is changed depending on a frame, the processing circuit 110 may write a code indicating the type of the velocity data, for example, at the beginning of data for each frame, or as a fixed value common to a plurality of frames. The code indicating the type of the velocity data may be written in one byte (eight bits), for example.

[1-4. Configuration of Server]

Next, a description of a configuration example of the server 500 will be given. As described with reference to Figs. 1 to 6, the server 500 receives data from one or more of the sensing devices 100. The server 500 checks a format of the received data and performs preprocessing according to the format.

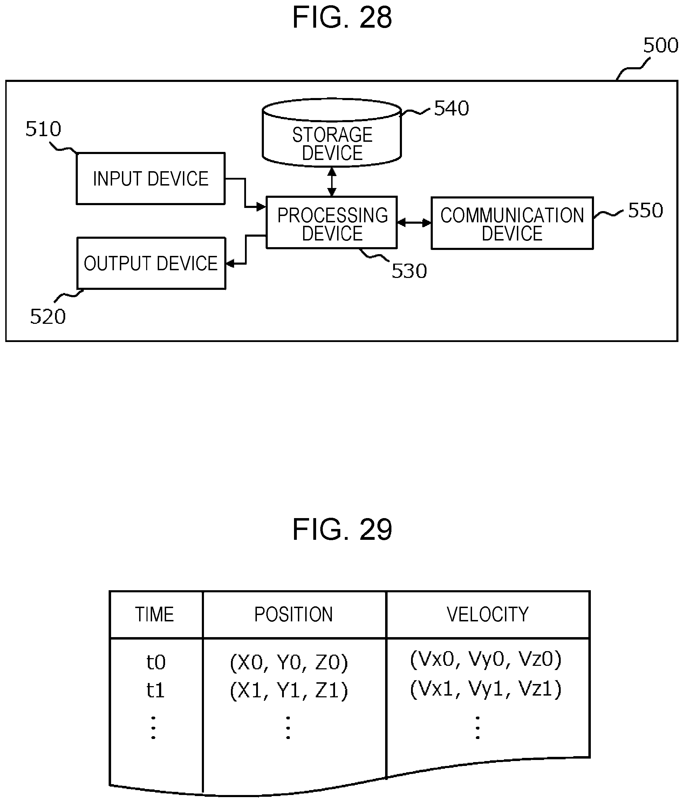

Fig. 28 is a diagram illustrating the configuration example of the server 500. The server 500 includes an input device 510, the input device 510, an output device 520, the processing device 530, the storage device 540, and the communication device 550.

The input device 510 is a device that accepts input requesting detailed road condition information at specific time and in a specific space. The input device 510 may include, for example, a keyboard or voice character input means. The input device 510 may include a pointing device that allows a user to specify a specific point on a map.

The output device 520 is a device that outputs the detailed road condition information in response to a request for the detailed road condition information at specific time and in a specific space, which is inputted using the input device 510. The road condition information may include information related to, for example, arrangement of the fixed body 400 and the mobile object 300 as well as a traveling velocity of the mobile object 300. The output device 520 may include a display, for example. The display displays a map of the road environment, for example, and draws the fixed body 400 and the mobile object 300 on the map. Alternatively, the output device 520 may be three-dimensional display or a hologram display device that three-dimensionally displays the fixed body and the mobile object in a specific space.

The communication device 550 is a device that communicates with each of the sensing devices 100 via the network 600. Data received by the communication device 550 is transmitted to the processing device 530.

The processing device 530 is, for example, a device including one or more processors such as a CPU or a GPU, and a memory. The memory stores a computer program to be executed by the processor. The processor of the processing device 530 generates positional information and velocity information of a physical object, by the communication device 550 acquiring output data including measurement data from one or more sensing devices 100, discriminating a data format of the measurement data, and applying arithmetic processing according to the discriminated data format to the measurement data. The processing device 530 performs processing such as coordinate transformation of point cloud data included in the output data, conversion from a relative velocity to an absolute velocity of each point, detailed time adjustment, and causes the storage device 540 to store information thereof. In response to the request inputted from the input device 510 for the detailed road condition information at the specific time and in the specific space, the processing device 530 also acquires data on the relevant time and area from the storage device 540 and transmits a signal instructing the output device 520 to output.

The storage device 540 is a device including one or more storage media such as semiconductor storage media (memory, for example), magnetic storage media, or optical storage media. The storage device 540 stores information on measurement time, a position, and a velocity of each point in the point cloud.

Fig. 29 is a diagram schematically illustrating an example of information stored in the storage device 540. In the example of Fig. 29, for each data point in the point cloud, acquired time, a position of the server 500 in a coordinate system, and velocity vector information are stored in the storage device 540. Time may include, for example, year, month, day, hour, minute, and second information. Time may be recorded in milliseconds (ms) or microseconds (μs).

[1-5. Operations of Server]

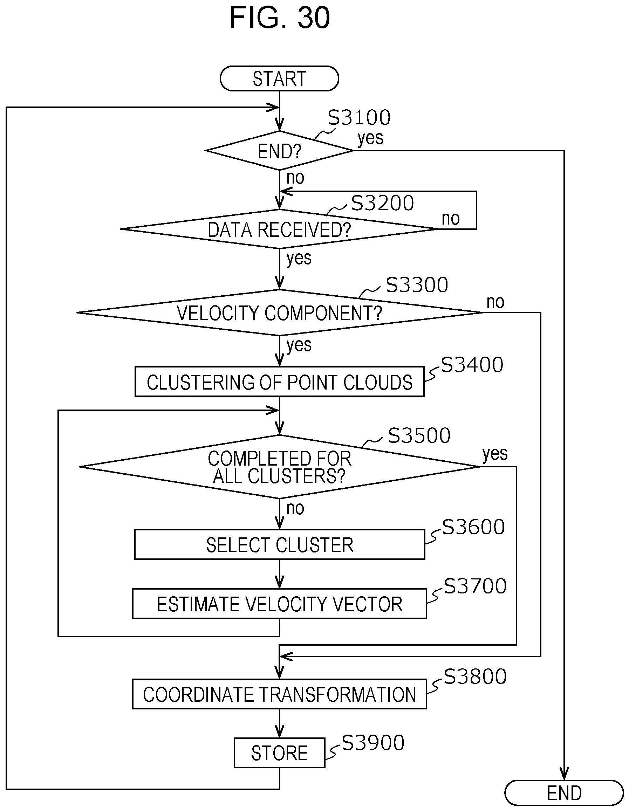

Fig. 30 is a flowchart illustrating an example of operations of the server 500. Fig. 30 illustrates the example of operations of the server 500 in a case where velocity format information is included in data transmitted from the sensing device 100 as a fixed value and the velocity information format of all data is specified, as exemplified in Fig. 14 or 15. The processing device 530 of the server 500 in this example performs the operations from steps S3100 to S3900 illustrated in Fig. 30. Upon receipt of a start signal from the input device 510, the server 500 starts operating. Hereinafter, the operation in each step will be described.

(Step S3100)

The processing device 530 determines whether or not an end signal has been inputted from the input device 510. If the end signal has been inputted, the server 500 ends its operation. If no end signal has been inputted, processing advances to step S3200.

(Step S3200)

The processing device 530 determines whether or not the communication device 550 has received data from the sensing device 100. If the data has been received, processing advances to step S3300. If no data has been received, step S3200 is repeated until the data is received. The operation of step S3200 may be performed for every time unit of the point cloud processing of the server 500. For example, processing of step S3200 may be performed at predefined fixed time intervals. The predefined fixed time intervals may be referred to as a processing frame of the server 500.

(Step S3300)

The processing device 530 reads the format of velocity information included in the fixed value of data acquired in step S3200, and determines whether the velocity information included in the acquired data represents a relative velocity vector of a physical object with respect to the sensing device 100 or represents a relative velocity component vector in a direction along the straight line connecting the sensor 200 and the data point. When the velocity information represents the relative velocity vector of the physical object with respect to the sensing device 100, processing advances to step S3800. When the velocity information represents the relative velocity component vector in the direction along the straight line connecting the sensor 200 and the data point, processing advances to step S3400.

(Step S3400)

The processing device 530 clusters data points of the acquired point cloud data based on the position or the distance from the sensing device 100, and classifies or groups the plurality of data points into one or more clusters.

(Step S3500)

The processing device 530 determines whether or not the velocity vector estimation processing has been completed for all clusters generated in step S3400. If there remain clusters, processing advances to step S3600. If the velocity vector estimation processing has been completed for all clusters, processing advances to step S3800.

(Step S3600)

The processing device 530 selects one cluster from clusters for which the velocity vector estimation has not yet been completed, among the clusters generated in step S3400.

(Step S3700)

The processing device 530 estimates a relative velocity vector common to all points in the cluster, based on the relative velocity component vectors of the plurality of points in the cluster selected in step S3600. An estimation method is similar to the method in step S1800 illustrated in Fig. 18.

By repeating steps S3500 to step S3700, the relative velocity vector for each cluster can be estimated, for all the clusters generated in step S3400.

(Step S3800)

The processing device 530 transforms the position of each point in the data acquired in step S3200 and the relative velocity vector of the cluster to which each point belongs, into data expressed in the coordinate system of the server 500. The coordinate transformation may be performed based on information indicating the position and the direction of the sensing device 100 that is included as the fixed value in the data transmitted from each sensing device 100.

(Step S3900)

The processing device 530 causes the storage device 540 to store information on the position and the velocity of each point subjected to the coordinate transformation in step S3800. As illustrated in Fig. 29, for example, the processing device 530 associates information on the position and the velocity of each point with the measured time and causes the storage device 540 to store them.

By repeating the processing in step S3100 to step S3900, the server 500 can acquire the measurement data from the sensing device 100, and record the information on the position and the velocity for each point expressed in the coordinate system of the server 500, together with the detailed time information. In the present embodiment, as exemplified in Figs. 1 and 2, the sensing device 100 is provided on the fixed body 400 and the relative velocity between the sensing device 100 and the data point represents a velocity of a physical object at the data point. Therefore, the server 500 accumulates the positional information of the data point and the velocity information of the physical object at that position together with the detailed time information. The server 500 may acquire measurement data not only from the sensing device 100 provided on the fixed body 400 but also from a sensing device provided on the mobile object. In that case, the server 500 can calculate the position and the velocity of each data point by acquiring positional information and velocity information of the mobile object itself with the sensing device mounted and performing the coordinate transformation based on the information. Alternatively, the server 500 may perform processing to determine the position and the velocity of a mobile object based on measurement data transmitted from a sensing device provided on the fixed body that performs ranging of the mobile object with the sensing device mounted, and may perform the coordinate transformation of the measurement data acquired from the sensing device of the mobile object, based on the position and the velocity.

In the example described above, the server 500 processes the measurement data received from the one sensing device 100. If the system includes the plurality of sensing devices 100, the server 500 may receive measurement data in different formats from the plurality of sensing devices 100. Hereinafter, a description will be given of an example of operations of the server 500 in such a configuration.

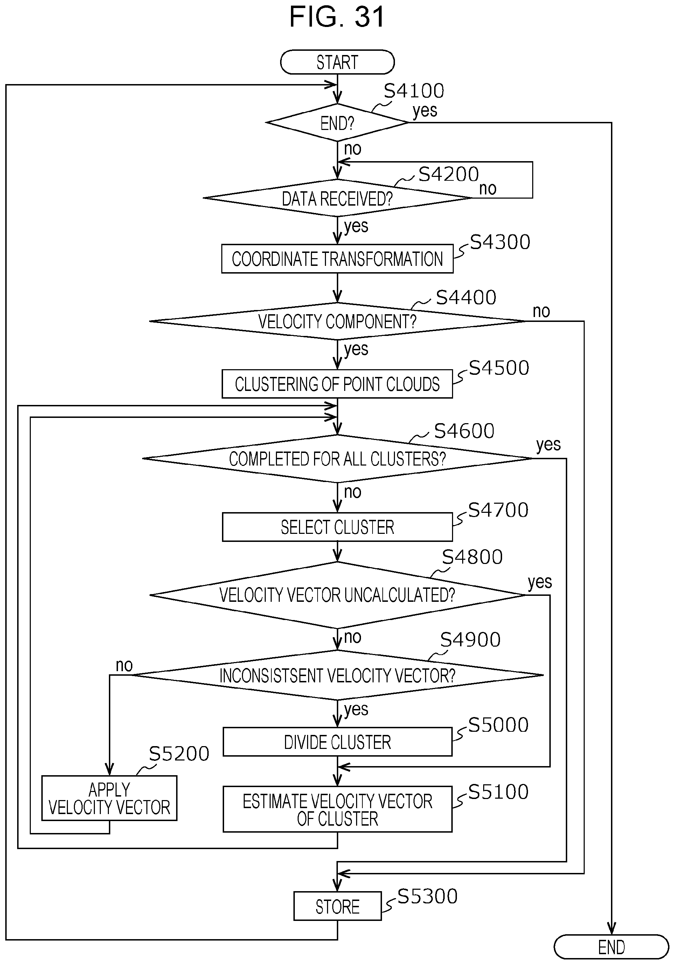

Fig. 31 is a flowchart illustrating an example of operations of the processing device 530 when the server 500 receives measurement data in different formats from the plurality of sensing devices 100 at different timing. In the example illustrated in Fig. 31 as well, the velocity format information is included in data transmitted from each of the sensing devices 100 as the fixed value, and the velocity information format of all data is specified, similarly to the example illustrated in Fig. 30. The processing device 530 performs the operations of steps S4100 to S5300 illustrated in Fig. 31. Upon receipt of a start signal from the input device 510, the server 500 starts operating. Hereinafter, the operation in each step will be described.

(Step S4100)

The processing device 530 determines whether or not an end signal has been inputted from the input device 510. If the end signal has been inputted, the server 500 ends its operation. If no end signal has been inputted, processing advances to step S4200.

(Step S4200)

The processing device 530 determines whether or not the communication device 550 has received data from the sensing device 100. If the data has been received, processing advances to step S4300. If no data has been received, step S4200 is repeated until the data is received. The operation of step S4200 may be performed for every time unit of the point cloud processing of the server 500. For example, processing of step S3200 may be performed at predefined fixed time intervals.

(Step S4300)

The processing device 530 transforms the information on the position and the velocity vector of each data point in the data acquired in step S4200 into data expressed in the coordinate system of the server 500. The velocity vector information may be expressed, for example, by coordinate values indicated by an end point of the velocity vector whose starting point is the position of the data point.

(Step S4400)

The processing device 530 reads the format of the velocity information included in the fixed value of the data acquired in step S4200, and determines whether the velocity information included in the acquired data represents the relative velocity vector of the physical object with respect to the sensing device 100 or represents the relative velocity component vector in the direction along the straight line connecting the sensor 200 and the data point. If the velocity information represents the relative velocity vector of the physical object with respect to the sensing device 100, processing advances to step S5300. If the velocity information represents the relative velocity component vector in the direction along the straight line connecting the sensor 200 and the data point, processing advances to step S4500.

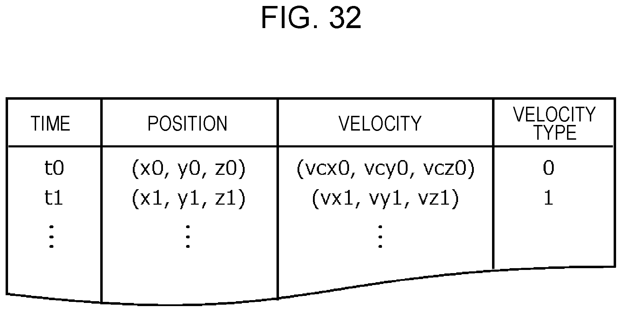

Fig. 29 exemplifies only time, position, and velocity as information stored by the storage device 540. In addition to the information thereof, the storage device 540 may store information or a flag indicating whether or not the velocity information indicates the relative velocity component on the straight line connecting the sensor and the data point, as illustrated in Fig. 32. The storage device 540 may store, for each data point, information on the position and direction of the sensing device 100, or the like, necessary for the coordinate transformation of each data point, in addition to the information illustrated in Fig. 32. In the example of Fig. 31, the processing device 530 collectively clusters point clouds acquired from the plurality of sensing devices 100. If information from the plurality of sensing devices 100 is received one after another in a same frame, and if all data points in the frame are processed every time they are received, some data points may be processed more than once. Thus, in the present embodiment, data is processed in the time unit of the fixed processing frame. The storage device 540 may record the point cloud data being processed, as temporary storage data for processing by the processing device 530. In that case, in the data stored by the storage device 540, information on a data point where the information on the relative velocity vector of the cluster including the data point is written as the velocity information may be mixed with information on a data point where the information on the relative velocity component vector on the straight line connecting the sensor that has done measurement and the data point is written as the velocity information. In addition, if point clouds received from the plurality of sensing devices 100 are grouped, types of the velocity information may differ for each sensing device 100. Even in such a case, the velocity information can be easily discriminated if the storage device 540 records a flag for discriminating the velocity information or a flag indicating that the velocity information has not been processed.

(Step S4500)

The processing device 530 performs clustering processing on the point cloud subjected to the coordinate transformation in step S4300, by combining it with the data points in the point cloud recorded in the storage device 540 and acquired from another sensing device 100 in the same frame. Based on the position of each data point, the processing device 530 combines the point cloud subjected to the coordinate transformation in step S4300 with the point cloud recorded in the storage device 540 and acquired within the time of the frame, and divides them into one or more clusters.

(Step S4600)

The processing device 530 determines whether or not the estimation processing of the velocity vector common to the clusters has been completed for all clusters in the point cloud generated in step S4500. If the velocity vector common to the clusters has been estimated for all clusters, processing advances to step S5300. Among the clusters generated in step S4500, if there are clusters for which the estimation processing of the velocity vector common to the clusters has not been performed yet, processing advances to step S4700.

(Step S4700)

The processing device 530 selects one cluster from clusters for which the velocity vector common to the data points included in the cluster has not been calculated yet, among the clusters generated in step S4500.

(Step S4800)

The processing device 530 determines whether or not there is any velocity vector information already calculated for the clusters selected in step S4700. The processing device 530 determines, for the data point included in the cluster, whether the velocity information corresponding to the data point represents the relative velocity component vector on the straight line connecting the sensor and the data point or represents the velocity vector of the object at the data point. If all the data points in the cluster represent the relative velocity component vector on the straight line connecting the sensor and the data point, as velocity information, that is, if the velocity vector of the cluster has not been estimated, processing advances to step S5100. For one or more data points, if there is the velocity vector information estimated as the velocity vector common to the data points included in the cluster, processing advances to step S4900.

(Step S4900)

The processing device 530 determines whether or not the velocity vectors already calculated for the clusters selected in step S4700 are inconsistent with the velocity vectors or the relative velocity component vectors corresponding to other data points in the cluster.
As a method of determining inconsistency, for example, it can be determined that there is inconsistency when a difference between the velocity vectors already calculated at the plurality of data points in the cluster is larger than or equal to a predefined reference. The vector difference may be, for example, a sum of absolute values of differences between respective three-dimensional coordinate values. Alternatively, presence or absence of inconsistency may be determined based on a calculated vector difference, for example, by assigning a large weight to a difference in vector orientations and a small weight to a difference in vector magnitude. In addition, the method of determining inconsistency may be a method of determining that there is inconsistency when a difference between the magnitude of the relative velocity component vectors corresponding to one or more data points in the cluster and the magnitude of the components of the velocity vector already calculated at the one or more data points in the cluster in the same direction as the relative velocity component vector is larger than or equal to a reference value. Such a method makes it possible to detect inconsistency, for example, when objects that are located close to each other and have different velocities are grouped as one cluster.

If inconsistency is found between the velocity vectors corresponding to the data points in the cluster, processing advances to step S5000. If no inconsistency is found between the velocity vectors corresponding to the data points in the cluster, processing advances to step S5200.

(Step S5000)

The processing device 530 divides the data points in the cluster into a plurality of groups based on data attributes or by clustering. The division may be performed, for example, based on time associated with each data point. A plurality of data points that correspond to a plurality of objects and that do not overlap in spatial position at the same time may be subjected to ranging in an overlapped state in the same space due to a time difference. In such a case, division of the data points based on detailed time of ranging clears the situation in which objects with a plurality of different velocities overlap or are proximate to each other in the same space. As an example of another method of division, a method of dividing for each sensing device 100 that has performed ranging of the data points or a method of dividing a point cloud based on the velocity information format at the time of processing of step S5000 is possible.

(Step S5100)

The processing device 530 estimates a common velocity vector for each group or cluster of the divided point clouds. The method of estimation is similar to the method of step S3700 illustrated in Fig. 30. Note that among the divided groups or clusters, for the group or the cluster for which the common velocity vector has already been calculated, the existing velocity vector may be set as the common velocity vector for the group or the cluster without estimating a velocity vector once again. After the operation in step S5100, processing returns to step S4600.

(Step S5200)

If there is no inconsistency between the velocity vector already estimated for the selected cluster and other velocity information, the processing device 530 sets the already estimated velocity vector as the common velocity vector for the cluster. After the operation in step S5200, processing returns to step S4600.

By repeating the operation of step S4600 to step S5100 or step S5200, it is possible to divide the point cloud acquired during the frame period into clusters or groups, estimate a common velocity vector for each of the divided clusters or groups, and generate velocity vector information for each data point in the point cloud.

(Step S5300)

The processing device 530 causes the storage device 540 to store the information on the position and the velocity of each point that has been subjected to the coordinate transformation. As illustrated in Fig. 29, for example, the processing device 530 associates the information on the position and the velocity of each point with the measured time and causes the storage device 540 to store the information.

By repeating the processing of step S4100 to step S5300, it is possible to transform the point cloud data acquired from each of the plurality of sensing devices 100 to the data expressed in the coordinate system set for the server 500, and associate and store the position, the detailed time, and the velocity vector of each data point.

In the example illustrated in Fig. 31, step S4200 is performed every frame period, which is the time interval of processing by the server 500. As a result, clustering is no longer performed more than once within the same frame period, thus improving the efficiency of calculation.

Next, a description will be given of an example of a case where the server 500 receives, from the sensing device 100, data including ID information indicating the format of the velocity information for each frame, as exemplified in Fig. 16 or 17, or a case where the server 500 receives data including the cluster ID and velocity information of each cluster.

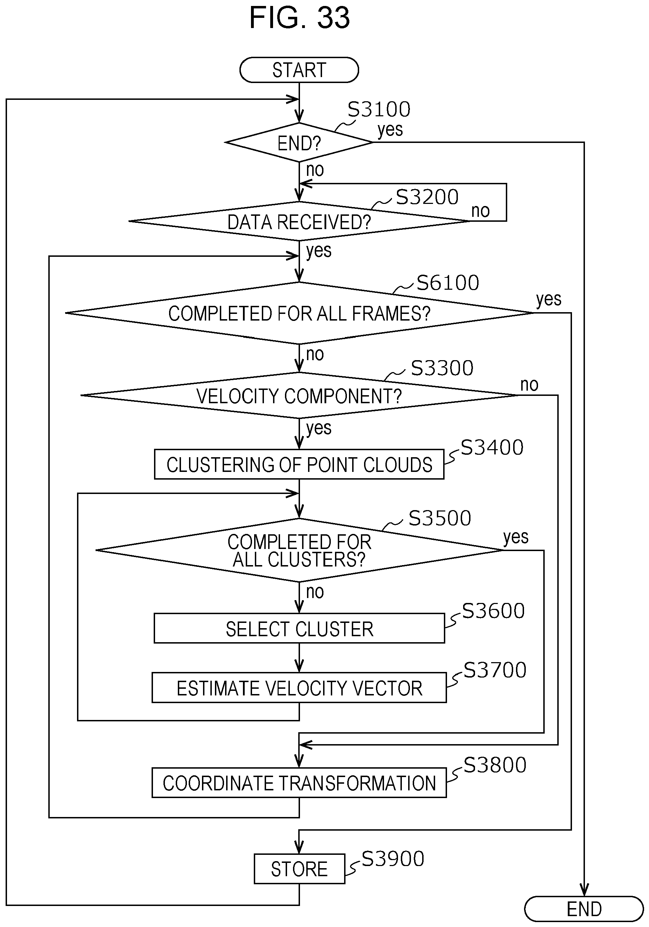

Fig. 33 is a flowchart illustrating an example of the operation of the processing device 530 in a case where the server 500 receives the data from the sensing device 100, as exemplified in Fig. 16 or 17. In this example, after data acquisition, the processing device 530 determines the format of the velocity information for each frame, rather than determining the format of the velocity information common to all data. The flowchart illustrated in Fig. 33 has step S6100 added between step S3200 and step S3300 in the flowchart illustrated in Fig. 30. Hereinafter, different points from the operations illustrated in Fig. 30 will be described.

(Step S6100)

When acquiring measurement data from the sensing device 100, the processing device 530 determines whether or not processing on each frame has been completed for all frames of the acquired measurement data. If there are unprocessed frames, processing advances to step S3300. If processing has been completed on all the frames, processing advances to step S3900.

The operations from step S3300 to Step S3900 are similar to the operations illustrated in Fig. 30. In the example illustrated in Fig. 33, after step S3800, processing returns to step S6100, and the processing from step S3300 to S3800 is performed on each frame until processing is complete for all the frames. When the processing is complete for all the frames, processing advances to step S3900, and data is recorded.

By repeating step S6100 to step S3800, the processing device 530 can process for each frame the velocity information of each point according to the format specified for each frame, convert it into point cloud data including information on the velocity vector expressed in the coordinate system of the server 500 for each data point, and record the point cloud data in association with the detailed time information.

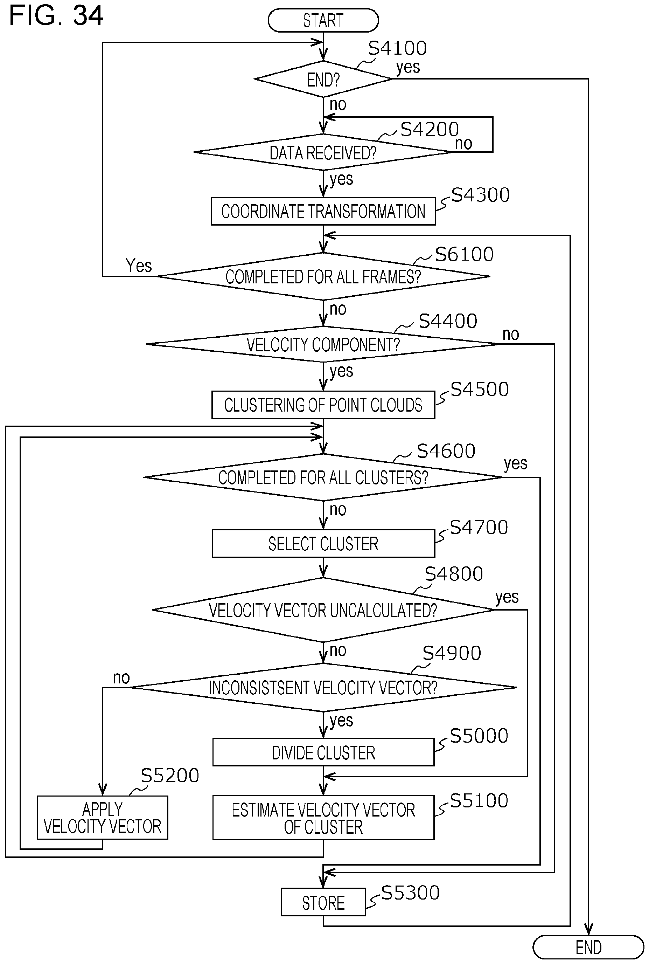

Fig. 34 is a flowchart indicating another example of the operations of the processing device 530. The flowchart illustrated in Fig. 34 is similar to the flowchart illustrated in Fig. 31, except that step S6100 is added between step S4300 and step S4400. Also in this example, similarly to the example of Fig. 33, after data acquisition, the processing device 530 determines the format of the velocity information for each frame, rather than determining the format of the velocity information common to all data. Hereinafter, different points from the example illustrated in Fig. 31 will be described.

(Step S6100)

After the coordinate transformation processing in step S4300, the processing device 530 determines whether or not processing for each frame has been completed for all the frames. If there are unprocessed frames, processing advances to step S4400. If processing has been complete for all the frames, processing returns to step S4100.

The operations from step S4400 to Step S5300 are similar to the operations illustrated in Fig. 31. In the example illustrated in Fig. 34, after step S5300, processing returns to step S6100. By repeating step S6100 to step S5300, the processing device 530 can process the velocity information of each point for each frame according to the format specified for each frame, convert it into point cloud data including the velocity vector information expressed in the coordinate system of the server 500 for each data point, and records the data in association with the detailed time information.

Next, a description will be given of an example of the operation in which the server 500 outputs information on road conditions at specific time and in a specific space, in response to input of an information request.

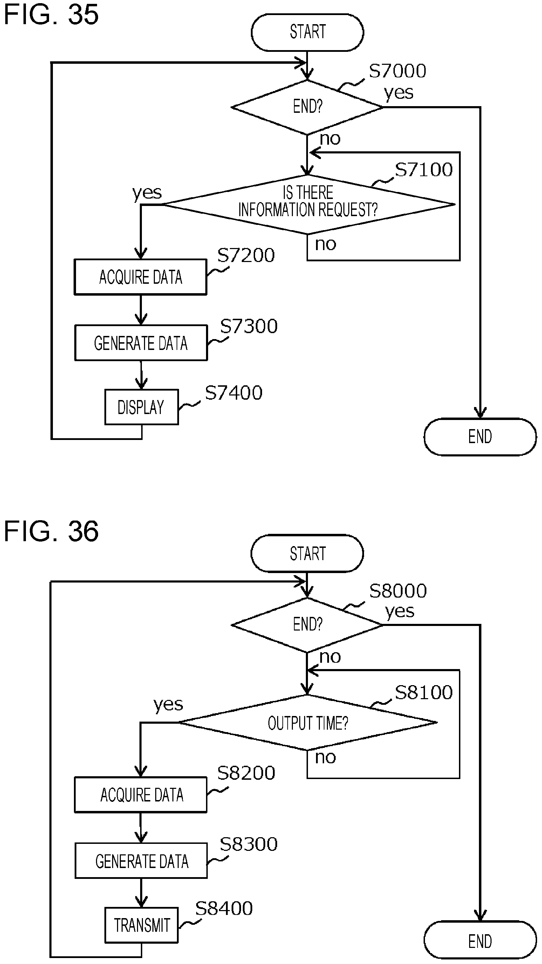

Fig. 35 is a flowchart illustrating an example of the operation of the server 500 outputting the information on the road conditions. The server 500 in this example performs the operations from step S7000 to S7400 illustrated in Fig. 35. Upon receipt of a start signal inputted from the input device 510, the server 500 starts operating. Hereinafter, the operation in each step will be described.

(Step S7000)

The processing device 530 determines whether or not an end signal has been inputted from the input device 510. If the end signal has been inputted, the server 500 ends its operation. If no end signal has been inputted, processing advances to step S7100.

(Step S7100)

The processing device 530 determines whether or not an information request signal has been inputted from the input device 510. If the information request signal has been inputted, processing advances to step S7200. If no information request signal has been inputted, step S7100 is repeated until the information request signal is inputted.

The information request signal is a signal that specifies a specific time range and a specific spatial range. The input device 510 may determine a time range, for example, using a method of setting a predefined fixed time width before and after a specific date and time specified by a user or the like. Alternatively, a time range may be determined according to start time and end time of the time range entered by the user or the like. A spatial range can be determined, for example, using a method of the user inputting latitude and longitude or entering an address as character strings, or the like, to specify a specific point and determine an area surrounding that point as a spatial range. Alternatively, a spatial range may be specified by the user specifying an area on a map.

(Step S7200)

Based on the time range and the spatial range indicated by the information request signal inputted in step S7100, the processing device 530 acquires data on points that are included in the time range in which the measured time has been inputted and that are included in the spatial range in which the position coordinates have been inputted, among the point cloud data recorded in the storage device 540.

(Step S7300)

The processing device 530 generates display data for three-dimensionally displaying the point cloud based on the positional information of each point in the data acquired in step S7200. For example, the processing device 530 may generate display data that three-dimensionally represents the velocity vector of each point in the data acquired in step S7200, as a vector having a starting point at the position of each point. Such display data represents distribution of physical objects and motion thereof in the specified time range and spatial range.

(Step S7400)

The processing device 530 outputs the display data generated in step S7300 to the output device 520 such as a display. The output device 520 displays an image indicating the three-dimensional distribution of the physical objects in a specific location based on the display data. When the specified time range is long, moving image data may be generated as display data. After the operation in step S7400, processing returns to step S7000.

In the example illustrated in Fig. 28, the server 500 includes the input device 510 and the output device 520, but the input device 510 and the output device 520 may be external elements of the server 500. As illustrated in Figs. 1 to 4, for example, the server 500 does not have to include the input device 510 and the output device 520.

Next, a description will be given of an example of an operation in which the server 500 in the system illustrated in Figs. 2 and 4 generates road information based on the data acquired from the plurality of sensing devices 100 in the plurality of fixed bodies 400, and transmits the information to the mobile object 300.

Fig. 36 is a flowchart illustrating an example of the operation in which the server 500 generates and transmits road information. The server 500 in this example performs the operations from step S8000 to S8400 illustrated in Fig. 36. Upon receipt of a start signal inputted from the input device 510, the server 500 starts operating. Hereinafter, the operation in each step will be described.

(Step S8000)

The processing device 530 determines whether or not an end signal has been inputted from the input device 510. If the end signal has been inputted, the server 500 ends its operation. If no end signal has been inputted, processing advances to step S8000.

(Step S8100)

The processing device 530 determines whether or not the current time is predefined transmission time of the road information. If the current time is the transmission time of the road information, processing advances to step S7200. If the current time is not the predefined transmission time of the road information, step S8100 is repeated until the transmission time is reached.

The server 500 may transmit the road information, for example, at fixed time intervals. In the environment illustrated in Fig. 2, the server 500 may transmit the road information at a relatively short time interval such as 0.1 second. In that case, the mobile object 300 on a vehicle approaching a junction point receives the road information transmitted at fixed time intervals. The road information may indicate distribution of physical objects existing in the road environment surrounding the mobile object 300 and distribution of traveling velocities of the physical object. By receiving such road information, the mobile object 300 can learn the road condition such as an area that becomes a blind spot on a road, for example, a confluent road when seen from a vehicle moving on the main road, or behind the main road as seen from a vehicle on the confluent road, or the like.

(Step S8200)

Based on the preset time range and the spatial range, the processing device 530 acquires data on points that are included in the time range in which the measured time has been inputted and that are included in the spatial range in which the position coordinates have been inputted, among the point cloud data recorded in the storage device 540. As the time range, for example, a range from 0.05 seconds before the current time till the current time may be set. As the spatial range, for example, an area including the main road and the confluent road within 100 m before the junction point may be set. As the time range and the spatial range, a range necessary for avoiding dangers may be defined by, for example, taking the road condition, in particular, the vehicle velocities and the road structure, into consideration.

(Step S8300)

The processing device 530 converts the data acquired in step S8200 into output data in the data format of the point cloud including the velocity information as exemplified in Figs. 14 to 17. The velocity information represents the velocity of the object at the data point, and the format ID of the velocity information describes an ID indicating the velocity vector of the object. Alternatively, the data does not have to include the format ID of the velocity information. The processing device 530 generates output data for transmission and causes the communication device 550 to transmit it.

Note that it is not necessary to convert all data points into output data in step S8300. When a spatial density of data points is larger than or equal to a certain density, the processing device 530 may reduce the number of data points and convert them into output data. The data points may be reduced according to the spatial density or based on the number of points in the cluster. If the data acquired from the sensing device 100 includes supplementary information such as likelihood or reliability of measurement results of the data point, data may be reduced based on the supplementary information of the data point.

(Step S8400)

The communication device 550 transmits the road information indicating the latest road condition generated in step S8300 to the mobile object 300. After the operation in step S8400, processing returns to step S8000.

By repeating the operations from step S8000 to S8400, the server 500 can periodically transmit the current road information and provide vehicles running on roads with blind spots such as the junction points with information on the conditions of the surrounding roads.

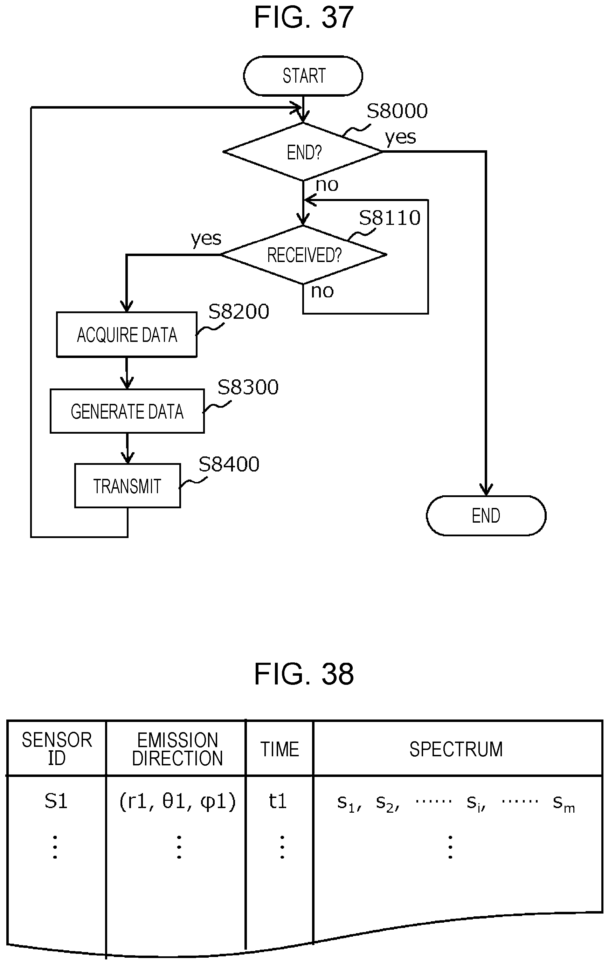

Fig. 37 is a flowchart illustrating another example of the operation in which the server 500 generates and transmits the road information. The flowchart illustrated in Fig. 37 is same as the flowchart illustrated in Fig. 36, except that the operation in the step S8100 illustrated in Fig. 36 is replaced with the operation in step S8110. Therefore, only the operation in step S8110 will be described.

(Step S8110)

The processing device 530 determines whether or not the communication device 550 has received data including valid point cloud information from the one or more sensing devices 100. If the communication device 550 has not received the valid data from the sensing devices 100 at the time immediately before the current time, step S8110 is repeated till the valid data is received. If the communication device 550 has received the valid data from the sensing devices 100 at the time immediately before the current time, processing advances to step S8200.

In a system that monitors blind spots on roads as in the example of Fig. 2, the sensing device 100 generates valid point cloud data when the mobile objects 300 such as vehicles are present on roads. Reception of the valid point cloud data by the server 500 indicates presence of the mobile objects such as vehicles in the area to be monitored or in its neighborhood. By transmitting information on the road condition when the communication device 550 receives the valid data, the server 500 can efficiently transmit the information indicating the road condition to the mobile objects 300 such as vehicles approaching an area with a blind spot such as a road junction point.

[1-6. Effects, etc.]

As described above, the sensing device 100 in the present embodiment outputs the information on the position, the detailed time, and the velocity of each data point, as the output data. The velocity related information represents the relative velocity vector of the data point with respect to the sensor 200 that performed ranging of that data point, or the relative velocity vector component indicating the component of the relative velocity vector of the data point in the direction along the straight line connecting the sensor 200 and the data point. The relative velocity vector and the relative velocity vector component may both be expressed as the vectors in the coordinate system set in the sensing device 100. Note that the relative velocity vector component may be expressed as a scalar representing its magnitude. If the positional information of the data point and the information on the reference position (that is, the coordinate origin) of the sensing device 100 are known, the relative velocity vector component as a vector can be calculated from the information on the magnitude of the relative velocity vector component. The sensing device 100 generates and outputs the output data including, as the identification information, the code representing the format of the velocity that indicates whether the velocity information of each data point included in the output data is the relative velocity vector or the relative velocity vector component. Such a code being included in the output data, the server 500 that receives the output data can discriminate the type of the velocity information accompanying the point cloud data, based on the code. The server 500 performs different processing according to the type of the discriminated velocity information. For example, when the velocity information represents the relative velocity vector component, the server 500 performs processing to transform the relative velocity vector component of each point into the actual velocity vector expressed in the coordinate system of the server 500. Such processing can facilitate the integration of the output data even if the output data with different velocity expression formats is acquired in many batches from the one or more sensing device 100.

Note that the sensing device 100 may be mounted not only in the fixed bodies 400 but also in the mobile objects 300 such as vehicles equipped with, for example, self-driving capability. In that case, velocity information of the point cloud acquired by the sensing device 100 is influenced by the traveling velocity of the mobile objects 300. Therefore, the processing circuit 110 of the sensing device 100 in the mobile object 300 may acquire the information on the position and a traveling velocity vector of the mobile object 300 from the controller 320 of the mobile object 300, include the information in the output data, and output the data. In that case, in the data formats exemplified in Figs. 14 to 17, for each frame, the positional information of the mobile object 300 may be written in three bytes, for example, and the information on the traveling velocity vector may be written in three bytes, for example. The server 500 acquires the point cloud data with the velocity information from the sensing device 100 of the mobile object 300, and determines the position and the direction of the sensing device 100 based on the information on the position and the traveling velocity of the mobile object 300, thereby being able to perform the coordinate transformation of the position and the velocity in the point cloud data acquired from the sensing device 100. Utilizing the information on the traveling velocity of the mobile object 300, the server 500 can further estimate the actual velocity vector expressed in the coordinate system of the server 500 from the information on the relative velocity of each data point in the data acquired from the sensing device 100 mounted on the mobile object 300.

In the present embodiment, the sensing device 100 performs measurements at any timing without receiving instructions from the server 500, determines the type of the velocity information, generates data, and transmits the data. At this time, the sensing device 100 may determine the type of the velocity information to be transmitted to the server 500, according to changes in the communication rate with the server 500. Instead of such an operation, the sensing device 100 may perform measurements based on instructions from the server 500. Alternatively, the sensing device 100 may generate data to be transmitted to the server 500 based on the specification of the type of the velocity information from the server 500. The server 500 may transmit different signals such as a signal instructing to start measurement, a signal specifying frequency of measurements, or a signal specifying a type of velocity information, depending on contents of the instruction to the sensing device 100.

In the present embodiment, the sensing device 100 and the server 500 in the system communicate via the network 600, but the communication does not necessarily have to go through the network 600. For example, the sensing device 100 and the server 500 may be connected through communications within a system separated from other communication networks. For example, a system may be configured in which a control circuit that controls operations of mobile objects and one or more sensing devices communicate via a communication network within the system, and the control circuit monitors the situations surrounding the mobile object. In addition, the technology of the present embodiment may be applied to a system that constantly monitors a certain spatial area, such as a security system, or a monitoring system for nursing care facilities or hospitals. Such systems may be such configured that a circuit controlling operations such as warning or calling and one or more sensing devices can communicate through a communication network within the system, rather than going through an external network.

The various modification examples described above may be applied not only to the present embodiment but also to respective embodiments to be described below.

(Embodiment 2)

Next, a second embodiment of the present disclosure will be described.

A sensing device in the present embodiment outputs information indicating an emission direction of light and a spectrum of interference light, instead of outputting the velocity information of the point cloud. A server that receives data from the sensing device 100 calculates a distance and a velocity of an object from the light emission direction and information on the spectrum of the interference light, and can generate the point cloud data including the velocity information of each point. Hereinafter, different points from Embodiment 1 will be mainly described.

A physical configuration of the sensing device 100 in the present embodiment is similar to the configuration illustrated in Fig. 7. In the present embodiment, however, each sensor 200 outputs information indicating the light emission direction and the spectrum of detected interference light, rather than outputting the information on the position and the velocity of each data point. The processing circuit 240 of each sensor 200 generates spectrum information of the interference light based on a detection signal outputted from the photodetector 230 and generates measurement data including the spectrum information. The spectrum information includes information on the power spectrum of the detection signal or the peak frequency of the power spectrum. Based on the information indicating the emission direction of light outputted from the sensor 200, the processing circuit 110 converts the information on the emission direction into information on a vector expressed in the coordinate system of the sensing device 100 and generates output data for transmission including information on the converted emission direction and information on the corresponding spectrum. The storage device 130 stores the light emission direction, the spectrum information corresponding to the emission direction, and a fixed value of the sensing device 100. The communication circuit 120 transmits the data for transmission generated by the processing circuit 110.

[2-1. Operation of Sensing Device]

Operations of the sensing device 100 in the present embodiment are similar to the operations illustrated in Fig. 26. In the present embodiment, however, the format of each of the data recorded in step S1400 and the data generated in step S1910 differ from the example of Fig. 26. Hereinafter, different points from the example of Fig. 26 will be described.

(Step S1400)

The processing circuit 110 acquires the information on the light emission direction and the spectrum information from the sensor 200. The spectrum information is information indicating a result of frequency analysis of interference light generated by the interference optical system 220 illustrated in Fig. 8. The spectrum information may be, for example, information on the power spectrum indicating signal energy of each frequency. The spectrum information is generated, for example, by the processing circuit 240 of the sensor 200 performing a fast Fourier transformation on a detection signal. The processing circuit 110 of the sensing device 100 transmits, to the storage device 130, the spectrum information outputted from the sensor 200, information indicating the sensor 200 that generates the spectrum information, information indicating a laser light emission direction, and information indicating data acquisition time. The storage device 130 stores the information.

By repeating the operations from step S1200 to step S1400, the sensing device 100 stores the information indicating the light emission direction acquired by one or more sensors 200 in a predetermined frame period and the corresponding spectrum information.

Fig. 38 is a diagram illustrating an example of information recorded in the storage device 130. In the example of Fig. 38, a sensor ID that is an identification number of the sensor 200, an emission direction of a laser light emitted from the sensor 200, measurement time, and the spectrum information of the interference light are associated with each other and recorded. The emission direction may be converted into an expression in a specific coordinate system set in the sensing device 100 and recorded, for example. The spectrum information may be, for example, information indicating a power spectrum obtained by fast Fourier transforming the detection signal of the interference light, that is a value of the intensity of each frequency.

(Step S1910)

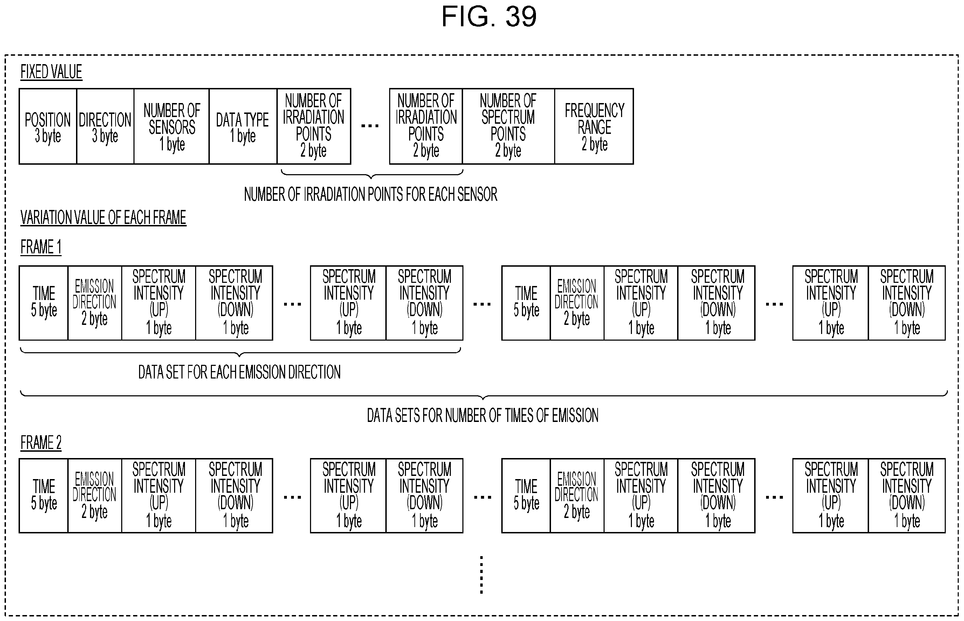

The processing circuit 110 generates output data of the frame. The processing circuit 110 generates output data according to the data format illustrated in Fig. 39, for example.

Fig. 39 illustrates an example of output data. The output data illustrated in Fig. 39 includes a fixed value and data for each frame. The fixed value may be outputted only at the beginning or end of a data string, for example. Alternatively, the fixed value may be outputted, for example, once every predefined fixed period of time or a fixed number of frames. Similarly to the example illustrated in Fig. 14, the fixed value includes information on a position of the sensing device 100, a direction of the sensing device 100, the number of sensors included in the sensing device 100, a code indicating a type of data included in the output data, the number of irradiation points of each sensor, the number of spectrum bands, and frequency range. In the example of Fig. 39, the data type is expressed in one byte, and the spectrum information obtained from the frequency analysis of interference light, that is, information on signal intensity of each frequency is indicated as the measurement result.

Data of normal frames describes data that varies from frame to frame. In this example, the processing circuit 110 generates output data including the measurement time for each emission direction, the laser light emission direction, and the spectrum information, by referring to the data recorded in the storage device 130 exemplified in Fig. 38.

In the example illustrated in Fig. 39, the spectrum information is expressed in a format in which the signal intensities of each frequency band that is obtained from the frequency analysis on the interference light is sequentially arranged over a plurality of bands. In Fig. 39, the signal intensity of each frequency band is expressed as "spectrum intensity". The signal intensity of each frequency band may be recorded and outputted for each of up-chirp and down-chirp of an interference wave. Instead of such an expression format, the processing circuit 110 may, for example, output only the intensities of frequency bands whose signal intensities are equal to or larger than a certain value among the analyzed frequency bands. Alternatively, the processing circuit 110 may output, as the spectrum information, only information on frequency that takes a peak value having the signal intensity equal to or larger than the certain value and the signal intensity of that frequency among the analyzed frequency bands.

As data outputted for each frame, in the example of Fig. 39, data for each laser light emission direction in the frame is outputted. For example, the detailed time information indicating of irradiation time of laser light may be indicated in five bytes, for example, and the laser light emission direction (for example, two-dimensional information of an elevation angle or an azimuth angle) may be indicated in two bytes. Then, each of the spectrum intensity in up-chirp and the spectrum intensity in down-chirp may be expressed on a byte basis, for example, for the number of spectrum analysis points written as fixed values. A value of the spectrum intensity is written by twice the number of the spectrum analysis points. With such a format, data on the time, the emission direction, and the spectrum intensity in up-chirp and down-chirp is outputted every time the laser light is emitted. A series of data for each laser light emission is repeated for the number of times of laser light emissions within the frame. In this manner, based on the data acquired by measuring each frame, the processing circuit 110 generates, as data for communication, output data for which information on the power spectrum in each of up-chirp and down-chirp, the information being obtained by the frequency analysis of the interference light, is associated with the laser light emission direction and the measurement time.

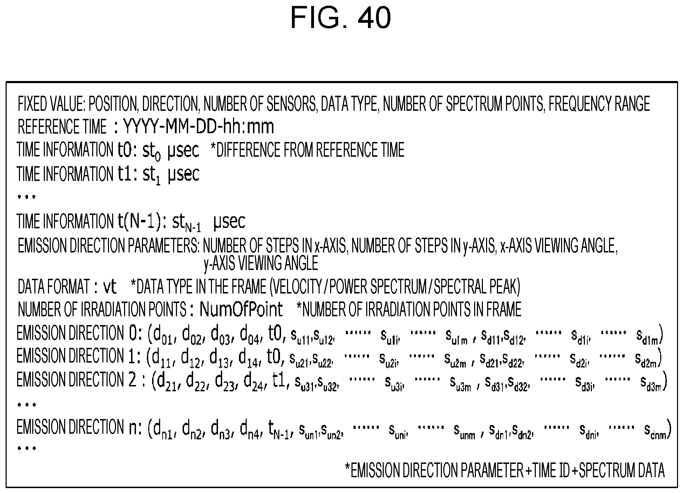

The processing circuit 110 may generate output data, for example, in the format illustrated in Fig. 40, instead of the format illustrated in Fig. 39.

Fig. 40 is a diagram illustrating an example of output data in XML format. In the example of Fig. 40, a fixed value is written at the beginning of the data. In the example of Fig. 40, the fixed value includes information indicating a position of the sensing device 100, an orientation of the sensing device 100, the number of sensors included in the sensing device 100, a code indicating a type of data to be transmitted in each frame, the number of data points in the spectrum, and the frequency range. In the example of Fig. 40, for the data type, a code indicating that the spectrum information, not the velocity information, is included is written. The fixed value is followed by the reference time, written as common information in the frame, similarly to the example illustrated in Fig. 16. Following the reference time, a list of IDs of the time information set for each irradiation time of the laser light is written. Collectively writing the time information in this manner makes it possible to compress a volume of data as compared with storing the detailed time of each laser light irradiation in association with all data. Furthermore, a parameter that controls the laser light emission direction is written as the common data within the frame. This parameter includes information on the number of steps in the x-axis direction, the number of steps in the y-axis direction, a viewing angle in the x-axis direction, and a viewing angle in the y-axis direction in the coordinate system (x-y coordinate system) of the sensing device 100. By including such a parameter in the output data, the server 500 can determine the emission direction based on a sequence of laser light emissions. In the example of Fig. 40, a code indicating a data format of velocity of spectrum is further written. In this example, as data of the power spectrum obtained from the frequency analysis before velocity calculation is transmitted, a code indicating the power spectrum is written. Furthermore, a total number of laser light emission directions within the frame is written as the number of irradiation points. Subsequently, for each laser light emission direction, data on the parameter indicating the emission direction, the detailed time information, and the spectrum information is written. In the example of Fig. 40, information on the power spectrum in up-chirp and the power spectrum in down-chirp is written as the spectrum information.

In the examples illustrated in Figs. 39 and 40, the output data includes information on the power spectrum obtained by the frequency analysis. Instead of such a format, the processing circuit 110 may generate output data including, as the spectrum information, information only on the peak frequency of a frequency having a signal intensity larger than or equal to a predefined threshold and its signal intensity.

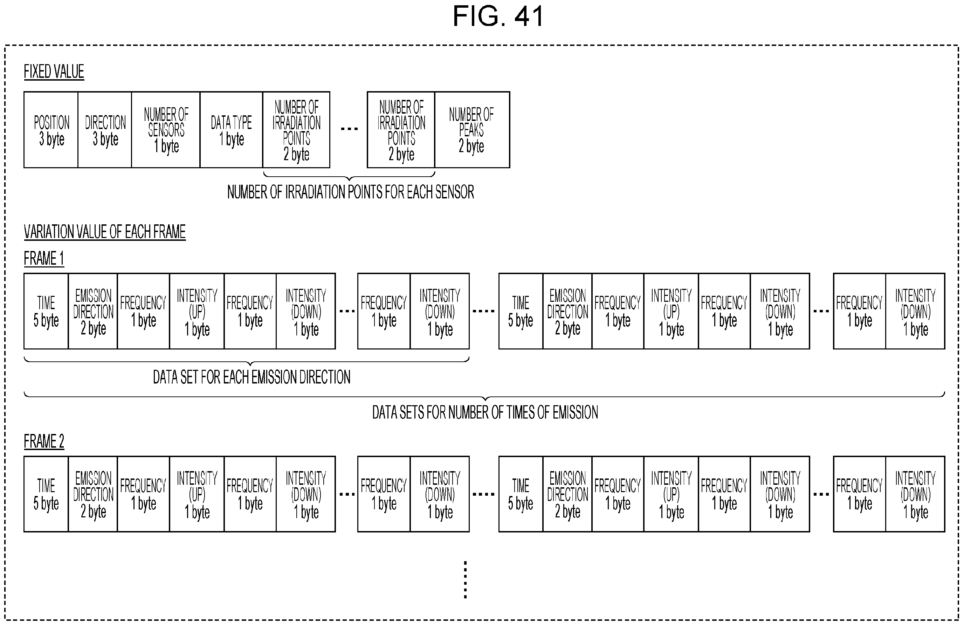

Fig. 41 is a diagram illustrating an example of output data that includes information on the peak frequency and its intensity as the spectrum information. In this example, intensities of one or more peak frequencies whose intensities exceed a predefined threshold are transmitted as the spectrum information, rather than all the intensities of spectra obtained by the frequency analysis. The processing circuit 110 selects a predefined number of spectral peaks, for example, in descending order of peak values. In the example of Fig. 41, as the fixed value common to the frame, the position of the sensing device 100, the orientation of the sensing device 100, and the number of sensors included in the sensing device 100 are written. Furthermore, the type of output data, the number of irradiation points in one frame, and the number of spectral peaks transmitted as measurement data are written.

As data for each frame, for example, for each emission direction, information on detailed irradiation time may be written in five bytes, the irradiation direction may be written in two bytes, the spectral peak frequency may be written in one byte, and the signal intensity at that frequency may be written in one byte. A set of the frequency and the signal intensity is repeated for the number of spectral peaks written as the fixed value, for each of up-chirp and down-chirp. A data string of the set of the frequency and the signal intensity for the number of peaks is repeated for the number of irradiation points written in the fixed value, and one frame of data is written.

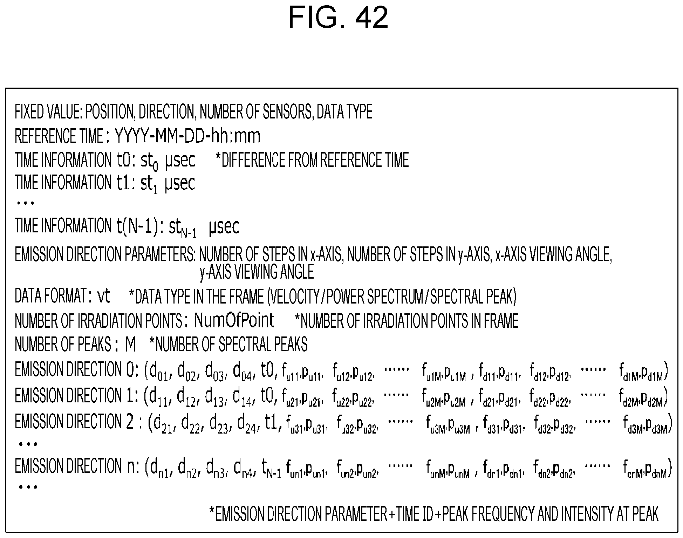

Fig. 42 is a diagram illustrating an example of output data in XML format that includes the peak frequency and information on its intensity as the spectrum information. In this example, the position of the sensing device 100, the orientation of the sensing device 100, the number of sensors 200 included in the sensing device 100, and the type of measurement data are written as the fixed values common to the frame. As information common to the data in the frame, for each frame, the reference time, a time information ID of indicating the detailed time, the parameter determining the laser light emission direction, the code indicating the data format for velocity calculation, the number of laser light irradiation points, and the number of spectral peaks to be transmitted are written. Following the information common to these frames, a parameter indicating the emission direction in each irradiation, the time ID, the peak frequency in each of up-chirp and down-chirp, and the signal intensity at its frequency are written, for all laser light irradiated in the frame.

[2-2. Operation of Server]

Next, the operations of the server 500 in the present embodiment will be described. In the present embodiment, the server 500 may receive, from the sensing device 100, output data including the positional information and the velocity information of the point cloud but also output data including the spectrum information for calculating a distance and a velocity. For example, the server 500 may receive, from the sensing device 100, output data including the spectrum information on the interference waves detected in each of the up-chirp period and the down-chirp period, the information being acquired by an FMCW sensor. Therefore, the server 500 performs different signal processing depending on a type of received data, according to the code indicating the data type included in the output data.

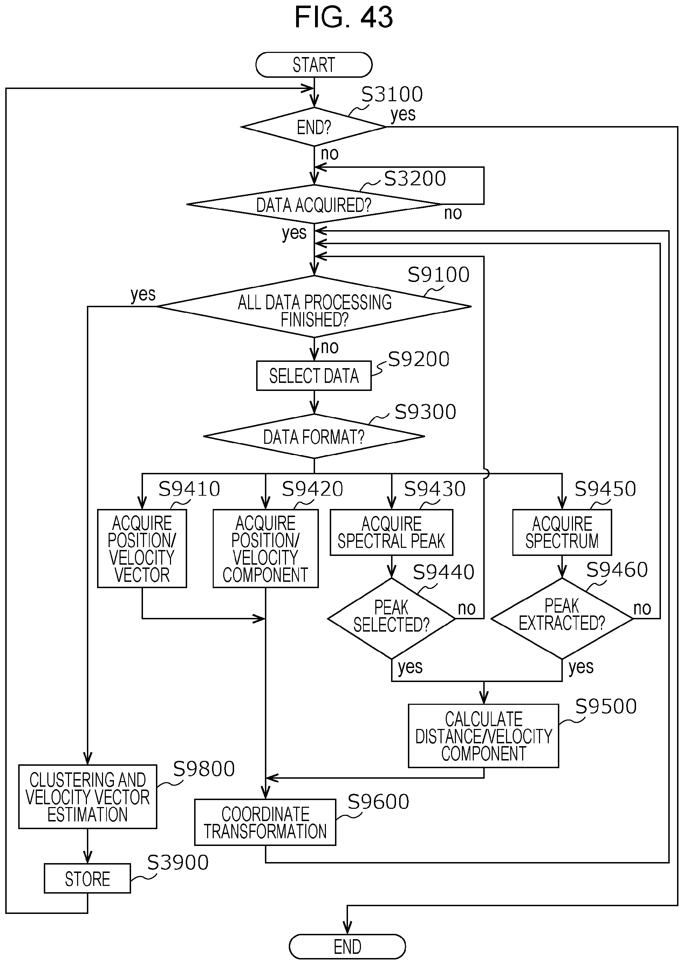

Fig. 43 is a flowchart illustrating an example of the operation of the server 500. In this flowchart, steps S3100, S3200, and S3900 are similar to the operations in the corresponding steps in Fig. 30. Hereinafter, different points from the operations in Fig. 30 will be described.

When the processing device 530 of the server 500 acquires data from any sensing device 100 within a certain frame period in step S3200, processing advances to step S9100.

(Step S9100)

The processing device 530 determines whether or not the generation processing of the point cloud data including the information on the velocity expressed in the coordinate system of the server 500 (that is, the relative velocity vector or the relative velocity component) has been finished, for all of the information on the position and the velocity of the point cloud received from the one or more sensing device 100 in step S3200 or the spectrum information for calculating the position and the velocity of the point cloud. When the generation processing of the point cloud data has been completed for all the data, processing advances to step S9800. When there remains unprocessed data, processing advances to step S9200.

(Step S9200)

The processing device 530 selects one piece of data for which processing has not been performed, among the data acquired in step S3200. The data selected here is data corresponding to one data point in the point cloud.

(Step S9300)

The processing device 530 discriminates the format of the data acquired in step S3200. The processing device 530 discriminates the format of the data based on the code indicating the type or format of the data included in the fixed value or information for each frame in the acquired data. In the example of Fig. 43, there are the following four types of data formats.

A first format is a format of the point cloud data including the information on the relative velocity vector of each data point with respect to the sensing device 100. The data in the first format may be written in any of the formats in Figs. 14 to 17, for example. When the data format is the first format, processing advances to step S9410.

A second format is data including the information on the component of the relative velocity vector of each data point with the respect to the sensing device 100 along the straight line connecting the sensing device 100 and the data point. The data in the second format may be written in the format illustrated in Fig. 14 or 16, for example. When the data format is the second format, processing advances to step S9420.

A third format is a format including the information on the emission direction of laser light emitted for measurement, and the information on the spectral peak of interference light obtained when the laser light is emitted. The data in the third format may be written in the format illustrated in Fig. 41 or 42, for example. When the data format is the third format, processing advances to step S9430.

A fourth format includes the information on the emission direction of laser light emitted for measurement, and the information on the power spectrum calculated by the frequency analysis of the interference light obtained when the laser light is emitted. The data in the fourth format may be written in the format illustrated in Fig. 41 or 42, for example. When the data format is the fourth format, processing advances to step S9450.

(Step S9410)

When the data format is the first format, the processing device 530 extracts, from the acquired data, information on the measurement time, the position, and the relative velocity vector of the data point.

(Step S9420)

When the data format is the second format, the processing device 530 extracts, from the acquired data, information on the measurement time, the position, and the relative velocity component vector of the data point.

(Step S9430)

When the data format is the third format, the processing device 530 extracts data on the spectral peaks in each of up-chirp and down-chirp from the acquired data.

(Step S9440)

The processing device 530 determines whether or not there is a peak exceeding a predefined threshold of the spectral peaks of each in up-chirp and down-chirp. If there is the corresponding peak both in the up-chirp and the down-chirp, processing advances to step S9500. If there is no peak exceeding the predefined threshold in at least one of the up-chirp and the down-chirp, processing returns to step S9100. If no spectral peak can be identified, there is a possibility that the sensor 200 of the sensing device 100 could not acquire a data point because no interference due to reflected light occurred in that emission direction. In such a case, processing does not proceed to subsequent processing and returns to step S9100.

(Step S9450)

When the data format is the fourth format, the processing device 530 extracts data on the power spectrum in each of the up-chirp or the down-chirp from the acquired data.

(Step S9460)

The processing device 530 determines from the data on the power spectrum in each of the up-chirp and the down-chirp whether or not there is any peak exceeding the predefined threshold. If there are corresponding peaks both in the up-chirp and the down-chirp, processing advances to step S9500. If there is not the peak exceeding the predefined threshold in at least one of the up-chirp and the down-chirp, processing returns to step S9100.

(Step S9500)

Based on the spectral peak value selected or extracted in step S9440 or step S9460, the processing device 530 calculates a distance to the data point and a relative velocity component of the data point in the direction along the straight line connecting the sensor and the data point. Here, if there is a plurality of valid spectral peaks in either each of the up-chirp and the down-chirp, or both of the up-chirp and the down-chirp, the processing device 530 selects one spectral peak for each of the up-chirp and the down-chirp. As a selection method, there is, for example, a method of selecting a peak with the maximum signal intensity for each of the up-chirp and the down-chirp. In addition to the method of selecting the peak with the maximum signal intensity, another method is, for example, to select a peak in a specific frequency band, or the like. The processing device 530 calculates the distance from the sensor to the data point and the velocity with the method described with reference to Figs. 10 and 11, according to the peak frequency selected for each of the up-chirp and the down-chirp. The processing device 530 can generate positional information of the data point based on the calculated distance and the information on the laser light emission direction. The velocity calculated based on the peak frequency of each of the up-chirp and the down-chirp is the component vector of the relative velocity between the sensing device 100 and the object corresponding to the data point for which the positional information is generated, the component vector being in the direction that matches the laser emission direction. The positional information and the velocity information of the data point that are generated in step S9500 have a format similar to the data discriminated as the second format in step S9300.

(Step S9600)

The processing device 530 transforms the positional information and the velocity information of the data point from the coordinate system of the sensing device 100 to the coordinate system of the server 500, and records the converted data in the storage device 540. After step S9600, processing returns to step S9100.
By repeating the operations from step S9100 to step S9600, the processing device 530 can generate and record point cloud data including the positional information and the velocity information of each point, irrespective of the format of the data in the frame.

(Step S9800)

When the coordinate transformation processing is finished for all the data points in the frame, the processing device 530 performs the clustering processing and the velocity vector estimation processing. With the processing described above, the positional information and the velocity information is recorded in the storage device 540, for all the data points in the frame. However, for data processed through step S9410, information on the actual relative velocity vector with respect to the sensing device 100 is recorded as the velocity information of each point. On the other hand, for data processed through steps S9420, S9430 and S9450, the information on the relative velocity component vector is recorded as the velocity information of each point. The processing device 530 performs the clustering processing to integrate the point cloud data that may have different types of velocity information, and estimates velocity vectors of the physical object corresponding to each data point. The processing here is similar to, for example, the processing from steps S3400 to S3700 in Figs. 30 and 33 or the processing from steps S4500 to S5100 and S5200 in Figs. 31 and 34.

(Step S3900)

The processing device 530 causes the storage device 540 to store the positional information and the velocity vector information of each data point estimated in step S9800.
By repeating the processing from step S3100 to step S3900 illustrated in Fig. 43, the server 500 can acquire data from one or more sensing devices 100 and record the velocity information for each data point in the coordinate system of the server 500 together with the detailed time information. According to the present embodiment, even if data transmitted from each sensing device 100 is the point cloud data with the velocity information or data including the spectrum information for generating the point cloud data, the data can be converted to point cloud data having the velocity vector information expressed in the coordinate system of the server 500 and be recorded. Furthermore, the server 500 can transmit data representing the environmental situation in a specific time range or a specific spatial range to the mobile objects 300 such as vehicles, based on the generated point cloud data.

(Embodiment 3)

Next, a third embodiment of the present disclosure will be described.
In the present embodiment, the sensing device 100 is mounted on the mobile object 300. The server 500 specifies a type of data to be generated by the sensing device 100, depending on the environmental situation in which the mobile object 300 operates. The sensing device 100 generates data according to the type of data specified by the server and transmits the data. This can cause the sensing device 100 to output data including the spectrum information of interference light that can be analyzed in detail, for example, when the server 500 needs detailed information in the environment. Hereinafter, different points from Embodiments 1 and 2 will be described.

[3-1. System Configuration]

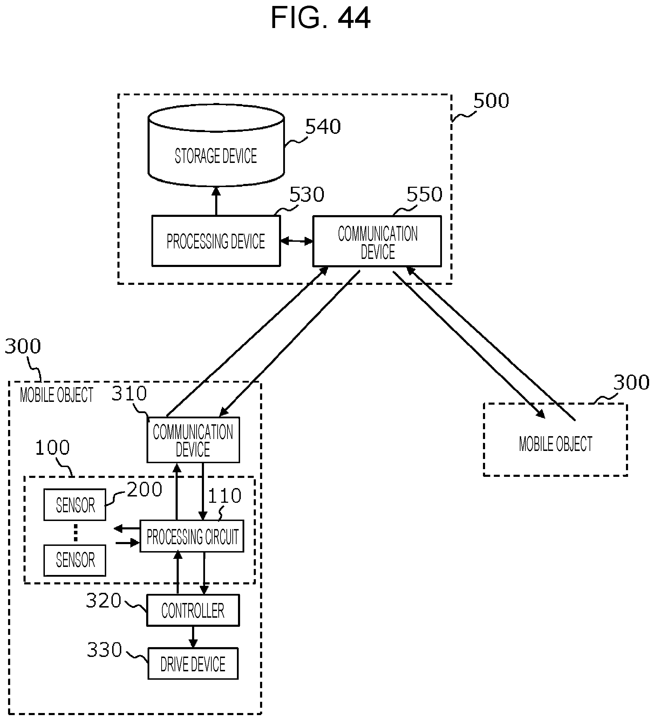

Fig. 44 is a block diagram illustrating a configuration example of a system including the server 500 and the mobile object 300 including the sensing device 100 in the present embodiment. The configuration of the server 500 is similar to the configuration illustrated in Fig. 4, for example. The mobile object 300 includes the sensing device 100, the communication device 310, the controller 320, and the drive device 330. The sensing device 100 includes one or more sensors 200 and the processing circuit 110. Note that the number of the sensor 200 included in the sensing device 100 is arbitrary and may be singular.

[3-2. Configuration of Mobile Object]

A configuration of the sensor 200 included in the sensing device 100 is similar to the configuration of the sensor 200 in Embodiments 1 and 2. As illustrated in, for example, Fig. 4, the sensor 200 includes the light source 210, the interference optical system 220, the photodetector 230, the processing circuit 240, and the clocking circuit 250. Frequency modulated light outputted from the light source 210 is divided to reference light and output light by the interference optical system 220. The interference optical system 220 generates interference light between the reference light and reflected light generated by the output light being reflected by a physical object, and cases the interference light to enter the photodetector 230. The photodetector 230 detects the interference light and outputs a detection signal according to intensity of the interference light. The processing circuit 240 analyzes the frequency of the interference light, calculates time till it takes for the output light to be reflected by the object and return as the reflected light, and determines a distance to the object. The processing circuit 240 also calculates the vector of the velocity component of the relative velocity between the sensor 200 and the object, the velocity component being a component parallel to the emitted light, based on a difference between the frequency of the interference light in up-chirp of the frequency modulation and the frequency of the interference light in down-chirp. Note that the processing circuit 240 may generate the spectrum information obtained by Fourier transforming the detection signal, instead of calculating the distance and the velocity component, similarly to Embodiment 2.

The communication device 310 transmits, to the server 500, data including information on the distance and the velocity measured by the sensing device 100 or the spectrum information for calculating the distance and the velocity. The communication device 310 also receives a request signal specifying a format of the data transmitted from the server 500.

The processing circuit 110 processes the information on the distance and the velocity outputted from the one or more sensors 200 or the spectrum information for calculating the distance and the velocity and generates output data including the information on the distance or the position and the velocity of the object or the spectrum information that may generate the information. The output data is transmitted to the server 500 by the communication device 310. The processing circuit 110 determines a measurement operation of the sensor 200 according to the request signal that the communication device 310 acquires from the server 500 and generates a control signal for controlling the sensors 200.

The controller 320 may be a device, such as an electronic control unit (ECU), that includes a processor and a memory. The controller 320 determines the mobile object's 300 own position, direction, and course, based on map information, the map information being recorded in advance in a storage device and indicating the road environment, and the information on the distance or the position and the velocity of the object, the information being generated by the processing circuit 110. The controller 320 generates a control signal for controlling the drive device 330 based on those pieces of information. The controller 320 may also transmit, to the processing circuit 110, the control signal to the drive device 330. Based on the control signal from the controller 320, the processing circuit 110 can acquire information on the operation of the mobile object 300, such as a traveling direction, a traveling velocity, and acceleration.

The drive device 330 may include various devices used in movement of the mobile object 300, such as wheels, an engine or an electric motor, a transmission, or a power steering device. The drive device 330 operates based on a control signal outputted from the controller 320, and causes the mobile object 300 to perform operations such as accelerating, decelerating, turning to the right, turning to the left, or the like.

[3-3. Operation]

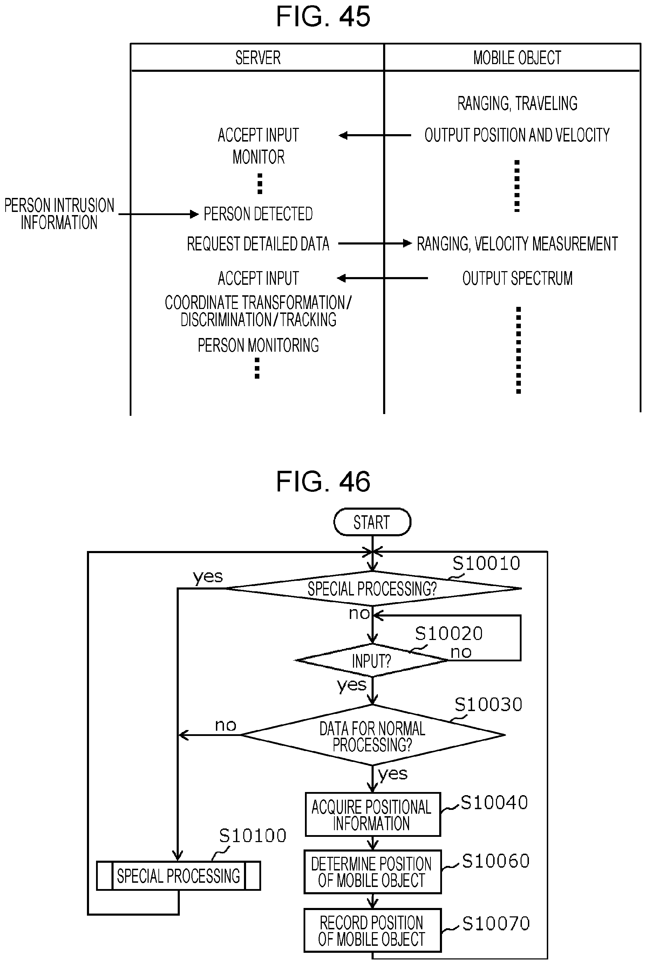

Fig. 45 is a diagram illustrating communication between the server 500 and the mobile object 300, and an example of processing flow therebetween in chronological order. The mobile object 300 runs while performing ranging using the sensing device 100. The communication device 310 of the mobile object 300 transmits, to the server 500, measurement data including a distance or a position of each reflecting point and the velocity information, for example, at fixed time intervals. The server 500 generates point cloud data including the velocity information with the method described in Embodiment 1, based on the data acquired from the mobile object 300.

During normal operation, the server 500 may receive a notice from an external device indicating that abnormality has occurred in an environment in which the mobile object 300 runs. The notice may be a notice of, for example, entry of a person into an operating area of the mobile object 300. For example, when it is known in advance that a worker will enter for road inspection or construction, a notice may be transmitted from the external device to the server 500. The server 500 can request one or more mobile objects 300 to transmit detailed information that allows for analysis of detailed positional information and velocity information, in order to acquire detailed information on the intruder. The detailed information is used to estimate a position and a velocity of a physical object in the environment with higher accuracy than the positional and velocity information generated by the sensing device 100. The detailed information may be, for example, measurement data in a format that includes the spectrum information described in Embodiment 2.

The mobile object 300 transmits, to the server 500, the spectrum information that may generate the detailed positional information and velocity information, according to the request from the server 500.

The server 500 receives the spectrum data transmitted by the mobile object 300, calculates the distance and the velocity from the spectrum data, and monitors the intruder through the coordinate transformation into the coordinate system of the server 500, as well as discrimination processing on point cloud data, tracking processing, or the like.

[3-3-1. Operation of Server]

Fig. 46 is a flowchart illustrating an example of the operation of the server 500 in the present embodiment. The server 500 in this example performs the operations from steps S10010 to S10100 illustrated in Fig. 46. Upon receipt of a start signal inputted from an input device, the server 500 starts operating. In the following, the operation in each step will be described.

(Step S10010)

The processing device 530 determines whether or not there is a request to perform special processing different from normal operations, for example, processing different from normal operation, due to intrusion of a person, or the like, for example. If there is a request for special processing, processing advances to step S10100. If there is no instruction for special processing, processing advances to step S10020.

(Step S10020)

The processing device 530 determines whether or not the communication device 550 has received data from the mobile object 300. If the data is received from the mobile object 300, processing advances to step S10030. If no data is received from the mobile object 300, step S10020 is repeated.

(Step S10030)

When the data is received in step S10020, the processing device 530 determines whether or not the format of the received data is a data format for normal processing. The data format for normal processing may be a format including information on the position of the object. The information on the position may be information indicating a distance between the sensing device 100 and the object. If the format of the received data is the data format for normal processing, processing advances to step S10040. If the format of the received data is not the data format for normal processing, that is, when it is a data format for detailed analysis, processing advances to the special processing in step S10100.

The data format for normal processing may be, for example, the format illustrated in any of Figs. 14 to 17. In addition to the information illustrated in any of Figs. 14 to 17, a code indicating that it is the data format for normal processing may be written at the beginning of the data or at the beginning of data in each frame.

The data format for detailed analysis may be, for example, the format illustrated in any of Figs. 39 to 42. The data format for detailed analysis includes the spectrum information of interference waves, and may be a format that does not include information on the position of the object. In addition to the information illustrated in any of Figs. 39 to 42, a code indicating that it is the data format for detailed analysis may be written at the beginning of the data or at the beginning of data in each frame.

(Step S10040)

The processing device 530 acquires the positional information from the data received in step S10020.

(Step S10060)

The processing device 530 performs checking of the point cloud data generated based on the positional information acquired in step S10040 against the map data recorded in the storage device 540 to determine the position of the mobile object 300.

(Step S10070)

The processing device 530 records the position of the mobile object 300 and the data acquisition time determined in step S10070, in the storage device 540.

After the operation in step S10070, processing returns to step S10010.

(Step S10100)

Next, an example of special processing of step S10100 will be described.

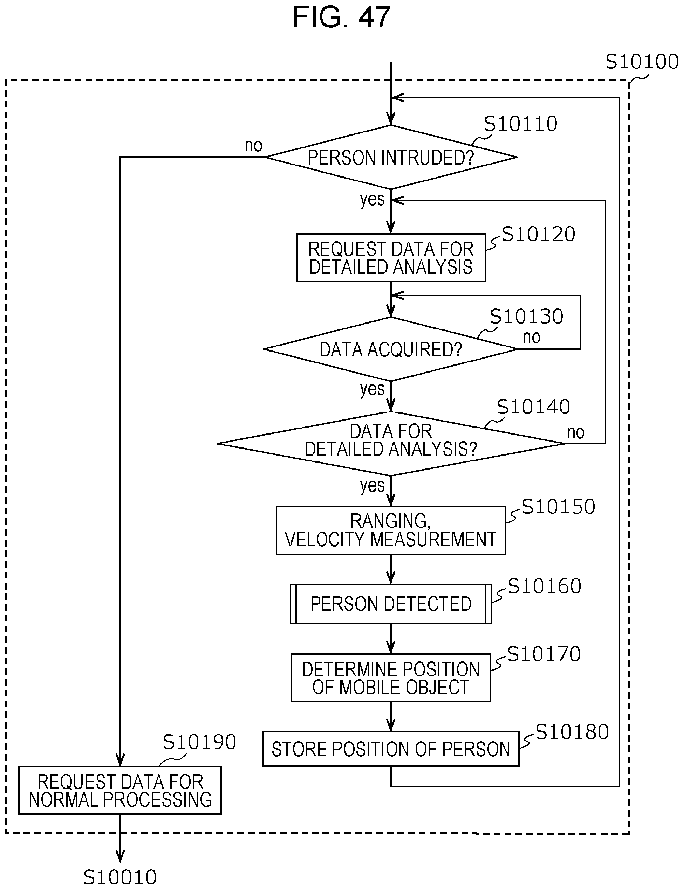

Fig. 47 is a flowchart illustrating an example of processing to be performed by the server 500 when input of a signal is received indicating that a person has intruded a range of movement of the mobile object 300, as an example of special processing. As illustrated in Fig. 47, step S10100 includes the processing from steps S10110 to S10190. Hereinafter, the operation in each step will be described.

(Step S10110)

If it is determined that special operation is necessary that is different from normal operation of receiving a result of ranging from the mobile object 300, the processing device 530 determines whether or not a person has intruded the range of movement of the mobile object 300. If there is information or input that a person has intruded the range of movement of the mobile object 300, processing advances to step S10120. If there is neither information nor input indicating that a person has intruded the range of movement of the mobile object 300, processing advances to step S10190.

(Step S10120)

The communication device 550 instructs the communication device 550 to transmit, to the mobile object 300, a transmission request for data for detailed analysis that allows for analysis of the detailed data. The data for detailed analysis may be, for example, data including the detailed time information and the spectrum information of the interference wave. The spectrum information is a source data for generating positional and velocity information, and the server 500 can perform a detailed analysis based on the spectrum information.

(Step S10130)

The processing device 530 determines whether or not data has been acquired from the mobile object 300. If the data has been acquired from the mobile object 300, processing advances to step S10140. If no data has been acquired from the mobile object 300, step S10130 is repeated.

(Step S10140)

The processing device 530 determines whether or not the data from the mobile object 300 acquired in step S10130 is data for detailed analysis including the spectrum information. If the acquired data is the data for detailed analysis, processing advances to step S10150. If the acquired data is not the data for detailed analysis, processing returns to step S10120.

Determination on a data format in step S10140 is performed based on a data format code included in data transmitted from the mobile object 300. A data format code is predefined in the system, and may be written as 0 for data for normal processing and as 1 for data for detailed analysis, for example, at the beginning of transmission data or at a fixed position close to the beginning.

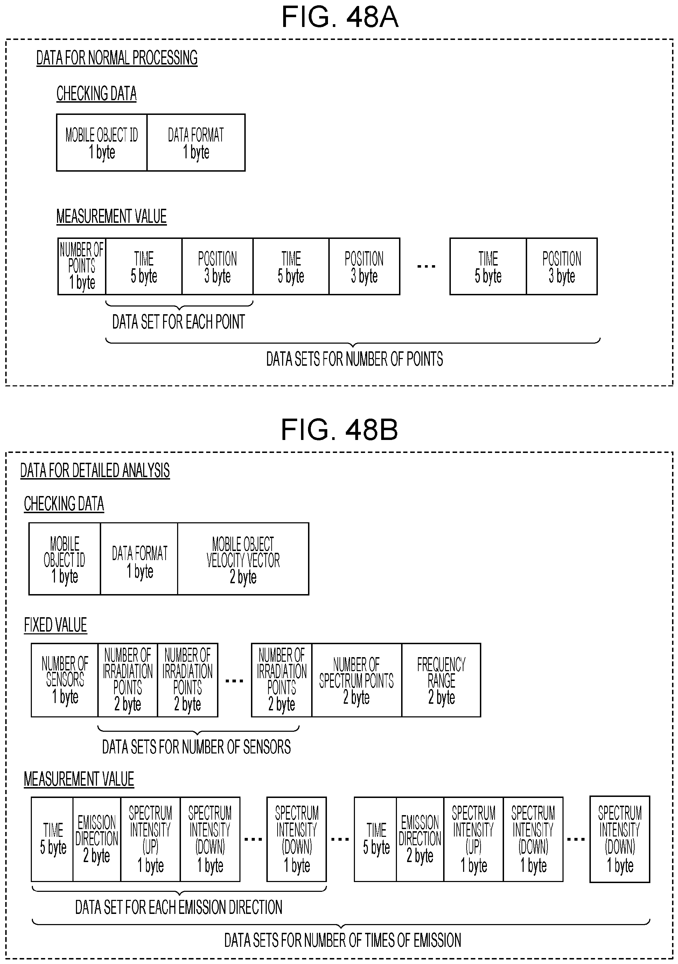

Fig. 48A is a diagram illustrating an example of a data format of the data for normal processing. Fig. 48B is a diagram illustrating an example of a data format of the data for detailed analysis. Although Figs. 48A and 48B illustrate the data format in a method similar to the method illustrated in Fig. 14, a writing method as illustrated in Fig. 16 may be adopted. In the example illustrated in Figs. 48A and 48B, following the mobile object ID, the data format code is written in one byte. The data format code indicates whether the data is data for normal processing or data for detailed analysis.

(Step S10150)

When there is reflection from a physical object in each emission direction, for each sensor, based on the measurement value of the data for detailed analysis acquired in step S10130 for each sensor, the processing device 530 calculates a distance to the physical object and calculates a velocity component vector of the physical object in that emission direction. The processing device 530 calculates a position of a data point from the emission direction and the distance, and associates the velocity component vector with that data point. This allows the processing device 530 to generate point cloud data including the velocity component information.

(Step S10160)

The processing device 530 detects a person who is present around the mobile object 300, based on the point cloud data including the velocity component information calculated I step S10150. A method of detecting a person will be described below.

(Step S10170)

Among the point cloud data generated in step S10150, the processing device 530 checks the point cloud data, excluding the point cloud data included in the cluster of the person detected in step S10160, against the map data stored in the storage device 540, and determines the position and the direction of the mobile object 300.

(Step S10180)

The processing device 530 transforms the coordinates of the point cloud data for the person detected in step S10160 into the coordinates of the map data in the server 500, and causes the storage device 540 to store the position of the person and the data acquisition time together.

After the operation in step S10180, processing returns to step S10110.

(Step S10190)

If there is neither information nor input indicating that a person has intruded the range of movement of the mobile object 300 in step S10110, the processing device 530 instructs the communication device 550 to transmit a signal requesting data for normal processing to the mobile object 300. After the operation in step S10190, processing returns to step S10010 of normal operation.

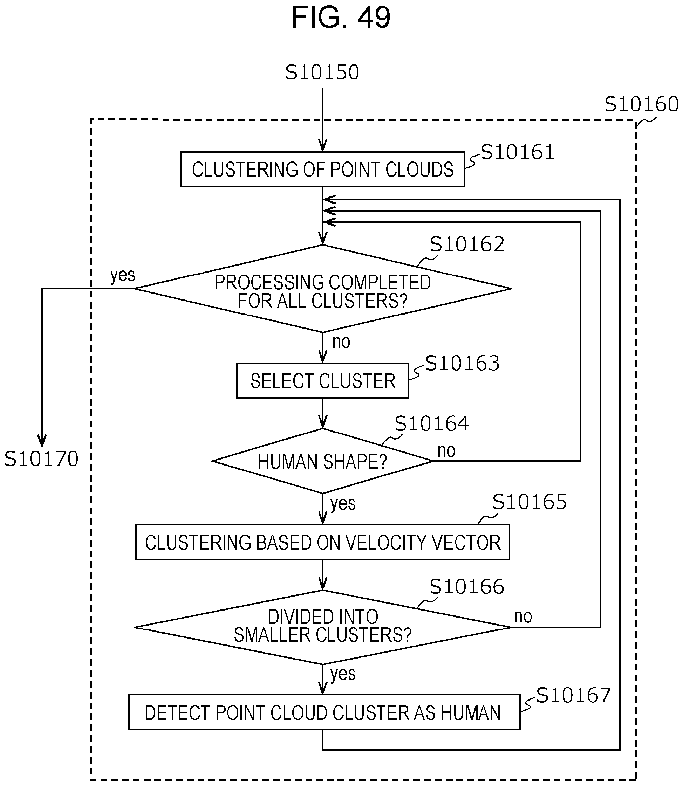

Next, a description will be given of a specific example of the person detection processing in step S10160 with reference to Fig. 49. In the example of Fig. 49, step S10160 includes steps S10161 to S10167. Hereinafter, the operation in each step will be described.

(Step S10161)

The processing device 530 performs the clustering processing on the point cloud data including information on the velocity component vector calculated in step S10150. The processing device 530 classifies the point cloud into one or more clusters by grouping points that are close to each other as one cluster based on the positional information of the point cloud.

(Step S10162)

The processing device 530 determines whether or not the determination processing has been completed for all clusters determined in step S10161 to determine whether or not the cluster represents a person. If the determination processing has been completed for all the clusters, processing advances to step S10170. If there are clusters for which processing of determining whether the cluster represents a person has not yet been performed, processing advances to step S10163.

(Step S10163)

The processing device 530 selects one cluster from clusters for which processing of determining whether er the cluster represents a person has not yet been performed, among the clusters generated in step S10161.

(Step S10164)

For the clusters selected in step S10163, the processing device 530 determines whether or not distribution of positions of point cloud data in the cluster matches a predefined range of human sizes. If the distribution of the positions of the point cloud data in the cluster matches the human size, processing advances to step S10165. If the distribution of the positions of the point cloud data in the cluster does not match the human size, processing returns to step S10162.

(Step S10165)

The processing device 530 further performs clustering on the point cloud data in the cluster based on the velocity component vector of each point. The processing device 530 classifies a plurality of points included in the cluster into one or more partial clusters by grouping points whose velocity component vectors are similar into a smaller partial cluster.

(Step S10166)

As a result of the processing in step S10165, the processing device 530 determines whether or not the point clouds included in the cluster selected in step S10163 has been divided into a plurality of smaller partial clusters, based on the velocity information. If the point clouds have been divided into the plurality of partial clusters based on the velocity information, processing advances to step S10167. If the point clouds have not been divided into the plurality of partial clusters based on the velocity information, processing returns to step S10162.

In step S10164, a point cloud that may be a person is discriminated by a cluster generated based on the positional information of the point cloud. However, because a human shape in the three-dimensional space varies depending on the attitude and motion, it is difficult to detect a person only based on the shape of a cluster. On the other hand, due to motion, animals including humans have different directions and velocities of motion for each body part. Hence, utilizing the fact that the sensing device 100 can acquire the velocity information, the processing device 530 of the present embodiment further performs clustering on point clouds belonging to the cluster based on the velocity information. Consequently, when a point cloud clustered based on the positional information can be divided into smaller clusters based on the velocity information, it can be determined that cluster is highly likely to correspond to an animal such as a human.

Note that the processing device 530 in this example determines whether or not that cluster corresponds to a human, depending on whether or not a cluster is further divided into a plurality of partial clusters based on the velocity information, but the determination may be made by using other methods. For example, the processing device 530 may determine whether the cluster corresponds to a human, based on the velocity information of the point cloud included in the cluster, by using a method of determining, based on a size of each partial cluster, whether the partial cluster has been generated that corresponds to either a central part, that is, the body trunk or a peripheral attached part, that is, any of a head or limbs.

(Step S10167)

The processing device 530 detects, as a human, the cluster that has been the plurality of partial clusters based on the velocity information. After the operation in step S10167, processing returns to step S10162.
By repeating the processing from step S10162 o step S10167, the processing device 530 can determine for all of the clusters generated in step S10161 whether or not the cluster is a human.

[3-3-2. Operation of Mobile Object]

Next, a description will be given of the operation related to data generation and transmission by the sensing device 100 in the mobile object 300.

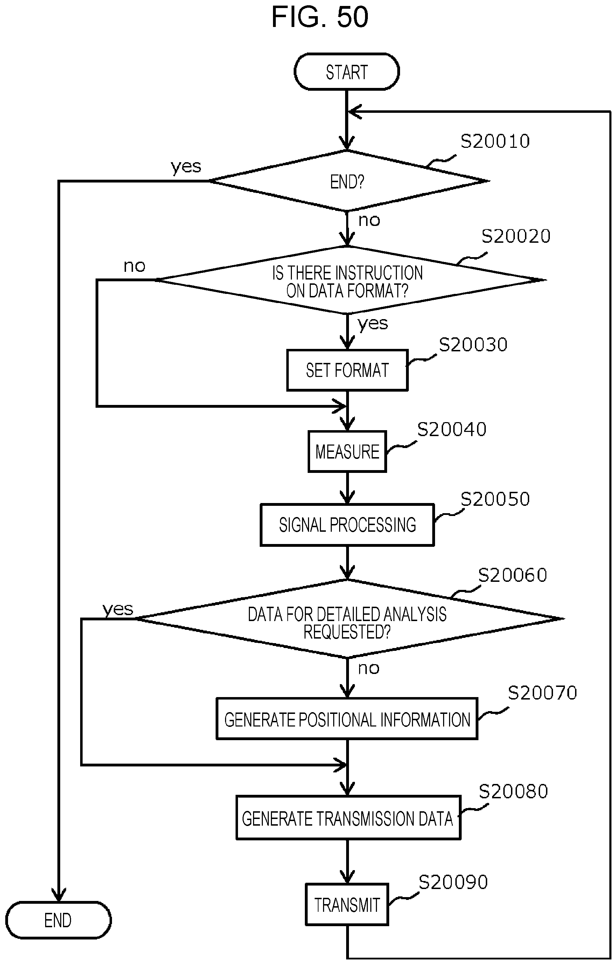

Fig. 50 is a flowchart illustrating an example of the operation to generate and transmit data by the sensing device 100 in a mobile object 300. When receiving a start signal transmitted from the server 500 or other devices, the mobile object 300 performs the operations of steps S20010 to S20090 illustrated in Fig. 50. Hereinafter, the operation in each step will be described.

(Step S20010)

The processing circuit 110 of the sensing device 100 determines whether or not there is input of an operation end signal from the server 500 or other devices. If there is the input of the operation end signal, the mobile object 300 ends it operation. If there is no input of the operation end signal, processing advances to step S20020.

(Step S20020)

The processing circuit 110 determines whether or not the communication device 310 has received a request signal transmitted from the server 500 instructing on the data format. If the request signal instructing on the data format has been received, processing advances to step S20030. If the request signal has not been received, processing advances to step S20040.

(Step S20030)

The processing circuit 110 rewrites the setting of output data of the sensing device 100 to the data format indicated by the request signal. An initial value of the data format may be the format for normal processing, for example. If the data format indicated by the received request signal is data for detailed analysis, the processing circuit 110 rewrites the data format from the format for normal processing to the format for detailed analysis.

(Step S20040)

The processing circuit 110 causes the light source 210 of each sensor 200 in the sensing device 100 to emit laser light and performs measurements. Measurements may be repeatedly performed, for example, while changing the emission direction over one frame period.

(Step S20050)

The processing circuit 110 acquires, as a measurement result, a detection signal obtained by detecting interference light from each sensor 200 in each emission direction. The processing circuit 110 analyzes a waveform of each acquired detection signal and generates spectrum data for each emission direction of each sensor 200. The spectrum data may be, for example, data on power spectrum representing signal intensity of each frequency band. The spectrum data is used to generate the positional information and the velocity information of the point cloud.

(Step S20060)

The processing circuit 110 determines whether or not data for detailed analysis is requested. If the currently specified output data format is the data format for detailed analysis, processing advances to step S20080. If the currently specified data format is the data for normal processing, processing advances to step S20070.

(Step S20070)

The processing circuit 110 generates the positional information of the object based on the spectrum data of the interference light generated in step S20050. Specifically, the processing circuit 110 identifies a peak frequency from the spectrum data and calculates the distance to the object with the peak frequency as beat frequency $f_b$, based on the expression (1) described above with respect to Fig. 11A. The processing circuit 110 can calculate the position of the data point in the three-dimensional space based on the calculated distance and the information on the laser light emission direction of the sensor 200 that has detected the interference light. By performing this processing on each data point, it is possible to generate point cloud data including the positional information of the three-dimensional point cloud.

(Step S20080)

The processing circuit 110 generates a data string for transmitting the spectrum data of each interference light generated in step S20050 or the point cloud data generated in step S20070. The processing circuit 110 generates transmission data according to the currently specified data format. If the specified data format is the data format for normal processing, the processing circuit 110 generates transmission data including the point cloud data generated in step S20070. On the other hand, if the specified data format is the data format for detailed analysis, the processing circuit 110 generates transmission data including the spectrum data generated in step S20050.

The data format for normal processing may be the format as illustrated in Fig. 48A, for example. In the example of Fig. 48A, the mobile object ID and the code indicating the data format are each written in one byte, as checking data for the server 500 to identify reception data. After that, as a measurement value, the number points of the point cloud data to be transmitted is written in one byte, followed by the detailed time indicated in five bytes for each data point and information on three-dimensional position coordinate indicated in three bytes.

The data format for detailed analysis may be the data as illustrated in Fig. 48B, for example. In the example of Fig. 48B, the mobile object ID and the code indicating the data format are each written in one byte, as data for the server 500 to identify reception data. Furthermore, the velocity vector representing the traveling velocity of the mobile object 300 itself is written in two bytes. The velocity vector of the mobile object may be expressed in a coordinate system in which a predetermined reference position in the mobile object 300 is the origin. Here, it is assumed that the mobile object 300 moves only horizontally, so the velocity vector is written in two bytes. If the mobile object 300 is a mobile object, such as a drone, that moves up and down, the velocity vector of the mobile object 300 may be written in three bytes. Furthermore, as a fixed value indicating measurement conditions, the number of sensors is written in one byte, and the number of irradiation points for each sensor is written in two bytes for the number of the sensors. Then, the number of analysis points of the transmitted spectrum data (that is, the number of points of the frequency and the number of bands) and the corresponding frequency range are each written in two bytes. Then, the measurement data follows. The measurement data includes data sets of the detailed time (five bytes), the emission direction (two bytes), and the spectrum intensity in the up-chirp and the spectrum intensity in the down-chirp (one byte each for every analysis point) are included for the number of times of emissions.

(Step S20090)

The communication device 310 transmits the data for communication generated in step S20080 to the server 500. After the operation in step S20090, processing returns to step S20010.

By repeating the operations from step S20010 to step S20090, the mobile object 300 can transmit the measurement data in the format according to the request of the server 500.

As described above, in the present embodiment, as an example of special processing, when a person intrudes, processing to detect the person is performed. In the course of the person detection processing, the server 500 requests the sensing device 100 in the mobile object 300 to generate data for detailed analysis, in order to generate velocity information that is not utilized in the normal processing. The sensing device 100 generates data including information on the light emission direction and the power spectrum of the interference light as the data for detailed analysis. Based on such data for detailed analysis, the server 500 can generate detailed point cloud data including the velocity information and detect a person who has intruded, based on the point cloud data.

Special processing may be performed for any purpose other than person detection. For example, special processing may be performed when it is necessary to analyze the positions and operations of physical objects around the mobile object 300, such as when the mobile object 300 transmits an abnormal signal, such as a failure, to the server 500. In addition, the data for detailed analysis is not limited to the spectrum information of the interference light, and may include other types of information that allows the position and the velocity of the physical object to be derived. For example, as described in Embodiments 1 and 2, the data for detailed analysis may include the positional information and the velocity vector information of the physical object detected by the clustering processing.

In this manner, in the present embodiment, the processing device 550 in the server 500 transmits a request signal requesting measurement data for detailed analysis to the sensing device 100 of the mobile object 300, when abnormality is detected in the mobile object 300 itself or in an environment in which the mobile object 300 runs. The request signal specifies the data format of the measurement data. The sensing device 100 that has received the request signal generates the measurement data having the data format specified by the request signal and transmits output data including the measurement data to the server 500 via the communication device 310. This allows the processing device 550 of the server 500 to perform detailed analysis of the surroundings of the sensing device 100, which makes it easy to identify a cause of the abnormality.

(Embodiment 4)

Next, a fourth embodiment of the present disclosure will be described.

In the systems in Embodiments 1 to 3, the server 500, which communicates with the sensing device 100 provided in the fixed body 400 or the mobile object 300, monitors or records the conditions such as operations of physical objects around the fixed body 400 or the mobile object 300. In contrast, in the present embodiment, the mobile object 300 capable of autonomous movement includes the sensing device 100 and a processing device that can perform arithmetic processing similar to the above-described server 500. Within the mobile object 300, data is transmitted and received between the sensing device 100 and the processing device. The processing device generates positional information of surrounding physical objects based on the output data outputted from the sensing device 100 and generates and outputs a signal for controlling the operation of the mobile object 300 based on the positional information of the physical object.

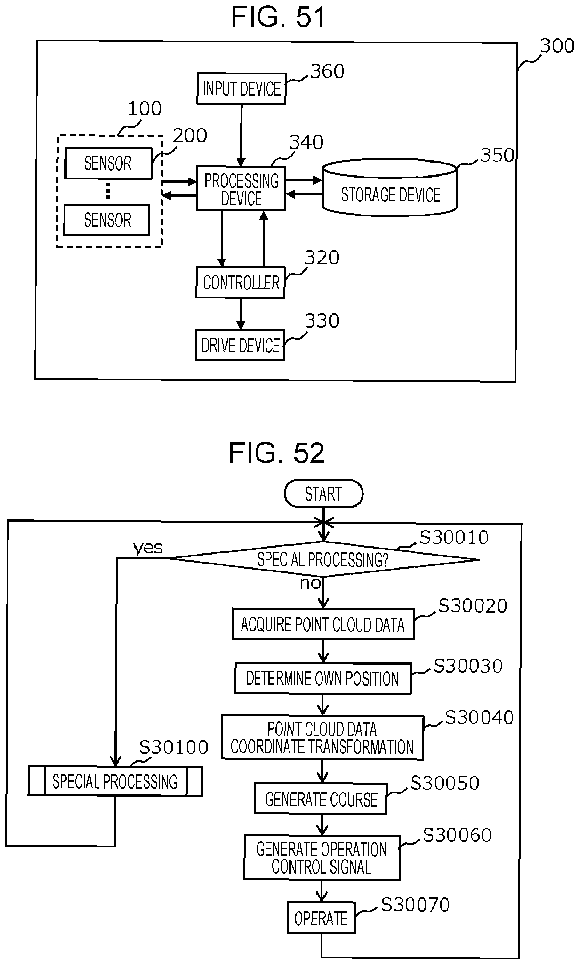

Fig. 51 is a block diagram illustrating a schematic configuration of the mobile object 300 in the present embodiment. The mobile object 300 includes the sensing device 100 including one or more sensors 200, an input device 360, a processing device 340, the controller 320, the drive device 330, and a storage device 350. The mobile object 300 may be a vehicle for riding, such as an automobile equipped with the self-driving capability, or an unmanned transport vehicle (Automated Guided Vehicle: AGV) used for transporting goods in a factory or a warehouse. The mobile object 300 is not limited to these vehicles but may be a flying object such as a drone or a robot.

The sensor 200 uses laser light to perform ranging and velocity measurement of FMCW method. The sensor 200 has a similar configuration to the sensor 200 illustrated in any of Figs. 8 to 10, for example. In the example of Fig. 51, a plurality of sensors 200 is provided, but the number of sensors 200 included in the sensing device 100 may be one.

The input device 360 is a device for input an instruction for the mobile object 300, such as starting or ending operations. The input device 360 may include a device such as a button, a lever, a switch, or a keyboard.

The processing device 340 is a device including one or more processors (that is, processing circuits) such as a CPU or a GPU, and a storage medium such as a memory. The processing device 340 can process sensor data outputted from the sensor 200 and generate point cloud data for the surrounding environment of the mobile object 300. The processing device 340 can perform processing to determine the operation of the mobile object 300, such as detecting an obstacle based on the point cloud data, and determining a course of the mobile object 300. The processing device 340 transmits, for example, a signal indicating the course of the mobile object 300 to the controller 320.

The controller 320 generates a control signal and outputs the control signal to the drive device 330, in order to implement the operation of the mobile object 300 determined by the processing device 340.

The drive device 330 operates according to the control signal outputted from the controller 320. The drive device 330 may include various actuating parts such as an electric motor, wheels, or arms.

The storage device 350 is a device including one or more storage media such as a semiconductor storage medium, magnetic storage media, or optical storage media. The storage device 350 storage data related to the operating environment and the operating conditions necessary for the mobile object 300 to move, such as the map data of the environment in which the mobile object 300 moves.

Fig. 52 is a flowchart illustrating an example of the operations of the mobile object 300. The mobile object 300 in this example performs the operations from step S30010 to S30100. Upon receipt of a start signal inputted from the input device 360, the mobile object 300 starts operating. Hereinafter, the operation in each step will be described. In the following description, as an example, it is assumed that the mobile object 300 is an AGV that automatically travels according to guidelines marked on the floor.

(Step S30010)

The processing device 340 determines whether or not special processing different from normal operation is required. The processing device 340 determines that special processing is required, for example, when the mobile object 300 is in some abnormal conditions. Examples of the abnormal conditions may include a condition in which running cannot be continued under normal operation because guidelines are not detected on the floor, a condition in which arrangement of surrounding physical objects does not match the map data recorded in the storage device 350, or a condition in which equipment has failed. When special processing is required, processing advances to step S30100. When special processing is not required, processing advances to step S30020.

(Step S30020)

The processing device 340 causes the sensing device 100 to perform ranging. Each sensor 200 in the sensing device 100 emits laser light to measure a distance. The sensor 200 detects interference light between light emitted from the light source and reflected light from the physical object, and measures the distance to the reflecting point of the physical object based on the frequency of the interference light. The sensor 200 calculates three-dimensional coordinates of the reflecting point based on the distance and information on the laser light emission direction. The sensor 200 repeats the above-described operations over the entire measurement target area while changing the laser light emission direction. As a result, the sensor 200 generates point cloud data including positional information of each of the plurality of reflecting points included in the target area.

(Step S30030)

The processing device 340 checks the point cloud data generated by the sensor 200 in step S30020 against the map data recorded in the storage device 350, and determines the position of the mobile object 300 on the map.

(Step S30040)

The processing device 340 transforms the coordinates of each point in the point cloud data acquired in step S30020 into coordinates in the coordinate system used in the map data.

(Step S30050)

The processing device 340 generates the course of the mobile object 300 according to the position of the mobile object 300 determined in step S3 0030 and the map data. For a position close to the mobile object 300, the processing device 340 determines, for example, a detailed course where no collision with an obstacle occurs, based on the point cloud data subjected to the coordinate transformation in step S30040.

(Step S30060)

The controller 320 generates a control signal for controlling the drive device 330 according to the course generated by the processing device 340 in step S30050.

(Step S30070)

The controller 320 outputs the control signal generated in step S30060 to the drive device 330. The drive device 330 operates according to the control signal. After the operation in step S30070, processing returns to step S30010.
By repeating the operations from step S30010 to step S30070, navigation of the mobile object 300 under normal conditions without abnormality is realized.

(Step S30100)

If it is determined in step S30010 that special processing is required, the mobile object 300 performs special processing.

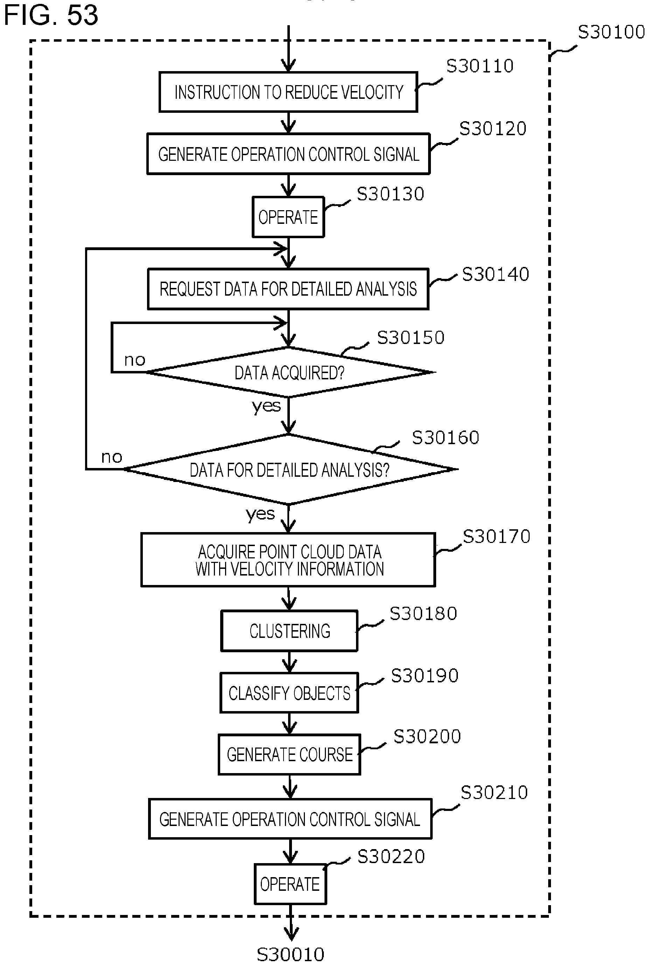

Fig. 53 is a flowchart illustrating a specific example of operations in special processing in step S30100. If abnormal condition is detected in step S30010, the mobile object 300 performs the operations from steps S30110 to S30220 illustrated in Fig. 53. Hereinafter, the operation in each step will be described.

(Step S30110)

The processing device 340 instructs the controller 320 to reduce the traveling velocity. This is to ensure safety under abnormal conditions.

(Step S30120)

The controller 320 generates a control signal for velocity reduction and outputs the control signal to the drive device 330.

(Step S30130)

The drive device 330 operates according to the control signal outputted from the controller 320 and reduces the velocity of the mobile object 300. For example, the drive device 330 may stop the mobile object 300.

(Step S30140)

The processing device 340 requests each sensor 200 of the sensing device 100 to generate data for detailed analysis. Under normal conditions, the sensor 200 outputs point cloud data that can be checked against the map data recorded in the storage device 350. Under abnormal conditions, as the point cloud data cannot be checked against the map data, the processing device 340 requests to each sensor 200 the point cloud data to which the velocity information is attached, in order to acquire detailed information necessary for operating without referring to the map data.

(Step S30150)

The processing device 340 determines whether or not the measurement data has been acquired from the sensor 200. If the measurement data has been acquired, processing advances to step S30160. If the measurement data has not been acquired, step S30150 is repeated.

(Step S30160)

The processing device 340 determines whether or not the format of the measurement data acquired from the sensor 200 in step S30150 is the format for the data for detailed analysis requested in step S30140. If the acquired data is in the format for the data for detailed analysis, processing advances to step S30170. If the acquired data is not in the format for the data for detailed analysis, that is, if the acquired data is in the format for the data for normal processing, processing returns to step S30140.
By repeating step S30140 to step S30160, the processing device 340 can acquired the data for detailed analysis from the sensor 200.

(Step S30170)

The processing device 340 extracts the point cloud data to which the velocity information is added for each data point, from the data acquired from the sensor 200. The velocity information for each data point in the present embodiment represents the relative velocity component of the data point in the direction along the straight line connecting the sensor 200 and the data point.

(Step S30180)

The processing device 340 performs clustering on the point cloud data according to the positional information of each data point. The clustering method is similar to the method described in Embodiment 1. The clustering makes it possible to identify physical objects (obstacles or people, for example) that are present around the mobile object 300.

(Step S30190)

For each cluster in the point cloud data clustered in step S30180, the processing device 340 classifies types of physical objects corresponding to clusters based on the velocity information corresponding to each data point included in the cluster. For example, the processing device 340 checks a sign of the velocity information of each data point. If a direction moving away from the mobile object 300 is a positive direction of the velocity, a cluster having more data points whose velocity information is smaller than 0 is likely to be a cluster corresponding to the physical object approaching the mobile object 300. Therefore, the processing device 340 determines that such a cluster is a dangerous moving body, and records information thereon. A cluster having more data points whose velocity information is larger than 0 is likely to be a physical object moving away from the mobile object 300. Therefore, the processing device 340 determines that such a cluster is a moving object with a lower degree of danger, and records information thereon. The processing device 340 determines that a cluster having the positive velocity information that is competing with the negative velocity information or a cluster having more data points whose velocity information is 0 is a stationary object and stores it.

(Step S30200)

The processing device 340 generates a course in a direction moving away from a point cloud position of a cluster that has no data point and is determined as a dangerous moving body.

(Step S30210)

The controller 320 generates a control signal for controlling the drive device 330 according to the course generated by the processing device 340 in step S30200.

(Step S30220)

The controller 320 outputs the control signal generated in step S30210 to the drive device 330. The drive device 330 operates according to the control signal. After the operation in step S30220, processing returns to normal operation in step S30010.

Through the operations from step S30110 to step S30220 it is possible to avoid danger and determine a course, even in a case where, for example, guidelines are not found on the floor. The mobile object 300 can autonomously move while avoiding danger, for example, until guidelines can be detected.

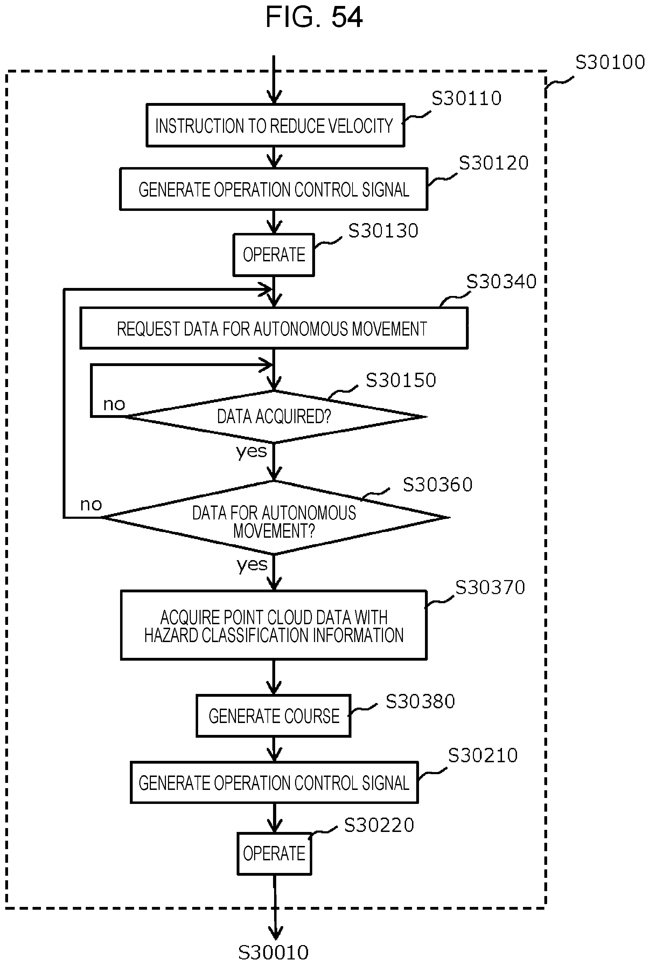

Fig. 54 is a flowchart illustrating another example of the operations of the special processing in step S30100. The operations of steps S30100 to S30130, S30150, S30210, and S30220 in this example are similar to the operations in the corresponding steps illustrated in Fig. 53. In this example, the steps S30140, S30160, and S30170 in the example of Fig. 53 are replaced with steps S30340, S30360, and S30370, respectively, and steps S30180 and S30190 are excluded. Hereinafter, different points from the operations illustrated in Fig. 53 will be described.

(Step S30340)

The processing device 340 in this example requests data for autonomous movement from each sensor 200, after the mobile object 300 is decelerated. The data for autonomous movement is the point cloud data to which hazard classification information of each point is attached. The hazard classification information may be, for example, a code for discriminating whether or not a physical object corresponding to the point is a dangerous moving body. The hazard classification information may be a code that represents the degree of danger of the physical object corresponding to the point at a plurality of levels. The hazard classification information may indicate, for example, whether the physical object corresponding to the point is a dangerous moving body, a non-dangerous moving body, or a stationary object.

(Step S30360)

When acquiring data from the sensor 200, the processing device 340 determines whether or not the data format thereof is the format of the data for autonomous movement. The processing device 340 can determine whether or not the data is the data for autonomous movement, based on the code indicating the data format included in the acquired data. If the acquired data is the data for autonomous movement, processing advances to step S30370. If not, processing returns to step S30340.

(Step S30370)

The processing device 340 extracts the point cloud data to which the hazard classification information is added for each data point, from the acquired data.

(Step S30380)

The processing device 340 generates a course in a direction that is moving away from the data point to which the code indicating the dangerous moving body is added, and that has no data point.

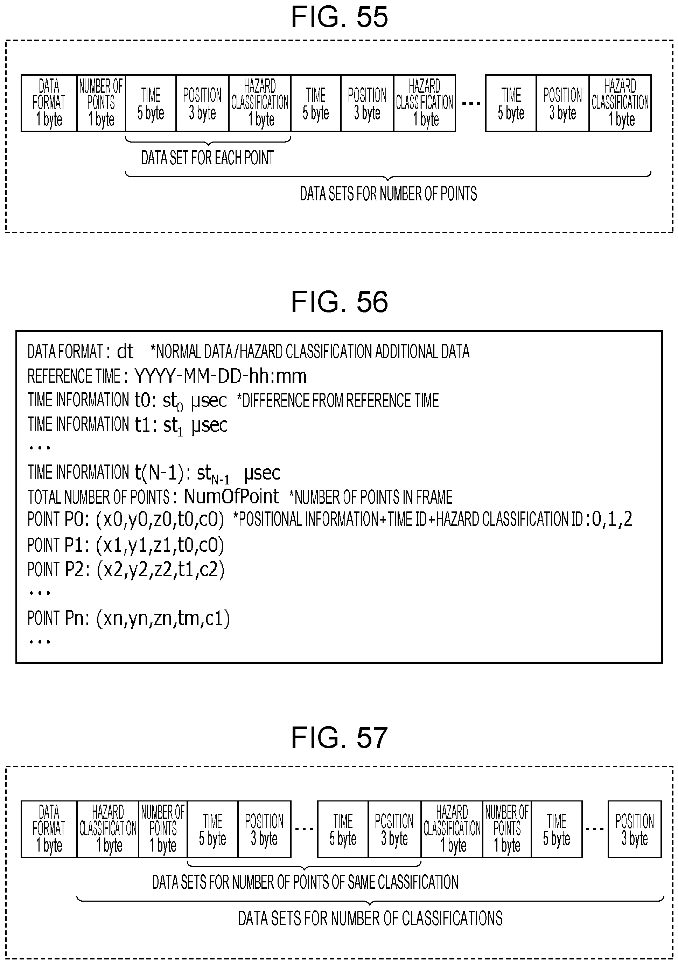

Figs. 55 to 58 illustrate examples of the data formats of the point cloud data to which the hazard classification information is added for each data point. Each sensor 200 generates output data as illustrated in any of Figs. 55 to 58 according to the request from the processing device 340. In the present embodiment, data is transmitted or received within the mobile object 300 and each sensor 200 is connected to the processing device 340. The sensing device 100 inputs the output data from a plurality of the sensors 200 to the processing device 340 through different lines without aggregating the output data from the plurality of sensors 200. Therefore, checking data such as IDs for identifying the sensors 200 and the fixed values are omitted.

In the example illustrated in Fig. 55, a code indicating the data format at the beginning is transmitted, and then the number of data points in the point cloud is transmitted. Subsequently, the detailed time, the three-dimensional positional information, and the hazard classification are transmitted for the number of data points. As illustrated in Fig. 55, in the present embodiment, the velocity information of each point in the point cloud is not transmitted from the sensor 200. Instead, the hazard classification information on the point is transmitted as meta data. The hazard classification may be code information that expresses the degree of danger in a plurality of levels, such as "0: Stationary object, 1: Normal moving body, 2: Dangerous moving body" or "0: Non-dangerous object, 1: Dangerous moving body".

Fig. 56 illustrates an example of a writing method when transmitting data similar to the example in Fig. 55 in XML format. Each sensor 200 may generate output data indicated in the format illustrated in Fig. 56, instead of the format illustrated in Fig. 55.

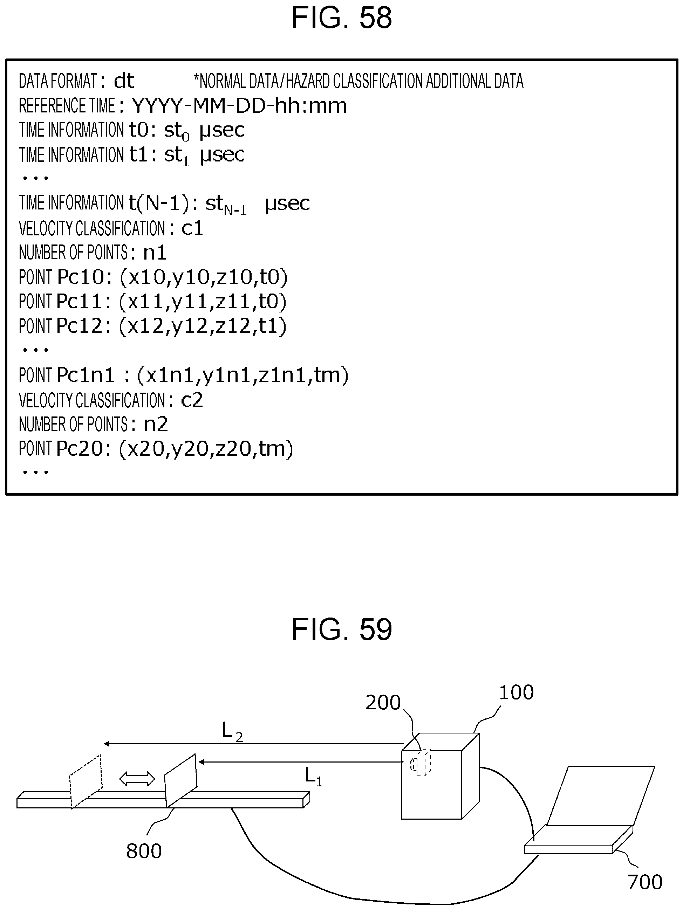

Fig. 57 illustrates an example of a data format when transmitting information of the data point for each hazard classification. Also in the example of Fig. 57, the code indicating the data format is transmitted at the beginning. Next, a data set of the hazard classification code, the number of data points to which the hazard classification is applied, and the detailed time and the three-dimensional positional information for the number of data points is transmitted. The data set is transmitted for each hazard classification code. Even in such a format, the information similar to the examples in Figs. 57 and 58 can be transmitted.

Fig. 58 illustrates an example of the writing method when transmitting the data similar to the example in Fig. 57 in XML format. Each sensor 200 may generate output data in the format illustrated in Fig. 58, instead of the format illustrated in Fig. 57.

The processing of generating the point cloud data to which the hazard classification information as illustrated in Figs. 55 to 58 is attached for each data point is similar to the processing from steps S30170 to S30190 in Fig. 53 performed by the processing device 340.

(Embodiment 5)

Next, a fifth embodiment of the present disclosure will be described.

[5-1. System Configuration]

Fig. 59 is a conceptual diagram schematically illustrating an example of a system for performing calibration of the sensing device 100 including the sensor 200. The system includes a calibration device 700, the sensing device 100, and an object holding device 800. The object holding device 800 is configured to be able to install an object at a position at a known distance from the sensing device 100. Although Fig. 59 exemplifies distance 1 ($L_1$) and distance 2 ($L_2$) by way of example, a known distance at which the object holding device 800 holds an object may be 2 or larger. The sensor 200 emits light to the object held by the object holding device 800 and receives light reflected by the object. The sensing device 100 transmits the spectrum information of interference light between the light emitted from the light source and the received reflected light to the calibration device 700.

The calibration device 700 determines a value of a parameter used in distance calculation and velocity calculation, from the known distance of the object held by the object holding device 800 and the spectrum information of the interference light received from the sensing device 100, and transmits the parameter to the sensing device 100. By using the parameter, a distance measurement value and a velocity measurement value of the sensing device 100 are calibrated. The object is, for example, a white board and placed parallel to a lens surface of the sensor 200. This arrangement scatters light emitted from the sensor 200, and the scattered light efficiently enters the lens of the sensor 200. As a result, the intensity of the detected interference light increases relative to noise, and the accuracy of calibration increases.

The calibration by this system is performed, for example, when the sensor 200 is manufactured or shipped. In addition, it may also be performed as re-calibration when the sensing device 100 including the sensor 200 is installed or during an inspection. The sensor 200 is configured similarly to the configuration illustrated in, for example, Fig. 8, 9, or 10.

The calibration that the calibration device 700 performs on the sensing device 100 is not limited to the calibration of the distance measurement value or the velocity measurement value. Other examples include checking noise occurrence status when the distance or velocity is measured and determining the measurement conditions corresponding to noise, or the like. Examples of the measurement conditions include a detection threshold of the interference light, the number of times of measurements when calculating the measurement values, and the average number of times when calculating measurement values, or the like.

As described above, in the system of the present embodiment, the calibration device 700 acquires the spectrum information measured at the first distance and the spectrum information measured at the second distance. Based on the acquired spectrum information, the calibration device 700 determines parameters for calculating the distance and the velocity from the frequency of the interference light, and transmits the determined parameters to the sensing device 100. The sensing device 100 receives the parameters transmitted from the calibration device 700 and saves the acquired parameters. This allows the sensing device 100 to generate and output accurate distance and velocity from the spectrum information of the measured interference light.

Note that here, although the distance at which the object is held is the predefined distance, the calibration device 700 may instruct the object holding device 800 on a distance at which the object is held. Alternatively, a distance at which the object is held may be determined by user input. The object holding device 800 has a mechanism for changing a position to hold the object so that the distance from the sensor 200 to the object will be the instructed or input distance.

Note that in the above example, the object holding device 800 automatically adjusts the position to hold the object so that the distance between the sensor 200 and the object will be the determined value, but the object holding device 800 may have a jig that does not operate. In this case, a user may determine the distance between the sensor 200 and the object, use the jig to set the distance between the sensor 200 and the object, and input the set distance in the calibration device 700. In this case, communications only have to be performed between the calibration device 700 and the sensing device 100, and communication between the object holding device 800 and the calibration device 700 is not required. The calibration device 700 stores the distance between the object and the sensor 200 that is inputted by the user.

In addition, according to the above system, the object holding device 800, the calibration device 700, and the sensor 200 are each connected by direct wired communication, and transmit and receive signals via a signal line, while each of them may be connected via direct wireless communication or may be connected via a network.

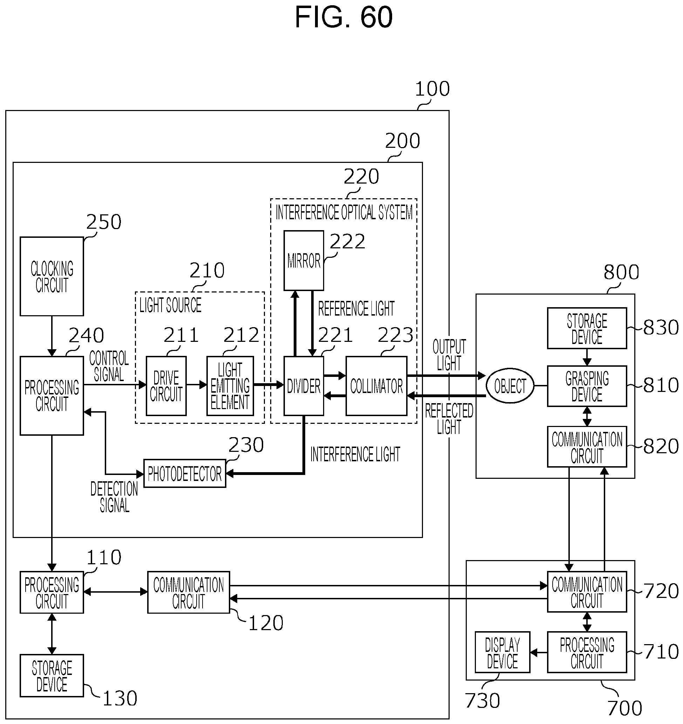

Fig. 60 is a block diagram illustrated a more detailed configuration of the system in the present embodiment. Similarly to the configuration described using Fig. 7, the sensing device 100 includes the one or more sensors 200, the processing circuit 110, the communication circuit 120, and the storage device 130. The calibration device 700 includes a processing circuit 710, a communication circuit 720, and a display device 730. The object holding device 800 includes a grasping device 810, a communication circuit 820 and a storage device 830.

The processing circuit 710 of the calibration device 700 outputs a control signal for instructing a calibration operation to the communication circuit 720. The processing circuit 710 also determines parameters based on the acquired data and outputs the parameters to the communication circuit 720 and the display device 730. The communication circuit 720 transmits the control signal to the sensing device 100 and the object holding device 800. The communication circuit 720 further receives measurement data outputted by the sensing device 100 and distance data of the object outputted by the object holding device 800.

The grasping device 810 of the object holding device 800 selects one of a plurality of predefined distances stored in the storage device 830, based on the control signal outputted from the calibration device 700. Furthermore, the grasping device 810 adjust a distance from the collimator 223 of the sensor 200 to the object based on the selected distance, and outputs a value of the selected distance to the communication circuit 820. The communication circuit 820 outputs the distance between the object and the collimator 223 of the sensor 200 to the calibration device 700.

[5-2. Operation]

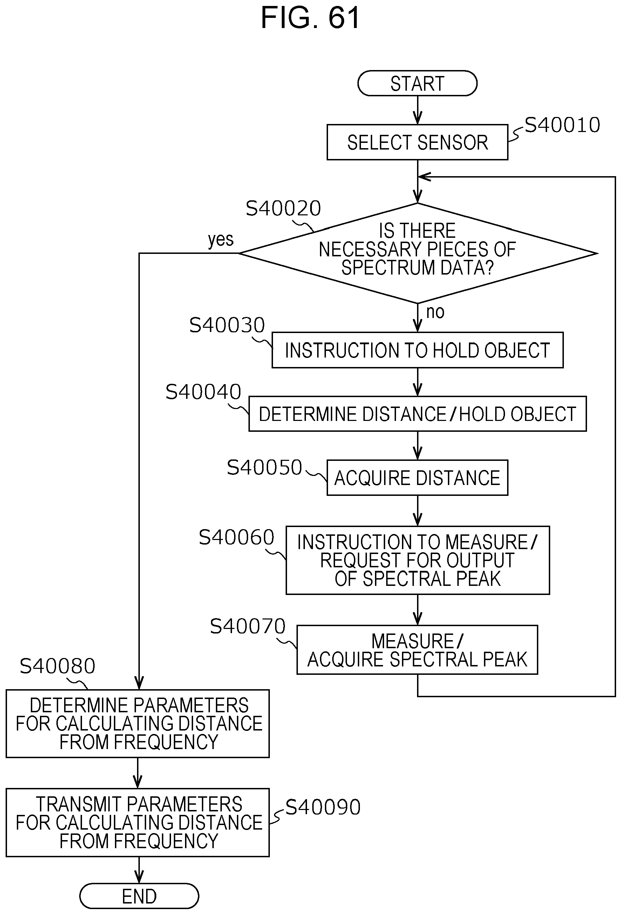

Fig. 61 is a flowchart illustrating the calibration operation in the system of the present embodiment. First, a start signal of the calibration operation is inputted by unillustrated input means to the calibration device 700, and the calibration operation of the system is started.

(Step S40010)

In step S40010, the processing circuit 710 of the calibration device 700 selects one sensor from the sensors 200 included in the ranging sensor 100. The selected sensor is a sensor that has been determined to require calibration and for which calibration has not yet been completed.

(Step S40020)

In step S40020, the processing circuit 710 of the calibration device 700 determines whether or not the necessary pieces of spectrum data for calibration are stored. The spectrum data necessary for calibration is, for example, a numeric value of two or more values. Here, it is assumed that the necessary pieces of spectrum data are two. In step S40020, if the necessary pieces of spectrum data are stored, that is, if yes in step S40020, processing advances to step S40080. In step S40020, if the necessary pieces of spectrum data are not stored, that is, if no in step S40020, processing advances to step S40030.

(Step S40030)

In step S40030, the calibration device 700 outputs a control signal instructing holding of the object for measurement to the object holding device 800.

(Step S40040)

In step S40040 the object holding device 800 select a distance at which the object has not yet been held, from among pre-stored object distances stored in the storage device 830, and holds the object at a position where the distance between the sensor 200 and the object is equal to the selected distance.

(Step S40050)

The object holding device 800 transmits the distance determined in step S40040 to the calibration device 700. In step S40050, the calibration device 700 receives the signal outputted from the object holding device 800 and acquires the distance between the object and the collimator 223 of the sensor 200.

(Step S40060)

In step S40060, the calibration device 700 outputs, to the sensing device 100, a control signal instructing the sensor 200 to perform ranging measurement on the object. The control signal includes a signal specifying the data format outputted by the sensing device 100, together with an instruction signal instructing starting of the measurement. The specified data format is, for example, the frequency of the spectral peak of the interference light detected by the sensor 200.

(Step S40070)

The sensing device 100 receives the control signal outputted by the calibration device 700 in step S40060, and performs a measurement operation. The measurement operation is similar to what has been described the previous embodiments. That is, the sensor 200 emits laser with the periodically modulated frequency toward the object, receives light reflected by the object, and causes the reflected light to interfere with reference light. Furthermore, the sensor 200 detects interference light resulting from the interference, with the photodetector 230, and performs frequency-analysis on the detection signal to determine a spectral peak. In the example illustrated in Fig. 41 of Embodiment 2, one or more frequency peaks whose intensities exceed the predefined threshold are treated as the spectral peaks, but the spectral peak in the present embodiment refers to the frequency having the maximum energy when the energy for each frequency of the interference light is calculated. The sensing device 100 aggregates data on the determined spectral peaks according to the predefined output format of the spectral peak and transmit the data to the calibration device 700. In step S40070, the calibration device 700 acquires the spectral peak data outputted by the sensing device 100.

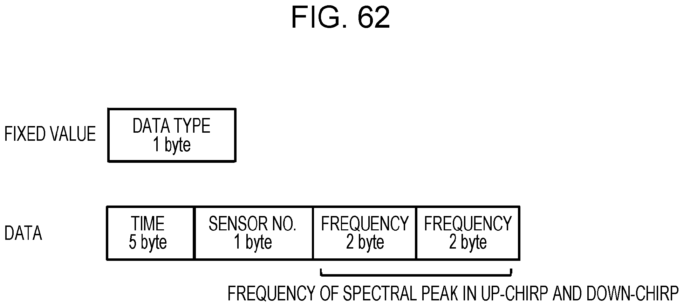

Fig. 62 is an example of the data format that sensing device 100 transmits to the calibration device 700. In the data format illustrated in Fig. 62, for example, as a fixed value, a code indicating that the output data is the spectral peak data for calibration is indicated in one byte. Then, the time when the measurement is performed is indicated in five bytes, the identification number of the sensor 200 to be calibrated is indicated in one byte, the frequency of the spectral peak in up-chirp is indicated in two bytes, and the frequency of the spectral peak in down-chirp is indicated in two bytes. In Fig. 62, although the data format is represented as a data string, data may be in an output format conforming to XML format as in Fig. 40 or 42. After step S40070 is performed, processing returns to step S40020.

By repeating the operations from step S40020 to step S40070, it is possible to acquire all spectrum data necessary to determine the parameters for calculating the distance.

(Step S40080)

In step S40080, the processing circuit 710 of the calibration device 700 calculates parameters when calculating the distance from the frequency of the spectral peak.

A description is given of an example of processing performed by the processing circuit 710 of the calibration device 700. Based on the expression (1) mentioned above, a relationship between the holding distance $L_1$, the holding distance $L_2$, and the interference light frequency is as illustrated in the expressions (4) and (5), respectively. Here, $f_{b1}$ and $f_{b2}$ are the frequencies of the spectral peaks of the interference light detected at the holding distance $L_1$ and the holding distance $L_2$, respectively. $f_{b1}$ may be an average value of the frequency of the spectral peak in the up-chirp and the frequency of the spectral peak in down-chirp detected at the holding distance $L_1$, or either one of the frequency of the spectral peak in the up-chirp and the frequency of the spectral peak in down-chirp. The same also applies to $f_{b2}$. A is a shift in the zero point of the distance caused by a difference in a length between a waveguide of the reference light and a waveguide till the received reflected light interferes with the reference light, in the actual interference optical system, and is a constant defined for each interference optical system. In addition, symbols that are the same as those in the expression (1) have the same meanings.

$$L_1 = c \times f_{b1}/(\Delta f \times f_{FMCW}) \times (1/4) + A \qquad (4)$$

$$L_2 = c \times f_{b2}/(\Delta f \times f_{FMCW}) \times (1/4) + A \qquad (5)$$

As the holding distance $L_1$ and the holding distance $L_2$ have known values, the processing circuit 710 of the calibration device 700 can calculate $\Delta f$ and A using expression (4) and expression (5).

(Step S40090)

In step S40090, the calibration device 700 transmits $\Delta f$ and A determined in step S40080 to the sensing device 100 via the communication circuit 720. The $\Delta f$ and A are the parameters when calculating the distance from the frequency of the spectral peak. During subsequent measurement operations, the sensing device 100 calculates the distance using the detection signal of the interference light acquired by the sensor 200 and the parameters. The values of $\Delta f$ and A being updated, the sensing device 100 and the sensor 200 are calibrated.

[5-3. Effects, etc.]

As described above, in the system in the present embodiment, calibration of the sensor 200 is easily performed, so that ranging can be achieved and maintained with high accuracy.

Note that the operation when calibrating one of the sensors 200 is described here, but a plurality of the sensors may be calibrated. Data for calibration may be transmitted or received for each sensor or transmitted or received collectively for a plurality of sensors.

In the system of the present embodiment, the calibration device 700 transmits, to the sensing device 100, the control signal specifying output of a spectral peak that is an example of the spectrum information of interference light. The sensing device 100 outputs the spectral peak information to the calibration device 700, according to the specified data format. This allows the calibration device 700 to calibrate parameters when converting the spectrum information of interference light detected by the sensor 200 into distance or velocity. Use of the spectrum information as raw data before calculating distance or velocity makes it possible to easily perform calibration of the parameters when calculating distance or velocity by using the frequency analysis of interference light. Such a calibration may be performed in scenes such as when the sensing device 100 is installed, when there is a change in the usage environment of the sensing device 100, during maintenance for abnormality in the sensing device 100, or during regular maintenance of the sensing device 100, or the like, as well as when the sensing device 100 is shipped.

As described above, according to the system of the present embodiment, calibration can be easily performed for deterioration of the measurement accuracy of 100 of the ranging device due to age deterioration in the laser characteristics, or the like, so that high reliability of measurements of the sensing device 100 can be maintained.

(Modification Example 1 of Embodiment 5)

Next, Modification Example 1 of the fifth embodiment of the present disclosure will be described.

In the fifth embodiment, the spectral peak, that is, the value of the frequency that showed the maximum energy in the measurement frequency range was used as the data format of the spectrum information outputted from the sensing device 100 to the calibration device 700. In this modification example, a power spectrum is used as the data format of the spectrum information. As described with reference to Figs. 39 and 40 in Embodiment 2, the power spectrum is a value that represents energy of each frequency in the measurement frequency range. A configuration of the system in this modification example is similar to the configuration described using Figs. 59 and 60.

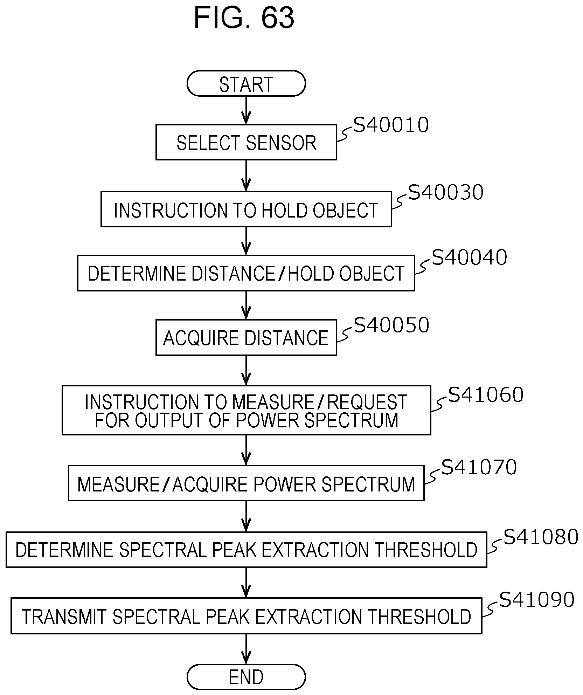

Fig. 63 is a flowchart illustrating operations of the system in this modification example. In this modification example, the calibration device 700 calibrates an extraction threshold of the spectral peak of the sensing device 100 based on the noise state of interference light, which is one of internal states of the sensing device 100. In the operations of Embodiment 5 illustrated in Fig. 61, the pieces of data each measured at two different distances were used for calibration, while in this modification example, data measured at one distance is used. For this reason, the operation in step S40020 is not included in Fig. 63. The operations from step S40010 and step S40030 to step S40050 in Fig. 63 are similar to the operations in Fig. 61, and thus a description thereof will be omitted.

(Step S41060)

In step S41060, the calibration device 700 outputs a control signal instructing the sensing device 100 to perform measurement. The control signal includes a signal such as a sensor number for specifying the sensor determined in step S40010 and a signal specifying the data format to be outputted. As described earlier, the power spectrum is specified as the output data format in this modification example. The sensing device 100 acquires the control signal from the calibration device 700 through the communication circuit 120.

(Step S41070)

The sensing device 100 receives the control signal outputted by the calibration device 700 in step S41060 and performs the measurement operation. The sensing device 100 determines a power spectrum by frequency-analyzing interference light detected by the photodetector 230. The data format of the power spectrum is, for example, similar to the format illustrated in Fig. 39 or 40 of Embodiment 2. The sensing device 100 aggregates the determined power spectrum data according to a predefined power spectrum output format and transmits the data to the calibration device 700. In step S41070, the calibration device 700 acquires the power spectrum data transmitted by the sensing device 100.

Note that the data format illustrated in Fig. 39 or 40 of Embodiment 2 includes the position of the sensing device 100 and the direction of the sensing device 100 as the fixed values, in order to convert the output data from the sensing device 100 into a point cloud. In this modification example, data not necessary for calibration may be excluded from the output data.

In addition, in the data format illustrated in Figs. 39 and 40, for each frame, the power spectrum data for each laser light emission direction in the frame is continuously outputted, and further, data for a plurality of frames is continuously outputted, while in this modification example, two power spectra acquired in one measurement, that is, the up-chirp power and the down-chirp power spectrum, are acquired. This corresponds to, for example, data from $s_{un1}$ to $s_{dnm}$ in one emission direction n, illustrated in Fig. 40.

(Step S41080)

In step S41080, the processing circuit 710 of the calibration device 700 calculates standard power of noise based on the power spectrum values acquired from the sensing device 100. Then, the processing circuit 710 determines a value exceeding the standard power of noise, as the extraction threshold of the spectral peak. The extraction threshold of the spectral peak is determined for each of up-chirp and down-chirp. The determination of the threshold may be determined based on a value inputted by the user through the unillustrated input means. At this time, the calibration device 700 displays the power spectrum through the display device 730.

(Step S41090)

In step S41090, the calibration device 700 transmits the extraction thresholds of the spectral peaks for up-chirp and down-chirp, respectively, with respect to the sensing device 100 determined in step S41080. The extraction thresholds of the spectral peaks are examples of the parameters for calibrating the sensing device 100 in this modification example. In subsequent measurement operations, the sensing device 100 can acquire the spectral peak of interference light accurately by using the extraction thresholds and distinguishing the spectral peak of interference light from the peak due to noise.

Note that the data format of the power spectrum only has to include a frequency for each data point or a numeric value corresponding to the frequency, and intensity for each data point for the number of data points.

According to a calibration system of this modification example, the user or the calibration device 700 can confirm a noise state of the interference light by checking S/N on the power spectrum. This makes it possible to determine presence or absence of abnormality in the sensor 200 or necessity of adjustment, and also facilitates identification of a cause of abnormality. Therefore, adjustment of the sensing device 100 at the time of shipment, adjustment at the time of maintenance, or repair at the time of maintenance is facilitated.

(Modification Example 2 of Embodiment 5)

Next, Modification Example 2 of the fifth embodiment of the present disclosure will be described.

In the fifth embodiment and Modification Example 1, the sensing device 100 outputs the spectrum information such as the spectral peak or the power spectrum, according to the specification of the data format included in the control signal outputted by the calibration device 700. In contrast, in this modification example, the calibration device 700 outputs a control signal specifying an interference light waveform as the output data format, and the sensing device 100 outputs data on the interference light waveform according to the received control signal. The data on the interference light waveform is generated by digitizing the waveform of the interference light outputted from the detector 230 of the sensor 200. A configuration of the system of this modification example is similar to the configuration described using Figs. 59 and 60.

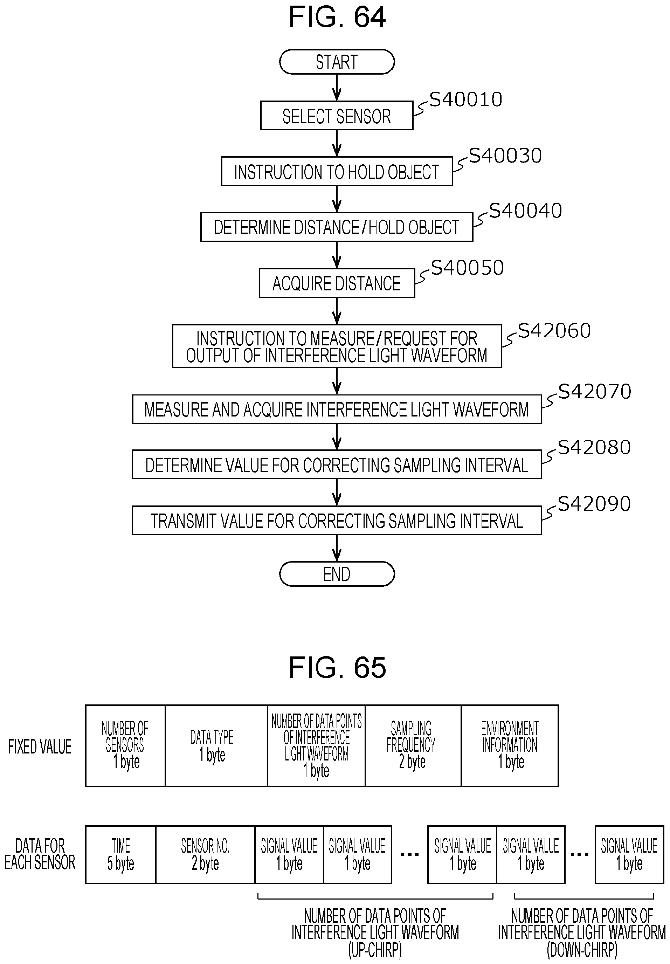

Fig. 64 is a flowchart illustrating the operations of the system of this modification example. In this modification example, the calibration device 700 creates a correction value that corrects a sampling interval when fast Fourier-transforming the interference light waveform based on the interference light waveform acquired from the sensing device 100, and transmits the correction value to the sensing device 100. The sensing device 100 uses the correction value to correct a sampling interval when fast Fourier-transforming the detection signal of the photodetector 230. The correction value is, for example, a correction value for correcting nonlinearity of the light emitting element 212 included in the sensor 200. The operations in step S40010, and from steps S40030 to S40050 in Fig. 64 are similar to Figs. 61 and 63, and thus a description thereof will be omitted.

(Step S42060)

In step S42060, the calibration device 700 outputs a control signal instructing the sensing device 100 to perform measurement. The control signal includes a signal such as a sensor number for specifying the sensor determined in step S40010 and a signal specifying the output data format. The interference light waveform is specified as the output data format in this modification example 2. The sensing device 100 acquires the control signal from the calibration device 700 through the communication circuit 120.

(Step S42070)

The sensing device 100 receives the control signal outputted by the calibration device 700 in step S42060 and performs the measurement operation. The sensing device 100 cuts out a waveform in a predefined section from the interference light detected by the photodetector 230. The cut-out waveform is, for example, a signal value digitized every fixed period of time. The sensing device 100 groups the cut-out interference light waveforms according to the predefined output format, and transmits the waveforms to the calibration device 700. In step S42070, the calibration device 700 acquires data on the interference light waveform transmitted by the sensing device 100.

Fig. 65 is an example of a data format when transmitting and receiving the interference light waveform. In the example of Fig. 65, the number of the sensors 200 included in the sensing device 100, the type of data to be transmitted, the number of data points of the interference light waveform, the sampling frequency when digitizing the interference light waveform, and environment information are written as the fixed values. Furthermore, as data for each sensor, the time of data acquisition, and the number of the sensor, followed by signal values for each data point of the interference light waveform in up-chirp are written for the number of interference light waveform data points written as the fixed values. Then, signal values for each data point of the interference light waveform in down-chirp is written for the number of data points, similarly to up-chirp. Note that the data format of the interference light waveform may be any data format as far as the receiving side can reproduce the interference light as a time waveform. The order and the writing method of data are not limited to the format described above.

(Step S42080)

In step S42080, the processing circuit 710 of the calibration device 700 generates a correction value that corrects a sampling interval when fast Fourier-transforming the interference light waveform based on the interference light waveform data acquired from the sensor 200 to be calibrated. The correction value is determined so that distortion of interference light waveform due to nonlinearity of the light emitting element 212 can be corrected, for example. In addition, the correction value is determined for each of the up-chirp waveform and the down-chirp waveform.

(Step S42090)

In step S42090, the calibration device 700 transmits the correction values for up-chirp and down-chirp, respectively, determined in step S42080 to the sensing device 100. The correction values are examples of the parameters for calibrating the sensing device 100 in this modification example.

During subsequent measurement operations, the sensing device 100 performs the fast Fourier transformation when performing the frequency analysis on the detection signal of the detector 230 based on the correction values. This allows the sensing device 100 to correct the distortion of the interference light waveform due to the nonlinearity of the light emitting element 212 to perform measurement with high accuracy.

As described above, according to the calibration system of this modification example, it is possible to easily correct the distortion of the interference light waveform due to differences in characteristics of each component of the light emitting element 212 or age deterioration of the light emitting element 212.

Industrial Applicability

The techniques of the present disclosure can be widely used in devices or systems that acquire positional information of physical objects by sensing the surrounding environment. For example, the techniques of the present disclosure can be used in devices or systems that utilize FMCW LiDAR.

Reference Signs List

| | |
|---|---|
| 100 | sensing device |
| 110 | processing circuit |
| 120 | communication circuit |
| 130 | storage device |
| 200 | sensor |
| 210 | light source |
| 211 | drive circuit |
| 212 | light emitting element |
| 220 | interference optical system |
| 221 | divider |
| 222 | mirror |
| 223 | collimator |
| 230 | photodetector |
| 240 | processing circuit |
| 250 | clocking circuit |
| 300 | mobile object |
| 310 | communication device |
| 320 | controller |
| 330 | drive device |
| 340 | processing device |
| 350 | storage device |
| 360 | input device |
| 400 | fixed body |
| 500 | server |
| 510 | input device |
| 520 | output device |

530 processing device
540 storage device
550 communication device
600 network

**Claims**

1. A sensing device comprising:

   a light source that emits light with modulated frequencies;
   an interference optical system that separates the light emitted from the light source into reference light and output light and generates interference light between reflected light and the reference light, the reflected light being generated by the output light being reflected at a reflecting point of a physical object;
   a photodetector that receives the interference light and outputs a detection signal according to intensity of the interference light; and
   a processing circuit that processes the detection signal, wherein
   the processing circuit selects a specific data format from a plurality of data formats, the processing circuit being capable of outputting the data formats, generates, based on the detection signal, measurement data having the specific data format that is selected, and outputs output data including the measurement data.

2. The sensing device according to claim 1, wherein the processing circuit generates positional information of the reflecting point based on the detection signal and generates the measurement data including the positional information.

3. The sensing device according to claim 1 or 2, wherein the processing circuit generates velocity information of the reflecting point based on the detection signal and generates the measurement data including the velocity information.

4. The sensing device according to claim 3, wherein the velocity information is information indicating a relative velocity vector of the reflecting point with respect to the sensing device or a component of the relative velocity vector in a direction along a straight line connecting the sensing device and the reflecting point.

5. The sensing device according to any one of claims 1 to 4, wherein the processing circuit generates spectrum information of the interference light based on the detection signal and generates the measurement data including the spectrum information.

6. The sensing device according to claim 5, wherein the spectrum information includes information on a power spectrum of the detection signal or a peak frequency of the power spectrum.

7. The sensing device according to any one of claims 1 to 4, wherein the processing circuit generates waveform data of the interference light based on the detection signal and generates the measurement data including the waveform data.

8. The sensing device according to any one of claims 1 to 7, wherein the processing circuit:

   generates positional information and velocity information of the reflecting point based on the detection signal;
   generates information indicating a degree of danger of the physical object based on the velocity information; and
   generates the measurement data including the positional information and the information indicating the degree of danger.

9. The sensing device according to any one of claims 1 to 8, wherein the processing circuit:

   generates positional information and velocity information of each of a plurality of reflecting points irradiated with the output light;
   divides the plurality of reflecting points to one or more clusters based on the positional information and determines one velocity vector for each cluster based on the velocity information of three or more reflecting points included in each cluster; and
   generates the measurement data including information indicating the velocity vector of each cluster.

10. The sensing device according to any one of claims 1 to 9, wherein the processing circuit includes identification information indicating the specific data format in the output data and outputs the output data.

11. The sensing device according to any one of claims 1 to 10, wherein the processing circuit selects the specific data format from the plurality of data formats according to a request signal inputted from another device.

12. The sensing device according to any one of claims 1 to 9 further comprising a communication circuit that transmits the output data to the other device.

13. A method comprising:

   obtaining output data including measurement data, from one or more sensing devices including a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal;

discriminating a data format of the measurement data; and

generating positional information of the physical object by applying arithmetic processing according to the data format that is discriminated to the measurement data.

14. The method according to claim 13 further comprising generating velocity information of the physical object by applying the arithmetic processing according to the data format that is discriminated to the measurement data.

15. The method according to claim 13 or 14 further comprising generating velocity vector information of the physical object based on velocity component information, when the data format of the measurement data is a data format that includes the velocity component information indicating a component of the relative velocity vector in a direction along a straight line connecting the sensing device and the reflecting point.

16. The method according to any one of claims 13 to 15, wherein

the measurement data includes positional information and velocity information of each of a plurality of reflecting points irradiated with the output light, and

the method comprises dividing the plurality of reflecting points to one or more clusters based on the positional information, determining one velocity vector for each cluster based on the velocity information of three or more reflecting points included in each cluster, and outputting information on the velocity vector of each cluster as velocity vector information of the physical object.

17. The method according to any one of claims 13 to 16, wherein

the one or more sensing devices are a plurality of sensing devices,

the output data acquired from each of the plurality of sensing devices includes information indicating positions and orientations of the sensing devices, and

the positional information of the physical object is generated based on the information indicating the positions and the orientations of the plurality of sensing devices.

18. The method according to any one of claims 13 to 17 comprising generating the positional information of the physical object and velocity vector information of the physical object based on spectrum information, when the data format of the measurement data is a data format including the spectrum information of the detection signal.

19. The method according to claim 18, wherein the spectrum information includes information on a power spectrum of the detection signal or a peak frequency of the power spectrum.

20. The method according to any one of claims 13 to 19 comprising generating the positional information of the physical object and velocity vector information of the physical object, based on power spectrum information or peak frequency information, when the data format of the measurement data is a data format that includes the power spectrum information indicating a power spectrum of the detection signal or a data format that includes the peak frequency information indicating a peak frequency of the power spectrum of the detection signal.

21. The method according to any one of claims 13 to 20 further comprising transmitting a request signal specifying the data format of the measurement data to the one or more sensing devices.

22. The method according to claim 21, wherein

the one or more sensing devices are mounted on a mobile object, and

the request signal is transmitted to the one or more sensing devices when abnormality is detected in the mobile object itself or in an environment in which the mobile object runs.

23. The method according to any one of claims 13 to 22, wherein

the output data includes identification information indicating the data format of the measurement data, and

the discrimination of the data format is performed based on the identification information.

**24.** The method according to any one of claims 13 to 20 further comprising outputting a signal for controlling operations of a mobile object based on the positional information of the physical object.

**25.** The method according to claim 13 comprising:

generating parameters for calibrating the sensing device based on the measurement data; and transmitting the parameters to the sensing device.

**26.** A processing device comprising:

a processor; and
a memory storing a computer program that is executed by the processor, wherein
the processor performs:

obtaining output data including measurement data, from one or more sensing devices including a light source that emits frequency-modulated light; an interference optical system that separates the light emitted from the light source into reference light and output light and generates interference light between reflected light and the reference light, the reflected light being generated by the output light being reflected at a reflecting point of a physical object; a photodetector that receives the interference light and outputs a detection signal according to intensity of the interference light; and a processing circuit that generates the measurement data based on the detection signal;
discriminating a data format of the measurement data; and
generating positional information of the physical object by applying arithmetic processing according to the data format that is discriminated to the measurement data.

# FIG. 1

# FIG. 2

# FIG. 3

# FIG. 4

# FIG. 5

| SERVER | SENSING DEVICE |
|---|---|
| | |
| | RANGING, VELOCITY MEASUREMENT |
| RECEIVE ← | POSITION, VELOCITY, TIME OUTPUT |
| COORDINATE TRANSFORMATION / TIME ADJUSTMENT | |
| RECORD | |
| | |
| | RANGING, VELOCITY MEASUREMENT |
| RECEIVE ← | POSITION, VELOCITY, TIME OUTPUT |
| COORDINATE TRANSFORMATION / TIME ADJUSTMENT | |
| RECORD | |
| ⋮ | ⋮ |
| TIME/POSITION ANALYSIS REQUEST → RECEIVE ANALYSIS REQUEST | |
| TIME-SPACE CUT-OUT PROCESSING | |
| ← DATA OUTPUT | |

# FIG. 6

| MOBILE OBJECT | SERVER | SENSING DEVICE |
|---|---|---|
| | | RANGING, VELOCITY MEASUREMENT<br>POSITION, VELOCITY, TIME OUTPUT |
| | RECEIVE ← | |
| | COORDINATE TRANSFORMATION / TIME ADJUSTMENT | |
| | RECORD | |
| | | RANGING, VELOCITY MEASUREMENT<br>POSITION, VELOCITY, TIME OUTPUT |
| | RECEIVE ← | |
| | COORDINATE TRANSFORMATION / TIME ADJUSTMENT | |
| | RECORD | |
| TRANSMIT POSITIONAL DATA → | RECEIVE | |
| | DETERMINATION ON APPROACH TO SPECIFIC AREA | |
| RECEIVE ← | OUTPUT POINT CLOUD DATA WITH<br>VELOCITY INFORMATION | |
| CONTROL OPERATION | | |

# FIG. 7

100

OBJECT

OUTPUT LIGHT

REFLECTED LIGHT

200 SENSOR

SENSOR

SENSOR

130 STORAGE DEVICE

120 COMMUNICATION CIRCUIT

PROCESSING CIRCUIT

110

# FIG. 8

# FIG. 9

# FIG. 10

# FIG. 11A

# FIG. 11B

# FIG. 12

# FIG. 13

# FIG. 14

FIXED VALUE

| POSITION 3 byte | DIRECTION 3 byte | NUMBER OF SENSORS 1 byte | VELOCITY FORMAT 1 byte |
|---|---|---|---|

VARIATION VALUE OF EACH FRAME

FRAME 1

| NUMBER OF POINTS 1 byte | TIME 5 byte | POSITION 3 byte | VELOCITY 3 byte | TIME 5 byte | POSITION 3 byte | VELOCITY 3 byte | ... | TIME 5 byte | POSITION 3 byte | VELOCITY 3 byte |
|---|---|---|---|---|---|---|---|---|---|---|

DATA SET FOR EACH POINT

DATA SETS FOR NUMBER OF POINTS

FRAME 2

| NUMBER OF POINTS 1 byte | TIME 5 byte | POSITION 3 byte | VELOCITY 3 byte | TIME 5 byte | POSITION 3 byte | VELOCITY 3 byte | ... | TIME 5 byte | POSITION 3 byte | VELOCITY 3 byte |
|---|---|---|---|---|---|---|---|---|---|---|

# FIG. 15

EP 4 394 445 A1

## FIG. 16

FIXED VALUE: POSITION, DIRECTION, NUMBER OF SENSORS
REFERENCE TIME : YYYY-MM-DD-hh:mm
TIME INFORMATION t0: $st_0$ μsec   *DIFFERENCE FROM REFERENCE TIME
TIME INFORMATION t1 : $st_1$ μsec
 ...
TIME INFORMATION t(N-1): $st_{N-1}$  μsec
VELOCITY FORMAT : vt   *FORMAT OF VELOCITY INFORMATION IN THE FRAME
TOTAL NUMBER OF POINTS : NumOfPoint   *NUMBER OF POINTS IN FRAME
POINT P0: (x0,y0,z0,t0,vx0,vy0,vz0)  *POSITIONAL INFORMATION+TIME ID+VELOCITY INFORMATION
POINT P1: (x1,y1,z1,t0,vx1,vy1,vz1)
POINT P2: (x2,y2,z2,t1,vx 2 ,vy 2 ,vz 2 )
 ...
POINT Pn: (xn,yn,zn,tm,vxk,vyk,vzk)
 ...

## FIG. 17

FIXED VALUE: POSITION, DIRECTION, NUMBER OF SENSORS
REFERENCE TIME : YYYY-MM-DD-hh:mm
TIME INFORMATION t0: $st_0$ μsec
TIME INFORMATION t1 : $st_1$ μsec
 ...
TIME INFORMATION t(N-1): $st_{N-1}$  μsec
CLUSTER VELOCITY v0 : (vx0,vy0,vz0)
CLUSTER VELOCITY v1 : (vx1,vy1,vz1)
 ...
CLUSTER VELOCITY vk : (vxk,vyk,vzk)
TOTAL NUMBER OF POINTS : NumOfPoint
POINT P0: (x0,y0,z0,t0,v0)
POINT P1: (x1,y1,z1,t0,v1)
POINT P2: (x2,y2,z2,t1,v1)
 ...
POINT Pn: (xn,yn,zn,tm,vk)
 ...

# FIG. 18

```
                    START

                        ↓        S1100        yes
                    ╱ END? ╲  ─────────────────────→
                    ╲      ╱
                        │ no
                        ↓
                                     S1200
        yes     ╱                              ╲
    ←───────────  HAS FRAME PERIOD ENDED?       ╲
                ╲                              ╱
                        │ no
                        ↓          S1300
                ╱                        ╲       no
                  HAS DATA BEEN ACQUIRED?  ────────→
                ╲                        ╱
                        │ yes
                        ↓
                   ┌─────────┐  S1400
                   │  STORE  │
                   └─────────┘
                        │
                        ↓
          ┌──────────────────────────────┐  S1500
          │  CLUSTERING OF POINT CLOUDS   │
          └──────────────────────────────┘
                        ↓              S1600
        yes     ╱                        ╲
    ←───────────   COMPLETED FOR          ╲
                   ALL CLUSTERS?          ╱
                ╲                        ╱
                        │ no
                        ↓
                   ┌──────────────┐  S1700
                   │ SELECT CLUSTER│
                   └──────────────┘
   ┌──────────────┐                   ↓
   │ GENERATE DATA │  S1900    ┌─────────────────┐  S1800
   └──────────────┘           │ ESTIMATE VELOCITY│
          ↓                    └─────────────────┘
   ┌──────────────┐  S2000
   │   TRANSMIT    │
   └──────────────┘

                                        END
```

## FIG. 19

| SENSOR ID | POINT ID | POSITION | TIME | RELATIVE VELOCITY COMPONENT | CLUSTER ID |
|---|---|---|---|---|---|
| S0 | P0 | (x0, y0, z0) | t0 | (vcx0, vcy0, vcz0) | C0 |
| S0 | P1 | (x1, y1, z1) | t1 | (vcx1, vcy1, vcz1) | C0 |
| ⋮ | ⋮ | ⋮ | ⋮ | ⋮ | ⋮ |

## FIG. 20

| CLUSTER ID | RELATIVE VELOCITY VECTOR |
|---|---|
| C0 | (vx0, vy0, vz0) |
| C1 | (vx1, vy1, vz1) |
| ⋮ | ⋮ |

## FIG. 21

S1800

SELECT THREE DATA POINTS — S1810

CALCULATE VELOCITY VECTOR — S1820

## FIG. 22A

CLUSTER GRAVITY CENTER

# FIG. 22B

# FIG. 23

## FIG. 24

- DIVIDE CLUSTER INTO REGIONS — S1830
- S1800
- HAS PROCESSING BEEN COMPLETED FOR ALL REGIONS? — S1840
- yes
- no
- SELECT REGION — S1850
- SELECT THREE DATA POINTS — S1860
- ESTIMATE VELOCITY VECTOR — S1870
- AVERAGE — S1880

## FIG. 25

# FIG. 26

```
                    ( START )
                        │
                        ▼
                      S1100
              ┌───────────────┐      yes
              ◇     END?      ◇──────────┐
              └───────────────┘          │
                        │ no             │
                        ▼                │
                      S1200              │
      yes   ┌───────────────────────┐    │
    ┌───────◇ HAS FRAME PERIOD ENDED?◇──┤
    │       └───────────────────────┘    │
    │              │ no                   │
    │              ▼                      │
    │            S1300                    │
    │       ┌────────────────────┐   no  │
    │       ◇ HAS DATA BEEN ACQUIRED?◇────┤
    │       └────────────────────┘        │
    │              │ yes                  │
    │              ▼                      │
    │            S1400                    │
    │       ┌──────────┐                  │
    │       │  STORE   │──────────────────┘
    │       └──────────┘
    ▼
  S1910
┌───────────────┐
│ GENERATE DATA │
└───────────────┘
    │
    ▼
  S2000
┌───────────────┐
│   TRANSMIT    │
└───────────────┘

                              ( END )
```

# FIG. 27

| SENSOR ID | POINT ID | POSITION | TIME | RELATIVE VELOCITY COMPONENT |
|---|---|---|---|---|
| S0 | P0 | (x0, y0, z0) | t0 | (vcx0, vcy0, vcz0) |
| S0 | P1 | (x1, y1, z1) | t1 | (vcx1, vcy1, vcz1) |
| ⋮ | ⋮ | ⋮ | ⋮ | ⋮ |

# FIG. 28

500

510

INPUT DEVICE

STORAGE DEVICE — 540

PROCESSING DEVICE

COMMUNICATION DEVICE — 550

530

OUTPUT DEVICE

520

# FIG. 29

| TIME | POSITION | VELOCITY |
|------|----------|----------|
| t0 | (X0, Y0, Z0) | (Vx0, Vy0, Vz0) |
| t1 | (X1, Y1, Z1) | (Vx1, Vy1, Vz1) |
| ⋮ | ⋮ | ⋮ |

# FIG. 30

START

S3100
END? — yes

no

S3200
DATA RECEIVED? — no

yes

S3300
VELOCITY COMPONENT? — no

yes

CLUSTERING OF POINT CLOUDS — S3400

S3500
COMPLETED FOR ALL CLUSTERS? — yes

no

SELECT CLUSTER — S3600

ESTIMATE VELOCITY VECTOR — S3700

COORDINATE TRANSFORMATION — S3800

STORE — S3900

END

# FIG. 31

START

S4100
END? — yes →

no

S4200
DATA RECEIVED? — no →

yes

S4300
COORDINATE TRANSFORMATION

S4400
VELOCITY COMPONENT? — no →

yes

S4500
CLUSTERING OF POINT CLOUDS

S4600
COMPLETED FOR ALL CLUSTERS? — yes →

no

S4700
SELECT CLUSTER

S4800
VELOCITY VECTOR UNCALCULATED? — yes →

no

S4900
no ← INCONSISTSENT VELOCITY VECTOR?

yes

S5000
DIVIDE CLUSTER

S5200
APPLY VELOCITY VECTOR

S5100
ESTIMATE VELOCITY VECTOR OF CLUSTER

S5300
STORE

END

# FIG. 32

| TIME | POSITION | VELOCITY | VELOCITY TYPE |
|---|---|---|---|
| t0 | (x0, y0, z0) | (vcx0, vcy0, vcz0) | 0 |
| t1 | (x1, y1, z1) | (vx1, vy1, vz1) | 1 |
| ⋮ | ⋮ | ⋮ | |

# FIG. 33

START

S3100

END? —yes→

no

S3200
DATA RECEIVED? —no

yes

S6100
COMPLETED FOR ALL FRAMES? —yes

no

S3300
VELOCITY COMPONENT? —no

yes

CLUSTERING OF POINT CLOUDS  S3400

S3500
COMPLETED FOR ALL CLUSTERS? —yes

no

SELECT CLUSTER  S3600

ESTIMATE VELOCITY VECTOR  S3700

COORDINATE TRANSFORMATION  S3800

STORE  S3900

END

FIG. 34

```
                        ( START )
                            │
                            ▼
                        S4100
                   ◇ END? ◇ ──yes──────────────────────┐
                            │no                          │
                            ▼ ◄──────────┐               │
                        S4200            │               │
                 ◇ DATA RECEIVED? ◇ ─no──┘               │
                            │yes                          │
                            ▼                             │
                 S4300                                    │
            │ COORDINATE TRANSFORMATION │                 │
                            │ ◄─────────────────┐         │
                            ▼                   │         │
              S6100                             │         │
   Yes ◄── ◇ COMPLETED FOR ALL FRAMES? ◇        │         │
    │                       │no                 │         │
    │                       ▼                    │         │
    │            S4400                            │        │
    │     ◇ VELOCITY COMPONENT? ◇ ──no───────────┼────────┤
    │                       │yes                  │        │
    │                       ▼                     │        │
    │          S4500                               │       │
    │     │ CLUSTERING OF POINT CLOUDS │           │       │
    │                       │ ◄──────────┐         │       │
    │        ┌──────────────┤ ◄────────┐ │         │       │
    │        │              ▼          │ │         │       │
    │        │   S4600                 │ │         │       │
    │        │ ◇ COMPLETED FOR ALL CLUSTERS? ◇ ─yes─┘      │
    │        │              │no         │ │               │
    │        │              ▼           │ │               │
    │        │    S4700                 │ │               │
    │        │  │ SELECT CLUSTER │      │ │               │
    │        │              │           │ │               │
    │        │              ▼           │ │               │
    │        │      S4800               │ │               │
    │        │ ◇ VELOCITY VECTOR UNCALCULATED? ◇ ─yes─┐   │
    │        │              │no          │ │          │   │
    │        │              ▼            │ │          │   │
    │        │       S4900               │ │          │   │
    │  no ◄─ ◇ INCONSISTSENT VELOCITY VECTOR? ◇        │   │
    │        │              │yes         │ │          │   │
    │        │              ▼            │ │          │   │
    │        │    S5000                  │ │          │   │
    │        │  │ DIVIDE CLUSTER │       │ │          │   │
    │        │              │            │ │          │   │
    │   S5200 │             ▼ ◄──────────┘ │          │   │
    │  │ APPLY │  S5100                     │          │   │
    │  │ VELOCITY│ ESTIMATE VELOCITY VECTOR│           │   │
    │  │ VECTOR │ │     OF CLUSTER         │           │   │
    │        └──────────────│ ◄────────────────────────┘   │
    │                       ▼                               │
    │              S5300                                    │
    │            │ STORE │                                  │
    │                                                       ▼
    │                                                   ( END )
```

FIG. 35

```
            START
              │
      ┌───────▼──────┐      S7000
      │   ◇ END? ◇   │─── yes ──────────┐
      └──────┬───────┘                  │
             │ no                       │
             │         ┌────◄───────┐   │
             ▼         │            │   │
      ┌──────────────────┐  S7100   │   │
 yes ─┤  ◇ IS THERE      │          │   │
   │  │  INFORMATION     │          │   │
   │  │  REQUEST? ◇      │── no ─────┘   │
   │  └──────────────────┘              │
   ▼                                    │
┌──────────────┐   S7200                │
│ ACQUIRE DATA │                        │
└──────┬───────┘                        │
       ▼                                │
┌──────────────┐   S7300                │
│ GENERATE DATA│                        │
└──────┬───────┘                        │
       ▼                                │
┌──────────┐   S7400                    ▼
│ DISPLAY  │                         ┌──────┐
└──────────┘                         │ END  │
                                     └──────┘
```

FIG. 36

```
            START
              │
      ┌───────▼──────┐      S8000
      │   ◇ END? ◇   │─── yes ──────────┐
      └──────┬───────┘                  │
             │ no                       │
             │         ┌────◄───────┐   │
             ▼         │            │   │
      ┌──────────────────┐  S8100   │   │
 yes ─┤  ◇ OUTPUT TIME? ◇│── no ─────┘   │
   │  └──────────────────┘              │
   ▼                                    │
┌──────────────┐   S8200                │
│ ACQUIRE DATA │                        │
└──────┬───────┘                        │
       ▼                                │
┌──────────────┐   S8300                │
│ GENERATE DATA│                        │
└──────┬───────┘                        │
       ▼                                │
┌──────────┐   S8400                    ▼
│ TRANSMIT │                         ┌──────┐
└──────────┘                         │ END  │
                                     └──────┘
```

# FIG. 37

```
                    START

          S8000
            END?          yes

            no

                    S8110
   yes      RECEIVED?

                    no

            S8200
   ACQUIRE DATA

            S8300
   GENERATE DATA

            S8400
     TRANSMIT

                    END
```

# FIG. 38

| SENSOR ID | EMISSION DIRECTION | TIME | SPECTRUM |
|-----------|--------------------|------|----------|
| S1 | $(r1, \theta 1, \varphi 1)$ | t1 | $s_1,\ s_2,\ \cdots\cdots\ s_i,\ \cdots\cdots\ s_m$ |
| ⋮ | ⋮ | ⋮ | ⋮ |

# FIG. 39

EP 4 394 445 A1

# FIG. 40

FIXED VALUE: POSITION, DIRECTION, NUMBER OF SENSORS, DATA TYPE, NUMBER OF SPECTRUM POINTS, FREQUENCY RANGE

REFERENCE TIME : YYYY-MM-DD-hh:mm

TIME INFORMATION t0: $st_0$ μsec   *DIFFERENCE FROM REFERENCE TIME

TIME INFORMATION t1: $st_1$ μsec

. . .

TIME INFORMATION t(N-1): $st_{N-1}$  μsec

EMISSION DIRECTION PARAMETERS: NUMBER OF STEPS IN x-AXIS, NUMBER OF STEPS IN y-AXIS, x-AXIS VIEWING ANGLE, y-AXIS VIEWING ANGLE

DATA FORMAT : vt   *DATA TYPE IN THE FRAME (VELOCITY/POWER SPECTRUM/SPECTRAL PEAK)

NUMBER OF IRRADIATION POINTS : NumOfPoint   *NUMBER OF IRRADIATION POINTS IN FRAME

EMISSION DIRECTION 0: $(d_{01}, d_{02}, d_{03}, d_{04}, t0, s_{u11}, s_{u12}, \cdots\cdots s_{u1i}, \cdots\cdots s_{u1m}, s_{d11}, s_{d12}, \cdots\cdots s_{d1i}, \cdots\cdots s_{d1m})$

EMISSION DIRECTION 1: $(d_{11}, d_{12}, d_{13}, d_{14}, t0, s_{u21}, s_{u22}, \cdots\cdots s_{u2i}, \cdots\cdots s_{u2m}, s_{d21}, s_{d22}, \cdots\cdots s_{d2i}, \cdots\cdots s_{d2m})$

EMISSION DIRECTION 2 : $(d_{21}, d_{22}, d_{23}, d_{24}, t1, s_{u31}, s_{u32}, \cdots\cdots s_{u3i}, \cdots\cdots s_{u3m}, s_{d31}, s_{d32}, \cdots\cdots s_{d3i}, \cdots\cdots s_{d3m})$

. . .

EMISSION DIRECTION n: $(d_{n1}, d_{n2}, d_{n3}, d_{n4}, t_{N-1}, s_{un1}, s_{un2}, \cdots\cdots s_{uni}, \cdots\cdots s_{unm}, s_{dn1}, s_{dn2}, \cdots\cdots s_{dni}, \cdots\cdots s_{dnm})$

. . .

*EMISSION DIRECTION PARAMETER + TIME ID + SPECTRUM DATA

# FIG. 41

FIXED VALUE

| POSITION 3 byte | DIRECTION 3 byte | NUMBER OF SENSORS 1 byte | DATA TYPE 1 byte | NUMBER OF IRRADIATION POINTS 2 byte | ... | NUMBER OF IRRADIATION POINTS 2 byte | NUMBER OF PEAKS 2 byte |

NUMBER OF IRRADIATION POINTS FOR EACH SENSOR

VARIATION VALUE OF EACH FRAME

FRAME 1

| TIME 5 byte | EMISSION DIRECTION 2 byte | FREQUENCY 1 byte | INTENSITY (UP) 1 byte | FREQUENCY 1 byte | INTENSITY (DOWN) 1 byte | ... | FREQUENCY 1 byte | INTENSITY (DOWN) 1 byte | .... | TIME 5 byte | EMISSION DIRECTION 2 byte | FREQUENCY 1 byte | INTENSITY (UP) 1 byte | FREQUENCY 1 byte | INTENSITY (DOWN) 1 byte | ... | FREQUENCY 1 byte | INTENSITY (DOWN) 1 byte |

DATA SET FOR EACH EMISSION DIRECTION

DATA SETS FOR NUMBER OF TIMES OF EMISSION

FRAME 2

| TIME 5 byte | EMISSION DIRECTION 2 byte | FREQUENCY 1 byte | INTENSITY (UP) 1 byte | FREQUENCY 1 byte | INTENSITY (DOWN) 1 byte | ... | FREQUENCY 1 byte | INTENSITY (DOWN) 1 byte | .... | TIME 5 byte | EMISSION DIRECTION 2 byte | FREQUENCY 1 byte | INTENSITY (UP) 1 byte | FREQUENCY 1 byte | INTENSITY (DOWN) 1 byte | ... | FREQUENCY 1 byte | INTENSITY (DOWN) 1 byte |

# FIG. 42

FIXED VALUE: POSITION, DIRECTION, NUMBER OF SENSORS, DATA TYPE

REFERENCE TIME : YYYY-MM-DD-hh:mm

TIME INFORMATION t0: $st_0$ μsec     *DIFFERENCE FROM REFERENCE TIME

TIME INFORMATION t1: $st_1$ μsec

...

TIME INFORMATION t(N-1): $st_{N-1}$ μsec

EMISSION DIRECTION PARAMETERS: NUMBER OF STEPS IN x-AXIS, NUMBER OF STEPS IN y-AXIS, x-AXIS VIEWING ANGLE, y-AXIS VIEWING ANGLE

DATA FORMAT : vt    *DATA TYPE IN THE FRAME (VELOCITY/POWER SPECTRUM/SPECTRAL PEAK)

NUMBER OF IRRADIATION POINTS : NumOfPoint    *NUMBER OF IRRADIATION POINTS IN FRAME

NUMBER OF PEAKS : M   *NUMBER OF SPECTRAL PEAKS

EMISSION DIRECTION 0: $(d_{01}, d_{02}, d_{03}, d_{04}, t0, f_{u11}, p_{u11}, f_{u12}, p_{u12}, \cdots\cdots f_{u1M}, p_{u1M}, f_{d11}, p_{d11}, f_{d12}, p_{d12}, \cdots\cdots f_{d1M}, p_{d1M})$

EMISSION DIRECTION 1: $(d_{11}, d_{12}, d_{13}, d_{14}, t0, f_{u21}, p_{u21}, f_{u22}, p_{u22}, \cdots\cdots f_{u2M}, p_{u2M}, f_{d21}, p_{d21}, f_{d22}, p_{d22}, \cdots\cdots f_{d2M}, p_{d2M})$

EMISSION DIRECTION 2 : $(d_{21}, d_{22}, d_{23}, d_{24}, t1, f_{u31}, p_{u31}, f_{u32}, p_{u32}, \cdots\cdots f_{u3M}, p_{u3M}, f_{d31}, p_{d31}, f_{d32}, p_{d32}, \cdots\cdots f_{d3M}, p_{d3M})$

...

EMISSION DIRECTION n: $(d_{n1}, d_{n2}, d_{n3}, d_{n4}, t_{N-1}, f_{un1}, p_{un1}, f_{un2}, p_{un2}, \cdots\cdots f_{unM}, p_{unM}, f_{dn1}, p_{dn1}, f_{dn2}, p_{dn2}, \cdots\cdots f_{dnM}, p_{dnM})$

...

*EMISSION DIRECTION PARAMETER+TIME ID+PEAK FREQUENCY AND INTENSITY AT PEAK

# FIG. 43

# FIG. 44

# FIG. 45

| SERVER | MOBILE OBJECT |
|---|---|
| | RANGING, TRAVELING |
| ACCEPT INPUT ← | OUTPUT POSITION AND VELOCITY |
| MONITOR | |
| ⋮ | ⋮ |
| PERSON INTRUSION INFORMATION → PERSON DETECTED | |
| REQUEST DETAILED DATA → | RANGING, VELOCITY MEASUREMENT |
| ACCEPT INPUT ← | OUTPUT SPECTRUM |
| COORDINATE TRANSFORMATION / DISCRIMINATION / TRACKING | |
| PERSON MONITORING | ⋮ |
| ⋮ | |

# FIG. 46

START

S10010 SPECIAL PROCESSING? — yes

no

S10020 INPUT? — no

yes

S10030 DATA FOR NORMAL PROCESSING? — no

yes

ACQUIRE POSITIONAL INFORMATION — S10040

DETERMINE POSITION OF MOBILE OBJECT — S10060

RECORD POSITION OF MOBILE OBJECT — S10070

SPECIAL PROCESSING — S10100

# FIG. 47

# FIG. 48A

DATA FOR NORMAL PROCESSING

CHECKING DATA

| MOBILE OBJECT ID 1 byte | DATA FORMAT 1 byte |
|---|---|

MEASUREMENT VALUE

| NUMBER OF POINTS 1 byte | TIME 5 byte | POSITION 3 byte | TIME 5 byte | POSITION 3 byte | ... | TIME 5 byte | POSITION 3 byte |
|---|---|---|---|---|---|---|---|

DATA SET FOR EACH POINT

DATA SETS FOR NUMBER OF POINTS

# FIG. 48B

DATA FOR DETAILED ANALYSIS

CHECKING DATA

| MOBILE OBJECT ID 1 byte | DATA FORMAT 1 byte | MOBILE OBJECT VELOCITY VECTOR 2 byte |
|---|---|---|

FIXED VALUE

| NUMBER OF SENSORS 1 byte | NUMBER OF IRRADIATION POINTS 2 byte | NUMBER OF IRRADIATION POINTS 2 byte | ... | NUMBER OF IRRADIATION POINTS 2 byte | NUMBER OF SPECTRUM POINTS 2 byte | FREQUENCY RANGE 2 byte |
|---|---|---|---|---|---|---|

DATA SETS FOR NUMBER OF SENSORS

MEASUREMENT VALUE

| TIME 5 byte | EMISSION DIRECTION 2 byte | SPECTRUM INTENSITY (UP) 1 byte | SPECTRUM INTENSITY (DOWN) 1 byte | ... | SPECTRUM INTENSITY (DOWN) 1 byte | ... | TIME 5 byte | EMISSION DIRECTION 2 byte | SPECTRUM INTENSITY (UP) 1 byte | SPECTRUM INTENSITY (DOWN) 1 byte | ... | SPECTRUM INTENSITY (DOWN) 1 byte |
|---|---|---|---|---|---|---|---|---|---|---|---|---|

DATA SET FOR EACH EMISSION DIRECTION

DATA SETS FOR NUMBER OF TIMES OF EMISSION

# FIG. 49

S10150

S10160

CLUSTERING OF POINT CLOUDS ⟩S10161

PROCESSING COMPLETED
FOR ALL CLUSTERS? ⟩S10162

yes

no

SELECT CLUSTER ⟩S10163

HUMAN SHAPE? ⟩S10164

no

S10170

yes

CLUSTERING BASED ON VELOCITY VECTOR ⟩S10165

DIVIDED INTO
SMALLER CLUSTERS? ⟩S10166

no

yes

DETECT POINT CLOUD CLUSTER AS HUMAN ⟩S10167

# FIG. 50

```
                        START

                         │
                         ▼
                    ◇ END? ◇ ──── yes ──────┐    S20010
                         │                   │
                         │ no                │
                         ▼                   │
         ┌──── ◇ IS THERE INSTRUCTION ◇     │    S20020
         │ no    ON DATA FORMAT?            │
         │            │                      │
         │            │ yes                  │
         │            ▼                      │
         │      ┌──────────────┐            │    S20030
         │      │  SET FORMAT   │            │
         │      └──────────────┘            │
         │            │                      │
         └────────────┤                      │
                      ▼                      │
                ┌──────────────┐            │    S20040
                │   MEASURE     │            │
                └──────────────┘            │
                      │                      │
                      ▼                      │
            ┌────────────────────┐          │    S20050
            │ SIGNAL PROCESSING  │          │
            └────────────────────┘          │
                      │                      │
                      ▼                      │
    ┌── yes ◇ DATA FOR DETAILED ANALYSIS ◇ │    S20060
    │              REQUESTED?               │
    │                  │                    │
    │                  │ no                 │
    │                  ▼                    │
    │    ┌────────────────────────────┐    │    S20070
    │    │ GENERATE POSITIONAL        │    │
    │    │ INFORMATION                │    │
    │    └────────────────────────────┘    │
    │                  │                    │
    └──────────────────┤                    │
                       ▼                     │
         ┌────────────────────────────┐     │    S20080
         │ GENERATE TRANSMISSION DATA │     │
         └────────────────────────────┘     │
                       │                     │
                       ▼                     │
                ┌──────────────┐            │    S20090
                │   TRANSMIT    │            │
                └──────────────┘            │
                       │                     │
                       └─────────────────────┘

    END
```

# FIG. 51

INPUT DEVICE 360

100

SENSOR 200

SENSOR

PROCESSING DEVICE 340

STORAGE DEVICE 350

CONTROLLER 320

DRIVE DEVICE 330

300

# FIG. 52

START

SPECIAL PROCESSING? S30010

yes

no

ACQUIRE POINT CLOUD DATA S30020

DETERMINE OWN POSITION S30030

POINT CLOUD DATA COORDINATE TRANSFORMATION S30040

SPECIAL PROCESSING S30100

GENERATE COURSE S30050

GENERATE OPERATION CONTROL SIGNAL S30060

OPERATE S30070

FIG. 53

```
                                                    ┌─ S30100
                          ↓
        ┌──────────────────────────────────┐  ─ S30110
        │   INSTRUCTION TO REDUCE VELOCITY  │
        └──────────────────────────────────┘
                          ↓
        ┌──────────────────────────────────┐  ─ S30120
        │ GENERATE OPERATION CONTROL SIGNAL │
        └──────────────────────────────────┘
                          ↓
              ┌──────────────┐  ─ S30130
              │   OPERATE    │
              └──────────────┘
                          ↓
        ┌──────────────────────────────────┐  ─ S30140
        │  REQUEST DATA FOR DETAILED ANALYSIS │
        └──────────────────────────────────┘
                          ↓
    no            ◇ DATA ACQUIRED? ◇  ─ S30150
                          │ yes
                          ↓
    no        ◇ DATA FOR DETAILED ANALYSIS? ◇  ─ S30160
                          │ yes
                          ↓
        ┌──────────────────────────────────┐  ─ S30170
        │      ACQUIRE POINT CLOUD DATA      │
        │      WITH VELOCITY INFORMATION     │
        └──────────────────────────────────┘
                          ↓
              ┌──────────────┐  ─ S30180
              │  CLUSTERING  │
              └──────────────┘
                          ↓
              ┌──────────────────┐  ─ S30190
              │  CLASSIFY OBJECTS │
              └──────────────────┘
                          ↓
              ┌──────────────────┐  ─ S30200
              │  GENERATE COURSE  │
              └──────────────────┘
                          ↓
        ┌──────────────────────────────────┐  ─ S30210
        │ GENERATE OPERATION CONTROL SIGNAL │
        └──────────────────────────────────┘
                          ↓
              ┌──────────────┐  ─ S30220
              │   OPERATE    │
              └──────────────┘
                          ↓
                       S30010
```

# FIG. 54

S30100

INSTRUCTION TO REDUCE VELOCITY — S30110

GENERATE OPERATION CONTROL SIGNAL — S30120

OPERATE — S30130

REQUEST DATA FOR AUTONOMOUS MOVEMENT — S30340

DATA ACQUIRED? — S30150
no
yes

DATA FOR AUTONOMOUS MOVEMENT? — S30360
no
yes

ACQUIRE POINT CLOUD DATA WITH HAZARD CLASSIFICATION INFORMATION — S30370

GENERATE COURSE — S30380

GENERATE OPERATION CONTROL SIGNAL — S30210

OPERATE — S30220

S30010

## FIG. 55

| DATA FORMAT 1 byte | NUMBER OF POINTS 1 byte | TIME 5 byte | POSITION 3 byte | HAZARD CLASSIFICATION 1 byte | TIME 5 byte | POSITION 3 byte | HAZARD CLASSIFICATION 1 byte | ... | TIME 5 byte | POSITION 3 byte | HAZARD CLASSIFICATION 1 byte |

DATA SET FOR EACH POINT

DATA SETS FOR NUMBER OF POINTS

## FIG. 56

DATA FORMAT : dt    *NORMAL DATA / HAZARD CLASSIFICATION ADDITIONAL DATA
REFERENCE TIME : YYYY-MM-DD-hh:mm
TIME INFORMATION t0 : $st_0$ μsec   *DIFFERENCE FROM REFERENCE TIME
TIME INFORMATION t1 : $st_1$ μsec
...
TIME INFORMATION t(N-1) : $st_{N-1}$  μsec
TOTAL NUMBER OF POINTS : NumOfPoint   *NUMBER OF POINTS IN FRAME
POINT P0 : (x0,y0,z0,t0,c0)  *POSITIONAL INFORMATION + TIME ID + HAZARD CLASSIFICATION ID : 0,1,2
POINT P1 : (x1,y1,z1,t0,c0)
POINT P2 : (x2,y2,z2,t1,c2)
...
POINT Pn : (xn,yn,zn,tm,c1)
...

## FIG. 57

| DATA FORMAT 1 byte | HAZARD CLASSIFICATION 1 byte | NUMBER OF POINTS 1 byte | TIME 5 byte | POSITION 3 byte | ... | TIME 5 byte | POSITION 3 byte | HAZARD CLASSIFICATION 1 byte | NUMBER OF POINTS 1 byte | TIME 5 byte | ... | POSITION 3 byte |

DATA SETS FOR NUMBER OF POINTS OF SAME CLASSIFICATION

DATA SETS FOR NUMBER OF CLASSIFICATIONS

# FIG. 58

DATA FORMAT : dt        *NORMAL DATA / HAZARD CLASSIFICATION ADDITIONAL DATA
REFERENCE TIME : YYYY-MM-DD-hh:mm
TIME INFORMATION t0 : $st_0$ μsec
TIME INFORMATION t1 : $st_1$ μsec
. . .
TIME INFORMATION t(N-1) : $st_{N-1}$ μsec
VELOCITY CLASSIFICATION : c1
NUMBER OF POINTS : n1
POINT Pc10 : (x10,y10,z10,t0)
POINT Pc11 : (x11,y11,z11,t0)
POINT Pc12 : (x12,y12,z12,t1)
. . .
POINT Pc1n1 : (x1n1,y1n1,z1n1,tm)
VELOCITY CLASSIFICATION : c2
NUMBER OF POINTS : n2
POINT Pc20 : (x20,y20,z20,tm)
. . .

# FIG. 59

# FIG. 60

# FIG. 61

START

SELECT SENSOR — S40010

S40020

IS THERE
NECESSARY PIECES OF
SPECTRUM DATA?

yes

no

S40030 — INSTRUCTION TO HOLD OBJECT

S40040 — DETERMINE DISTANCE / HOLD OBJECT

S40050 — ACQUIRE DISTANCE

S40060 — INSTRUCTION TO MEASURE /
REQUEST FOR OUTPUT
OF SPECTRAL PEAK

S40070 — MEASURE /
ACQUIRE SPECTRAL PEAK

S40080

DETERMINE PARAMETERS
FOR CALCULATING DISTANCE
FROM FREQUENCY

TRANSMIT PARAMETERS
FOR CALCULATING DISTANCE
FROM FREQUENCY — S40090

END

# FIG. 62

FIXED VALUE

| DATA TYPE<br>1 byte |
| --- |

DATA

| TIME<br>5 byte | SENSOR NO.<br>1 byte | FREQUENCY<br>2 byte | FREQUENCY<br>2 byte |
| --- | --- | --- | --- |

FREQUENCY OF SPECTRAL PEAK IN UP-CHIRP AND DOWN-CHIRP

# FIG. 63

START

SELECT SENSOR — S40010

INSTRUCTION TO HOLD OBJECT — S40030

DETERMINE DISTANCE / HOLD OBJECT — S40040

ACQUIRE DISTANCE — S40050

INSTRUCTION TO MEASURE / REQUEST FOR OUTPUT OF POWER SPECTRUM — S41060

MEASURE / ACQUIRE POWER SPECTRUM — S41070

DETERMINE SPECTRAL PEAK EXTRACTION THRESHOLD — S41080

TRANSMIT SPECTRAL PEAK EXTRACTION THRESHOLD — S41090

END

# FIG. 64

START

SELECT SENSOR — S40010

INSTRUCTION TO HOLD OBJECT — S40030

DETERMINE DISTANCE/HOLD OBJECT — S40040

ACQUIRE DISTANCE — S40050

INSTRUCTION TO MEASURE/REQUEST FOR
OUTPUT OF INTERFERENCE LIGHT WAVEFORM — S42060

MEASURE AND ACQUIRE INTERFERENCE LIGHT WAVEFORM — S42070

DETERMINE VALUE FOR CORRECTING SAMPLING INTERVAL — S42080

TRANSMIT VALUE FOR CORRECTING SAMPLING INTERVAL — S42090

END

# FIG. 65

| | NUMBER OF SENSORS 1 byte | DATA TYPE 1 byte | NUMBER OF DATA POINTS OF INTERFERENCE LIGHT WAVEFORM 1 byte | SAMPLING FREQUENCY 2 byte | ENVIRONMENT INFORMATION 1 byte |
|---|---|---|---|---|---|
| FIXED VALUE | | | | | |

| | TIME 5 byte | SENSOR NO. 2 byte | SIGNAL VALUE 1 byte | SIGNAL VALUE 1 byte | ... | SIGNAL VALUE 1 byte | SIGNAL VALUE 1 byte | ... | SIGNAL VALUE 1 byte |
|---|---|---|---|---|---|---|---|---|---|
| DATA FOR EACH SENSOR | | | | | | | | | |

NUMBER OF DATA POINTS OF
INTERFERENCE LIGHT WAVEFORM
(UP-CHIRP)

NUMBER OF DATA POINTS OF
INTERFERENCE LIGHT WAVEFORM
(DOWN-CHIRP)

## INTERNATIONAL SEARCH REPORT

| International application No. |
|---|
| **PCT/JP2022/031064** |

**A.    CLASSIFICATION OF SUBJECT MATTER**

*G01S 17/34*(2020.01)i; *G01S 17/931*(2020.01)i
FI:    G01S17/34; G01S17/931

According to International Patent Classification (IPC) or to both national classification and IPC

**B.    FIELDS SEARCHED**

Minimum documentation searched (classification system followed by classification symbols)

G01S7/00-17/95; G08G1/00-99/00; G01C3/06-3/08; G01B9/00-11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-515241 A (BLACKMORE SENSORS & ANALYTICS, LLC) 17 June 2021 (2021-06-17)<br>    paragraphs [0083]-[0108], [0183]-[0186], fig. 1D-2C, 9A-9C | 1-26 |
| Y | JP 2017-181269 A (TOYOTA CENTRAL R&D LABS., INC.) 05 October 2017 (2017-10-05)<br>    paragraphs [0018]-[0079], fig. 1-14 | 1-26 |
| Y | WO 2019/106704 A1 (HONDA MOTOR CO., LTD.) 06 June 2019 (2019-06-06)<br>    paragraph [0044] | 1-26 |
| Y | JP 2019-215275 A (DENSO TEN LTD.) 19 December 2019 (2019-12-19)<br>    paragraphs [0009]-[0021], [0069]-[0118], fig. 1A-1C, 6-10 | 9, 16-17 |
| A | JP 2001-041706 A (MITSUBISHI HEAVY INDUSTRIES, LTD.) 16 February 2001 (2001-02-16)<br>    paragraphs [0001]-[0008], fig. 13-15 | 1-26 |
| A | JP 2018-512600 A (STROBE, INC.) 17 May 2018 (2018-05-17)<br>    paragraphs [0051]-[0064], fig. 10, 11 | 1-26 |

|☑| Further documents are listed in the continuation of Box C. | ☑ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2022** | **27 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/031064**

### C. DOCUMENTS CONSIDERED TO BE RELEVANT

| Category* | Citation of document, with indication, where appropriate, of the relevant passages | Relevant to claim No. |
|---|---|---|
| A | JP 05-223930 A (FUJITSU TEN LTD.) 03 September 1993 (1993-09-03) column "abstract", fig. 1 | 1-26 |
| A | WO 2019/009344 A1 (NEC CORP.) 10 January 2019 (2019-01-10) paragraph [0055] | 1-26 |
| A | JP 2019-215281 A (DENSO TEN LTD.) 19 December 2019 (2019-12-19) paragraphs [0067]-[0069] | 1-26 |
| A | US 2020/0386883 A1 (VEONEER SWEDEN AB) 10 December 2020 (2020-12-10) column "abstract", fig. 1 | 1-26 |

Form PCT/ISA/210 (second sheet) (January 2015)

**INTERNATIONAL SEARCH REPORT**
Information on patent family members

| International application No. |
|---|
| **PCT/JP2022/031064** |

| Patent document cited in search report | | | Publication date (day/month/year) | Patent family member(s) | | | Publication date (day/month/year) |
|---|---|---|---|---|---|---|---|
| JP | 2021-515241 | A | 17 June 2021 | JP | 2022-58483 | A | |
| | | | | US | 2020/0132850 | A1 | |
| | | | | paragraphs [0069]-[0089], [0143], fig. 1D-2C, 9A-9C | | | |
| | | | | US | 2021/0278544 | A1 | |
| | | | | WO | 2019/209727 | A1 | |
| | | | | CN | 112154347 | A | |
| | | | | KR | 10-2021-0003846 | A | |
| | | | | KR | 10-2021-0080634 | A | |
| JP | 2017-181269 | A | 05 October 2017 | (Family: none) | | | |
| WO | 2019/106704 | A1 | 06 June 2019 | US | 2020/0283024 | A1 | |
| | | | | paragraph [0056] | | | |
| | | | | CN | 111373456 | A | |
| JP | 2019-215275 | A | 19 December 2019 | US | 2019/0383931 | A1 | |
| | | | | paragraphs [0035]-[0051], [0099]-[0150], fig. 1A-1C, 6-10 | | | |
| JP | 2001-041706 | A | 16 February 2001 | (Family: none) | | | |
| JP | 2018-512600 | A | 17 May 2018 | WO | 2016/164435 | A1 | |
| | | | | paragraphs [0060]-[0073], fig. 10, 11 | | | |
| | | | | US | 2019/0094366 | A1 | |
| | | | | US | 2016/0299228 | A1 | |
| | | | | CN | 107567592 | A | |
| JP | 05-223930 | A | 03 September 1993 | (Family: none) | | | |
| WO | 2019/009344 | A1 | 10 January 2019 | US | 2021/0149034 | A1 | |
| | | | | paragraph [0091] | | | |
| JP | 2019-215281 | A | 19 December 2019 | (Family: none) | | | |
| US | 2020/0386883 | A1 | 10 December 2020 | WO | 2019/115179 | A1 | |
| | | | | EP | 3499265 | A1 | |
| | | | | CN | 111386476 | A | |

Form PCT/ISA/210 (patent family annex) (January 2015)

**REFERENCES CITED IN THE DESCRIPTION**

**Patent documents cited in the description**

- JP 2019135446 A
- JP 2011027457 A
- WO 2019230720 A